(19) Europäisches Patentamt / European Patent Office / Office européen des brevets

(11) **EP 4 255 025 A1**

(12) **EUROPEAN PATENT APPLICATION**
published in accordance with Art. 153(4) EPC

(43) Date of publication:
04.10.2023 Bulletin 2023/40

(21) Application number: 21897849.2

(22) Date of filing: 18.11.2021

(51) International Patent Classification (IPC):
H04W 36/30 (2009.01)   H04W 36/38 (2009.01)
H04W 92/18 (2009.01)   H04W 88/04 (2009.01)

(52) Cooperative Patent Classification (CPC):
H04W 36/30; H04W 36/38; H04W 88/04;
H04W 92/18

(86) International application number:
PCT/JP2021/042431

(87) International publication number:
WO 2022/113875 (02.06.2022 Gazette 2022/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.11.2020 JP 2020194712

(71) Applicant: MITSUBISHI ELECTRIC
CORPORATION
Chiyoda-ku
Tokyo 100-8310 (JP)

(72) Inventors:
• MOCHIZUKI, Mitsuru
  Tokyo 100-8310 (JP)
• SHIMODA, Tadahiro
  Tokyo 100-8310 (JP)

(74) Representative: Meissner Bolte Partnerschaft
mbB
Patentanwälte Rechtsanwälte
Postfach 86 06 24
81633 München (DE)

(54) **COMMUNICATION SYSTEM AND COMMUNICATION TERMINAL**

(57)    A communication system includes base stations and a communication terminal that supports terminal-to-terminal communication. Once the communication terminal connected to a base station enters a state in which terminal-to-terminal communication with another communication terminal is available, the other communication terminal being served by another base station different from the base station connected, the communication terminal notifies the base station connected of connection state information indicating that the communication terminal has entered the state. The base station having received notification of the connection state information determines, based on the connection state information, whether to change a connection destination of the communication terminal having notified the base station of the connection state information, to the other base station via a relay communication terminal, the relay communication terminal being served by the other base station, the relay communication terminal being the other communication terminal, and requests the communication terminal to release connection with the base station in response to determining to change the connection destination of the communication terminal having notified the base station of the connection state information. In response to being requested by the base station connected to release the connection with the base station, after notifying the base station of the connection state information, the communication terminal releases the connection with the base station, and connects to the other base station via the other communication terminal.

**(Cont. next page)**

EP 4 255 025 A1

# FIG.14

gNB#1   Relay UE   Remote UE   gNB#2

ST1401
RRC_Idle

ST1402
RRC CONNECTION

SL measurement configuration

ST1404   ST1403

SL MEASUREMENT

SL measurement report

ST1405

ST1406
RRC RELEASE
DETERMINATION

RRC connection release

ST1408   ST1407

Uu RRC CONNECTION
RELEASE PROCESS

ST1409
Discovery PROCESS

ST1410
PC5-S LINK ESTABLISHMENT

ST1411
PC5-RRC CONNECTION

RRC setup request
ST1412

RRC setup
ST1413

RRC setup complete
ST1414

ST1415
RRC CONNECTION

RRC STATE CHANGE NOTIFICATION
ST1416

RRC setup request
ST1417

RRC setup
ST1418

RRC setup complete
ST1419

ST1420
RRC CONNECTION

2

**Description**

Field

The present disclosure relates to wireless communication technology.

Background

In the 3rd Generation Partnership Project (3GPP), which is an association for standardizing mobile communication systems, a communication scheme called Long Term Evolution (LTE) has been developed for wireless sections, and a communication scheme called System Architecture Evolution (SAE) has been developed for overall system configurations including core networks and wireless access networks (hereinafter may be collectively referred to as networks) (for example, see Non Patent Literatures 1 to 5). This type of communication scheme is also called 3.9 Generation (3.9G) systems.

As LTE access schemes, Orthogonal Frequency Division Multiplexing (OFDM) is used for downlink, and Single Carrier Frequency Division Multiple Access (SC-FDMA) is used for uplink. Unlike Wideband Code Division Multiple Access (W-CDMA), LTE does not include circuit switching, but supports only packet communication.

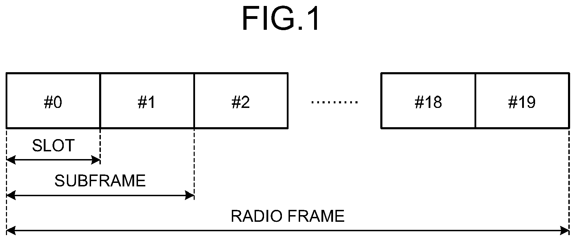

The 3GPP agreements regarding frame configurations for LTE systems described in Non Patent Literature 1 (Chapter 5) will be described with reference to FIG. 1. FIG. 1 is an explanatory diagram illustrating a configuration of a radio frame for use in an LTE-based communication system. In FIG. 1, one radio frame is 10 ms long. A radio frame is divided into 10 equally sized subframes. A subframe is divided into two equally sized slots. Downlink synchronization signals are included in the first and sixth subframes of each radio frame. The synchronization signals are classified as primary synchronization signals (P-SS) and secondary synchronization signals (S-SS).

The 3GPP agreements regarding channel configurations for LTE systems are described in Non Patent Literature 1 (Chapter 5). A closed subscriber group (CSG) cell is assumed to use the same channel configuration as a non-CSG cell.

Physical Broadcast Channel (PBCH) is a channel for downlink transmission from base station devices (hereinafter may be simply referred to as "base stations") to communication terminal devices (hereinafter may be simply referred to as "communication terminals") such as mobile terminal devices (hereinafter may be simply referred to as "mobile terminals"). BCH transport blocks are mapped to four subframes within a 40 ms interval. There is no explicit signaling for 40 ms timing.

Physical Control Format Indicator Channel (PCFICH) is a channel for downlink transmission from base stations to communication terminals. The PCFICH provides the number of orthogonal frequency division multiplexing (OFDM) symbols for use in PDCCHs from base stations to communication terminals. The PCFICH is transmitted in every subframe.

Physical Downlink Control Channel (PDCCH) is a channel for downlink transmission from base stations to communication terminals. The PDCCH provides resource allocation information of Downlink Shared Channel (DL-SCH), which is one of the transport channels to be described later, resource allocation information of Paging Channel (PCH), which is one of the transport channels to be described later, and hybrid automatic repeat request (HARQ) information related to the DL-SCH. The PDCCH carries an uplink scheduling grant. The PDCCH carries acknowledgement (Ack)/negative acknowledgement (Nack) as a response signal to uplink transmission. The PDCCH is also called a L1/L2 control signal.

Physical Downlink Shared Channel (PDSCH) is a channel for downlink transmission from base stations to communication terminals. Downlink shared channel (DL-SCH) and PCH, which are transport channels, are mapped to the PDSCH.

Physical Multicast Channel (PMCH) is a channel for downlink transmission from base stations to communication terminals. Multicast Channel (MCH), which is a transport channel, is mapped to the PMCH.

Physical Uplink Control Channel (PUCCH) is a channel for uplink transmission from communication terminals to base stations. The PUCCH carries Ack/Nack as a response signal to downlink transmission. The PUCCH carries channel state information (CSI). The CSI includes rank indicator (RI), precoding matrix indicator (PMI), and channel quality indicator (CQI) report. The RI is rank information of a MIMO channel matrix. The PMI is information of a precoding weight matrix for use in MIMO. The CQI is quality information indicating the quality of received data or channel quality. The PUCCH also carries a scheduling request (SR).

Physical Uplink Shared Channel (PUSCH) is a channel for uplink transmission from communication terminals to base stations. To the PUSCH, Uplink Shared Channel (UL-SCH) is mapped as one of the transport channels.

Physical Hybrid ARQ (HARQ) Indicator Channel (PHICH) is a channel for downlink transmission from base stations to communication terminals. The PHICH carries Ack/Nack as a response signal to uplink transmission. Physical Random Access Channel (PRACH) is a channel for uplink transmission from communication terminals to base stations. The PRACH carries a random access preamble.

Downlink reference signals (RS) are known as symbols for LTE-based communication systems. The following five types of downlink reference signals are defined: Cell-specific reference signals (CRS), MBSFN reference signals, demodulation reference signals (DM-RS) as UE-specific reference signals, positioning reference signals (PRS), and channel state information reference signals (CSI-RS). Reference signal received power (RSRP) measurement is a measure of the physical layer of communication terminals.

Similarly, uplink reference signals are known as symbols for LTE-based communication systems. The following two types of uplink reference signals are defined: Demodulation reference signals (DM-RS) and sounding reference signals (SRS).

The transport channels described in Non Patent Literature 1 (Chapter 5) will be described. Among the downlink transport channels, Broadcast Channel (BCH) is broadcast to the entire coverage of the base station (cell). The BCH is mapped to Physical Broadcast Channel (PBCH).

Retransmission control by Hybrid ARQ (HARQ) is applied to Downlink Shared Channel (DL-SCH). The DL-SCH can be broadcast to the entire coverage of the base station (cell). The DL-SCH supports dynamic or semi-static resource allocation. Semi-static resource allocation is also called persistent scheduling. The DL-SCH supports discontinuous reception (DRX) at communication terminals in order to reduce the power consumption of the communication terminals. The DL-SCH is mapped to the physical downlink shared channel (PDSCH).

Paging Channel (PCH) supports DRX at communication terminals so that the power consumption of the communication terminals can be reduced. The PCH is required to be broadcast to the entire coverage of the base station (cell). The PCH is mapped to physical resources such as the physical downlink shared channel (PDSCH) dynamically available for traffic.

Multicast Channel (MCH) is used for broadcast to the entire coverage of the base station (cell). The MCH supports the SFN combining of multimedia broadcast multicast service (MBMS) services (MTCH and MCCH) in multicell transmission. The MCH supports semi-static resource allocation. The MCH is mapped to the PMCH.

Retransmission control by Hybrid ARQ (HARQ) is applied to Uplink Shared Channel (UL-SCH) among the uplink transport channels. The UL-SCH supports dynamic or semi-static resource allocation. The UL-SCH is mapped to Physical Uplink Shared Channel (PUSCH).

Random Access Channel (RACH) is limited to control information. The RACH has a risk of collision. The RACH is mapped to Physical Random Access Channel (PRACH).

HARQ will be described. HARQ is a technology for improving the communication quality of transmission paths by combining automatic repeat request (ARQ) and forward error correction. HARQ is advantageous for transmission paths with changing communication quality because error correction effectively functions through retransmission. In particular, further improvement in quality can be obtained through retransmission by combining the reception result of the first transmission and the reception result of the retransmission.

An example of a retransmission method will be described. If the reception side cannot correctly decode the received data, in other words, if a cyclic redundancy check (CRC) error occurs (CRC=NG), then "Nack" is transmitted from the reception side to the transmission side. Upon receiving "Nack", the transmission side retransmits the data. If the reception side can correctly decode the received data, in other words, if no CRC error occurs (CRC=OK), then "Ack" is transmitted from the reception side to the transmission side. Upon receiving "Ack", the transmission side transmits the next data.

The logical channels described in Non Patent Literature 1 (Chapter 6) will be described. Broadcast Control Channel (BCCH) is a downlink channel for broadcast system control information. The BCCH, which is a logical channel, is mapped to a transport channel: broadcast channel (BCH) or downlink shared channel (DL-SCH).

Paging Control Channel (PCCH) is a downlink channel for transmitting a change in paging information and system information. The PCCH is used when the network does not know the cell location of a communication terminal. The PCCH, which is a logical channel, is mapped to Paging Channel (PCH), which is a transport channel.

Common Control Channel (CCCH) is a channel for transmission control information between communication terminals and base stations. The CCCH is used when a communication terminal does not have an RRC connection with the network. In downlink, the CCCH is mapped to the downlink shared channel (DL-SCH), which is a transport channel. In the uplink direction, the CCCH is mapped to the uplink shared channel (UL-SCH), which is a transport channel.

Multicast Control Channel (MCCH) is a downlink channel for one-to-many transmission. The MCCH is used for transmission of MBMS control information for one or several MTCHs from the network to communication terminals. The MCCH is used only for communication terminals that are receiving MBMS. The MCCH is mapped to the multicast channel (MCH), which is a transport channel.

Dedicated Control Channel (DCCH) is a channel for transmitting dedicated control information between communication terminals and the network on a one-to-one basis. The DCCH is used when the communication terminal is in an RRC connection. The DCCH is mapped to the uplink shared channel (UL-SCH) in uplink, and is mapped to the downlink shared channel (DL-SCH) in downlink.

Dedicated Traffic Channel (DTCH) is a channel for one-to-one communication with individual communication terminals for transmitting user information. The DTCH exists in both uplink and downlink. The DTCH is mapped to the uplink shared channel (UL-SCH) in uplink, and is mapped to the downlink shared channel (DL-SCH) in downlink.

Multicast Traffic Channel (MTCH) is a downlink channel for traffic data transmission from the network to communication terminals. The MTCH is a channel used only for communication terminals that are receiving MBMS. The MTCH is mapped to the multicast channel (MCH).

CGI stands for Cell Global Identifier. ECGI stands for E-UTRAN Cell Global Identifier. In LTE, Long Term Evolution-Advanced (LTE-A) described later, and the Universal Mobile Telecommunication System (UMTS), closed subscriber group (CSG) cells are introduced.

The position tracking of a communication terminal is performed in units of segments each consisting of one or more cells. The position tracking is performed to track the position of the communication terminal even in the idle state and call the communication terminal, in other words, enable the communication terminal to receive a call. Segments for the position tracking of the communication terminal are referred to as tracking areas.

3GPP has formulated standards for Long Term Evolution-Advanced (LTE-A) as Release 10 (see Non Patent Literature 3 and Non Patent Literature 4). LTE-A is based on the wireless section communication scheme of LTE, and additionally includes several new technologies.

LTE-A systems employ Carrier Aggregation (CA), in which two or more Component Carriers (CCs) are aggregated in order to support wider transmission bandwidths up to 100 MHz. CA is described in Non Patent Literature 1.

When CA is configured, a communication terminal, or a UE, has only one RRC connection with a network (NW). In the RRC connection, one serving cell provides NAS mobility information and security input. This cell is referred to as a Primary Cell (PCell). In the downlink, the carrier corresponding to the PCell is a Downlink Primary Component Carrier (DL PCC). In the uplink, the carrier corresponding to the PCell is an Uplink Primary Component Carrier (UL PCC).

Depending on UE capabilities, a Secondary Cell (SCell) can be configured to form a set of serving cells together with the PCell. In the downlink, the carrier corresponding to the SCell is a Downlink Secondary Component Carrier (DL SCC). In the uplink, the carrier corresponding to the SCell is an Uplink Secondary Component Carrier (UL SCC).

A set of serving cells consisting of one PCell and one or more SCells is configured for one UE.

Other new technologies of LTE-A include technology for supporting wider bands (Wider bandwidth extension), Coordinated Multiple Point transmission and reception (CoMP) technology, and the like. CoMP has been developed for LTE-A in 3GPP, and is described in Non Patent Literature 1.

In addition, 3GPP has developed the use of small eNBs (hereinafter may be referred to as "small base station devices") constituting small cells in order to cope with enormous future traffic. For example, technology for enhancing the efficiency of frequency utilization and increasing the communication capacity by installing a large number of small eNBs and configuring a large number of small cells has been developed. A specific example of this technology is Dual Connectivity (abbreviated as DC), in which a UE is connected to and communicates with two eNBs. DC is described in Non Patent Literature 1.

One of the eNBs involved in dual connectivity (DC) may be referred to as a "master eNB (abbreviated as MeNB)", and the other may be referred to as a "secondary eNB (abbreviated as SeNB)".

There is an increasing trend in the traffic volume of mobile networks, and communication speed is also increasing. Further increase in communication speed is expected after the start of full-scale operation of LTE and LTE-A.

Furthermore, fifth-generation (hereinafter may be referred to as "5G") wireless access systems have been developed for advanced mobile communication and targeted for service launch in 2020 or later. For example, in Europe, requirements for 5G have been compiled by an association called METIS (see Non Patent Literature 5).

The requirements for 5G wireless access systems include 1000 times larger system capacity, 100 times higher data transmission rate, 1/10 lower data processing latency, and 100 times more communication terminals simultaneously connected than LTE systems, so as to achieve further reduction in power consumption and reduction in device cost.

In order to satisfy these requirements, 3GPP has devised 5G standards as Release 15 (see Non Patent Literatures 6 to 19). Technology for 5G wireless sections is referred to as "New Radio Access Technology" ("New Radio" is abbreviated as "NR").

NR systems are being developed based on LTE systems and LTE-A systems, but with the following modifications and additions.

As NR access schemes, OFDM is used for downlink, and OFDM and DFT-spread-OFDM (DFT-s-OFDM) are used for uplink.

NR allows for the use of higher frequencies than LTE to improve transmission speed and reduce processing delay.

NR ensures cell coverage by forming a narrow beam-shaped transmission/reception range (beamforming) and changing the beam direction (beamsweeping).

NR frame configurations support various subcarrier spacings, that is, various numerologies. Regardless of NR numerology, one subframe is one millisecond long, and one slot is composed of 14 symbols. In addition, the number of slots included in one subframe is one in the numerology with a subcarrier spacing of 15 kHz, and increases in proportion to subcarrier spacing in other numerologies (see Non Patent Literature 13 (3GPP TS38.211)).

NR downlink synchronization signals are transmitted as a synchronization signal burst (hereinafter may be referred to as an SS burst) from the base station at predetermined intervals for a predetermined duration. The SS burst includes a synchronization signal block (hereinafter may be referred to as an SS block) for each beam of the base station.
The base station transmits the SS block of each beam in different beams within the duration of the SS burst. The SS block includes P-SS, S-SS, and PBCH.
NR additionally uses phase tracking reference signals (PTRS) as NR downlink reference signals, so as to reduce the influence of phase noise. As with downlink, uplink reference signals also include PTRS.
NR adds slot format indication (SFI) to the information included in the PDCCH in order to flexibly switch between DL and UL in a slot.
In addition, NR reduces the power consumption of a UE by allowing a base station to set a part of the carrier frequency band (hereinafter may be referred to as a bandwidth part (BWP)) in advance for the UE so that the UE can perform transmission and reception with the base station using the BWP.
3GPP has developed various forms of DC: DC by an LTE base station and an NR base station connected to an EPC, DC by NR base stations connected to a 5G core system, and DC by an LTE base station and an NR base station connected to a 5G core system (see Non Patent Literatures 12, 16, and 19).
In addition, 3GPP has developed a framework for supporting services (or applications) using sidelink (SL) communication (also referred to as PC5 communication) in both the Evolved Packet System (EPS) to be described later and the 5G core system (see Non Patent Literatures 1, 16, 20, 21, 22, and 23). Examples of services using SL communication include vehicle-to-everything (V2X) services and proximity-based services.
3GPP has also developed several new technologies. Examples thereof include positioning technology (see Non Patent Literatures 24 to 27) and Integrated Access and Backhaul (IAB) (see Non Patent Literatures 16, 28, and 29).
As an example of positioning technology, a positioning method using a round-trip delay time between a UE and a plurality of base stations (Multi-Round Trip Time: Multi-RTT) has been developed (see Non Patent Literature 24).
Examples of IAB developed include multiplexing and latency reduction in radio resources of access links, i.e. links between UE and base stations, and of backhaul links, i.e. links between base stations (see Non Patent Literatures 16, 28, and 29).

Citation List

Non Patent Literature

Non Patent Literature 1: 3GPP TS 36.300 V16.2.0
Non Patent Literature 2: 3GPP S1-083461
Non Patent Literature 3: 3GPP TR 36.814 V9.2.0
Non Patent Literature 4: 3GPP TR 36.912 V16.0.0
Non Patent Literature 5: "Scenarios, requirements and KPIs for 5G mobile and wireless system", ICT-317669-METIS/D1.1
Non Patent Literature 6: 3GPP TR 23.799 V14.0.0
Non Patent Literature 7: 3GPP TR 38.801 V14.0.0
Non Patent Literature 8: 3GPP TR 38.802 V14.2.0
Non Patent Literature 9: 3GPP TR 38.804 V14.0.0
Non Patent Literature 10: 3GPP TR 38.912 V16.0.0
Non Patent Literature 11: 3GPP RP-172115
Non Patent Literature 12: 3GPP TS 37.340 V16.2.0
Non Patent Literature 13: 3GPP TS 38.211 V16.2.0
Non Patent Literature 14: 3GPP TS 38.213 V16.2.0
Non Patent Literature 15: 3GPP TS 38.214 V16.2.0
Non Patent Literature 16: 3GPP TS 38.300 V16.2.0
Non Patent Literature 17: 3GPP TS 38.321 V16.1.0
Non Patent Literature 18: 3GPP TS 38.212 V16.2.0
Non Patent Literature 19: 3GPP TS 38.331 V16.1.0
Non Patent Literature 20: 3GPP TR 23.703 V12.0.0
Non Patent Literature 21: 3GPP TS 23.501 V16.5.0
Non Patent Literature 22: 3GPP TS 23.287 V16.3.0
Non Patent Literature 23: 3GPP TS 23.303 V16.0.0
Non Patent Literature 24: 3GPP TS 38.305 V16.0.0

Non Patent Literature 25: 3GPP RP-200928
Non Patent Literature 26: 3GPP TS 37.355 V16.0.0
Non Patent Literature 27: 3GPP R1-2004492
Non Patent Literature 28: 3GPP RP-201293
Non Patent Literature 29: 3GPP TS 38.401 V16.0.0
Non Patent Literature 30: 3GPP TS 23.263 V16.4.0
Non Patent Literature 31: 3GPP TS 23.003 V16.4.0
Non Patent Literature 32: 3GPP TS 38.304 V16.2.0

Summary

Technical Problem

Both EPS and 5G core systems are designed to support various services using SL communication (also referred to as PC5 communication) (see Non Patent Literatures 1, 16, 20, 21, 22, and 23). In SL communication, communication is performed between terminals. Proposed types of SL communication include not only direct communication between terminals but also communication between a UE and a NW via a relay (see Non Patent Literatures 20 and 23). It matters to a system that supports such relay-involved communication how to improve the communication quality between terminals and the NW.

In view of the above problem, an object of the present disclosure is to improve communication quality in a communication system using terminal-to-terminal communication.

Solution to Problem

In order to solve the above problems and achieve the object, a communication system according to the present disclosure comprising: base stations; and a communication terminal to support terminal-to-terminal communication in which communication terminals directly communicate with each other. Once the communication terminal connected to a base station enters a state in which terminal-to-terminal communication with another communication terminal is available, the other communication terminal being served by another base station different from the base station connected, the communication terminal notifies the base station connected, of connection state information indicating that the communication terminal has entered the state. The base station having received notification of the connection state information determines, on the basis of the connection state information, whether to change a connection destination of the communication terminal having notified the base station of the connection state information, to the other base station via a relay communication terminal, the relay communication terminal being served by the other base station, the relay communication station being the other communication terminal, and requests the communication terminal to release connection with the base station in response to determining to change the connection destination of the communication terminal having notified the base station of the connection state information. In response to being requested by the base station connected to release the connection with the base station after notifying the base station of the connection state information, the communication terminal releases the connection with the base station, and connects to the other base station via the other communication terminal.

Advantageous Effects of Invention

According to the present disclosure, it is possible to improve communication quality in a communication system using terminal-to-terminal communication.

Objects, features, aspects, and advantages of the present disclosure will become more apparent from the following detailed description and the accompanying drawings.

Brief Description of Drawings

FIG. 1 is an explanatory diagram illustrating a configuration of a radio frame for use in an LTE-based communication system.

FIG. 2 is a block diagram illustrating an overall configuration of an LTE-based communication system 200 discussed in 3GPP.

FIG. 3 is a block diagram illustrating an overall configuration of an NR-based communication system 210 discussed in 3GPP.

FIG. 4 is a diagram illustrating a DC configuration with an eNB and a gNB connected to an EPC.

FIG. 5 is a diagram illustrating a DC configuration with gNBs connected to an NG core.

FIG. 6 is a diagram illustrating a DC configuration with an eNB and a gNB connected to an NG core.

FIG. 7 is a diagram illustrating a DC configuration with an eNB and a gNB connected to an NG core.

FIG. 8 is a block diagram illustrating a configuration of a mobile terminal 202 illustrated in FIG. 2.

FIG. 9 is a block diagram illustrating a configuration of a base station 203 illustrated in FIG. 2.

FIG. 10 is a block diagram illustrating a configuration of an MME.

FIG. 11 is a block diagram illustrating a configuration of a 5GC unit.

FIG. 12 is a flowchart schematically illustrating the procedure from a cell search to an idle operation performed by a communication terminal (UE) in an LTE-based communication system.

FIG. 13 is a diagram illustrating an exemplary configuration of a cell in an NR system.

FIG. 14 is a sequence diagram illustrating an example of a method for switching the remote UE to RRC_IDLE before the remote UE establishes an RRC connection with a gNB via the relay UE according to a first embodiment.

FIG. 15 is a sequence diagram illustrating another example of a method for switching the remote UE to RRC_IDLE before the remote UE establishes an RRC connection with a gNB via the relay UE according to the first embodiment.

FIG. 16 is a sequence diagram illustrating another example of a method for switching the remote UE to RRC_IDLE before the remote UE establishes an RRC connection with a gNB via the relay UE according to the first embodiment.

FIG. 17 is a sequence diagram illustrating an example of a method for causing the remote UE to perform HO between the gNB to which the remote UE is connected and the gNB to which the relay UE is connected according to a first modification of the first embodiment.

FIG. 18 is a sequence diagram illustrating an example of a method for the remote UE to use system information received from gNB#1 according to a second embodiment.

FIG. 19 is a sequence diagram illustrating an example of a method for a gNB to indicate to the remote UE a gNB from which system information is received according to the second embodiment.

FIG. 20 is a sequence diagram illustrating an example of a method for the remote UE to perform registration in response to a TA change according to a second modification of the second embodiment.

FIG. 21 is a sequence diagram illustrating an example of a method for receiving paging from a gNB belonging to the TA in which the remote UE exists according to a third modification of the second embodiment.

FIG. 22 is a sequence diagram illustrating an example of a method for the remote UE to transmit SR to gNB#1 according to a third embodiment.

FIG. 23 is a sequence diagram illustrating an example of a method for causing the remote UE to perform HO from gNB#1 to gNB#2 according to the first modification of the first embodiment.

Description of Embodiments

First Embodiment.

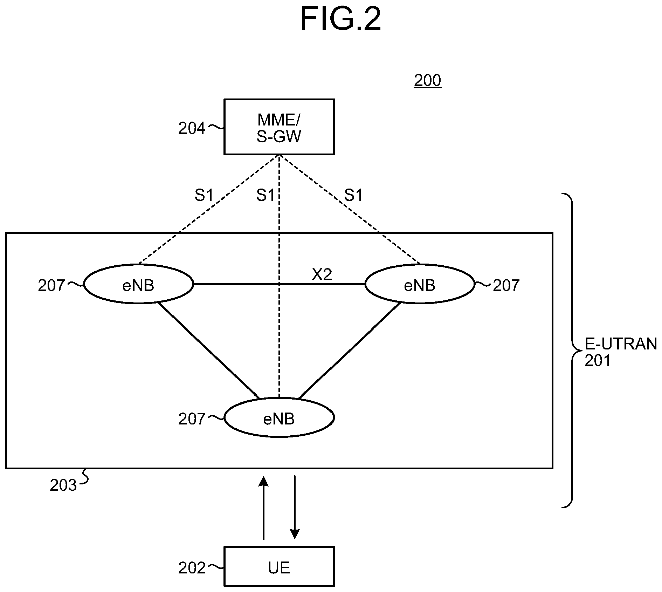

FIG. 2 is a block diagram illustrating an overall configuration of an LTE-based communication system 200 discussed in 3GPP. Below is a description of FIG. 2. The wireless access network is referred to as an Evolved Universal Terrestrial Radio Access Network (E-UTRAN) 201. A mobile terminal device (hereinafter referred to as a "mobile terminal or user equipment (UE)") 202 which is a communication terminal device can wirelessly communicate with a base station device (hereinafter referred to as a "base station or E-UTR_AN NodeB (eNB)") 203, and transmits and receives signals by wireless communication.

Here, "communication terminal devices" include not only mobile terminal devices such as mobile phone terminal devices that can move but also non-moving devices such as sensors. In the following description, a "communication terminal device" may be simply referred to as a "communication terminal".

If the control protocol for the mobile terminal 202, e.g. Radio Resource Control (RRC), and the user plane (hereinafter may be referred to as U-Plane), e.g. Packet Data Convergence Protocol (PDCP), Radio Link Control (RLC), Medium Access Control (MAC), or Physical layer (PHY), terminate at the base station 203, the E-UTR_AN is configured by one or more base stations 203.

The control protocol "Radio Resource Control (RRC)" between the mobile terminal 202 and the base station 203 performs broadcast, paging, RRC connection management, and the like. The states of the base station 203 and the mobile terminal 202 in RRC are classified as RRC_IDLE and RRC_CONNECTED.

In RRC_IDLE, public land mobile network (PLMN) selection, system information (SI) broadcast, paging, cell re-selection, mobility, and the like are performed. In RRC_CONNECTED, the mobile terminal has an RRC connection and can transmit and receive data to and from the network. In RRC_CONNECTED, handover (HO), measurement of a neighbor cell, and the like are performed.

The base station 203 includes one or more eNBs 207. The system including the Evolved Packet Core (EPC) as a core network and the E-UTRAN 201 as a wireless access network is referred to as the Evolved Packet System (EPS). The EPC as a core network and the E-UTRAN 201 as a wireless access network may be collectively referred to as the "network".

The eNB 207 is connected via an S1 interface to an MME/S-GW unit (hereinafter may be referred to as the "MME unit") 204 including a Mobility Management Entity (MME), a Serving Gateway (S-GW), or the MME and the S-GW, and control information is communicated between the eNB 207 and the MME unit 204. A plurality of MME units 204 may be connected to one eNB 207. Different eNBs 207 are connected by an X2 interface, and control information is communicated between the eNBs 207.

The MME unit 204 is a higher-level device, specifically, a higher-level node, and controls the connection between the eNB 207 as a base station and the mobile terminal (UE) 202. The MME unit 204 constitutes the core network, namely the EPC. The base station 203 constitutes the E-UTRAN 201.

The base station 203 may configure one cell or may configure a plurality of cells. Each cell has a predetermined range forming the coverage in which communication with the mobile terminal 202 is possible, and wirelessly communicates with the mobile terminal 202 within the coverage. In a case where one base station 203 configures a plurality of cells, every single cell is configured to be able to communicate with the mobile terminal 202.

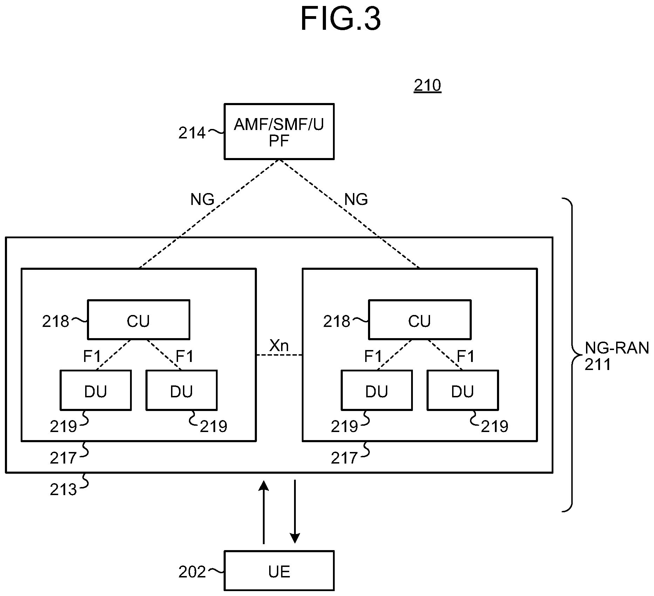

FIG. 3 is a block diagram illustrating an overall configuration of a 5G-based communication system 210 discussed in 3GPP. Below is a description of FIG. 3. The wireless access network is referred to as a Next Generation Radio Access Network (NG-R_AN) 211. The UE 202 can wirelessly communicate with an NR base station device (hereinafter referred to as an "NR base station or NG-RAN NodeB (gNB)") 213, and transmits and receives signals by wireless communication. The core network is referred to as the 5G core (5GC).

If the control protocol for the UE 202, e.g. Radio Resource Control (RRC), and the user plane (hereinafter may be referred to as U-Plane), e.g. Service Data Adaptation Protocol (SDAP), Packet Data Convergence Protocol (PDCP), Radio Link Control (RLC), Medium Access Control (MAC), or Physical layer (PHY), terminate at the NR base station 213, the NG-R_AN is configured by one or more NR base stations 213.

The function of the control protocol "Radio Resource Control (RRC)" between the UE 202 and the NR base station 213 is similar to that in the LTE. The states of the NR base station 213 and the UE 202 in RRC are classified as RRC_IDLE, RRC_CONNECTED, and RRC_INACTIVE.

RRC_IDLE and RRC_CONNECTED are similar to those in the LTE system. In RRC_INACTIVE, the connection between the 5G core and the NR base station 213 is maintained, and meanwhile system information (SI) broadcast, paging, cell re-selection, mobility, and the like are performed.

A gNB 217 is connected via an NG interface to an AMF/SMF/UPF unit (hereinafter may be referred to as the "5GC unit") 214 including an Access and Mobility Management Function (AMF), a Session Management Function (SMF), a User Plane Function (UPF), or the AMF, SMF, and UPF. Control information and/or user data is communicated between the gNB 217 and the 5GC unit 214. The NG interface is a generic term for the N2 interface between the gNB 217 and the AMF, the N3 interface between the gNB 217 and the UPF, the N11 interface between the AMF and the SMF, and the N4 interface between the UPF and the SMF. A plurality of 5GC units 214 may be connected to one gNB 217. Different gNBs 217 are connected by an Xn interface, and control information and/or user data is communicated between the gNBs 217.

The 5GC unit 214 is a higher-level device, specifically, a higher-level node, and distributes paging signals to one or more base stations 203 and/or base stations 213. The 5GC unit 214 also performs mobility control in the idle state. The 5GC unit 214 manages a tracking area list when the mobile terminal 202 is in the idle state, inactive state, and active state. The 5GC unit 214 starts the paging protocol by transmitting a paging message to a cell belonging to a tracking area in which the mobile terminal 202 is registered.

The NR base station 213 may also configure one or more cells similarly to the base station 203. In a case where one NR base station 213 configures a plurality of cells, every single cell is configured to be able to communicate with the UE 202.

The gNB 217 may be divided into a central unit (hereinafter may be referred to as CU) 218 and a distributed unit (hereinafter may be referred to as DU) 219. One CU 218 is configured in the gNB 217. One or more DUs 219 are configured in the gNB 217. The CU 218 is connected to the DU 219 by an F1 interface, and control information and/or user data is communicated between the CU 218 and the DU 219.

In the 5G-based communication system, the Unified Data Management (UDM) function and the Policy Control Function (PCF) described in Non Patent Literature 21 (3GPP TS23.501) may be included. The UDM and/or the PCF may be included in the 5GC unit 214 in FIG. 3.

In the 5G-based communication system, the Location Management Function (LMF) described in Non Patent Literature 24 (3GPP TS38.305) may be provided. The LMF may be connected to the base station via the AMF as disclosed in Non Patent Literature 30 (3GPP TS23.263).

In the 5G-based communication system, the Non-3GPP Interworking Function (N3IWF) described in Non Patent Literature 21 (3GPP TS23.501) may be included. The N3IWF may terminate the Access Network (AN) with the UE in non-3GPP access with the UE.

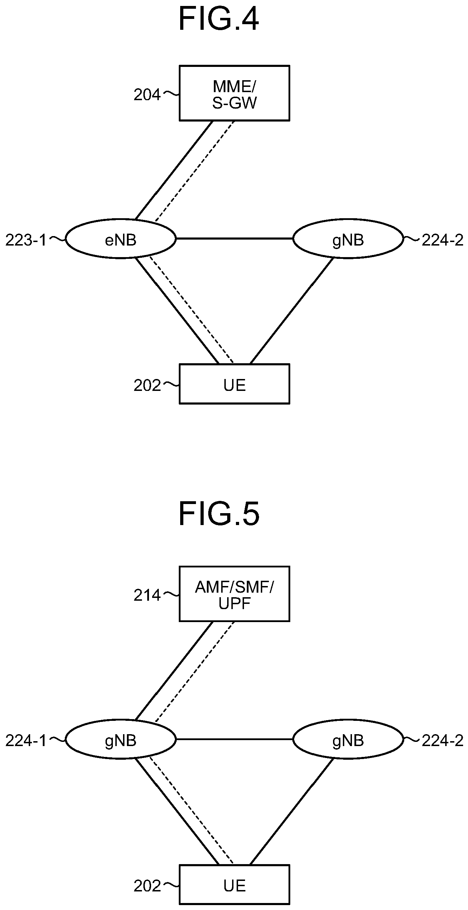

FIG. 4 is a diagram illustrating a DC configuration with an eNB and a gNB connected to an EPC. In FIG. 4, a solid line indicates a U-Plane connection, and a broken line indicates a C-Plane connection. In FIG. 4, the eNB 223-1 serves as a master base station, and the gNB 224-2 serves as a secondary base station (this DC configuration may be referred to as EN-DC). Although FIG. 4 illustrates an example in which the U-Plane connection between the MME unit 204 and the gNB 224-2 is established via the eNB 223-1, the U-Plane connection may be directly established between the MME unit 204 and the gNB 224-2.

FIG. 5 is a diagram illustrating a DC configuration with gNBs connected to an NG core. In FIG. 5, a solid line indicates a U-Plane connection, and a broken line indicates a C-Plane connection. In FIG. 5, the gNB 224-1 serves as a master base station, and the gNB 224-2 serves as a secondary base station (this DC configuration may be referred to as NR-DC). Although FIG. 5 illustrates an example in which the U-Plane connection between the 5GC unit 214 and the gNB 224-2 is established via the gNB 224-1, the U-Plane connection may be directly established between the 5GC unit 214 and the gNB 224-2.

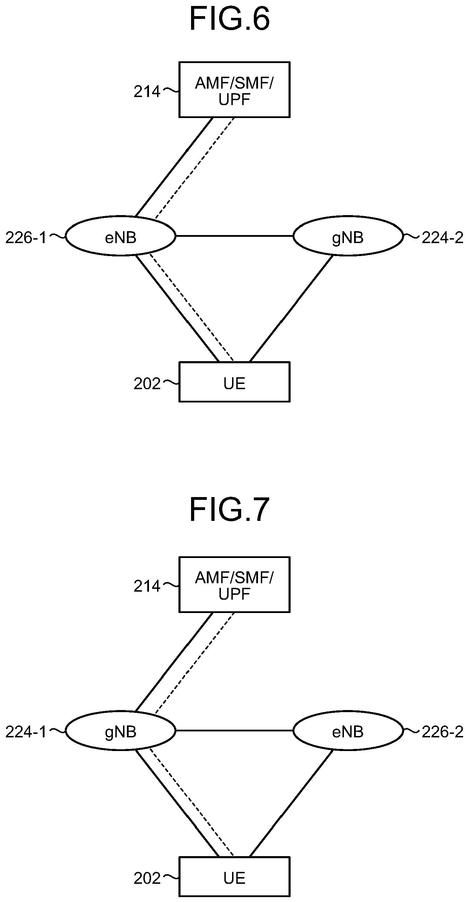

FIG. 6 is a diagram illustrating a DC configuration with an eNB and a gNB connected to an NG core. In FIG. 6, a solid line indicates a U-Plane connection, and a broken line indicates a C-Plane connection. In FIG. 6, the eNB 226-1 serves as a master base station, and the gNB 224-2 serves as a secondary base station (this DC configuration may be referred to as NG-EN-DC). Although FIG. 6 illustrates an example in which the U-Plane connection between the 5GC unit 214 and the gNB 224-2 is established via the eNB 226-1, the U-Plane connection may be directly established between the 5GC unit 214 and the gNB 224-2.

FIG. 7 is a diagram illustrating another DC configuration with an eNB and a gNB connected to an NG core. In FIG. 7, a solid line indicates a U-Plane connection, and a broken line indicates a C-Plane connection. In FIG. 7, the gNB 224-1 serves as a master base station, and the eNB 226-2 serves as a secondary base station (this DC configuration may be referred to as NE-DC). Although FIG. 7 illustrates an example in which the U-Plane connection between the 5GC unit 214 and the eNB 226-2 is established via the gNB 224-1, the U-Plane connection may be directly established between the 5GC unit 214 and the eNB 226-2.

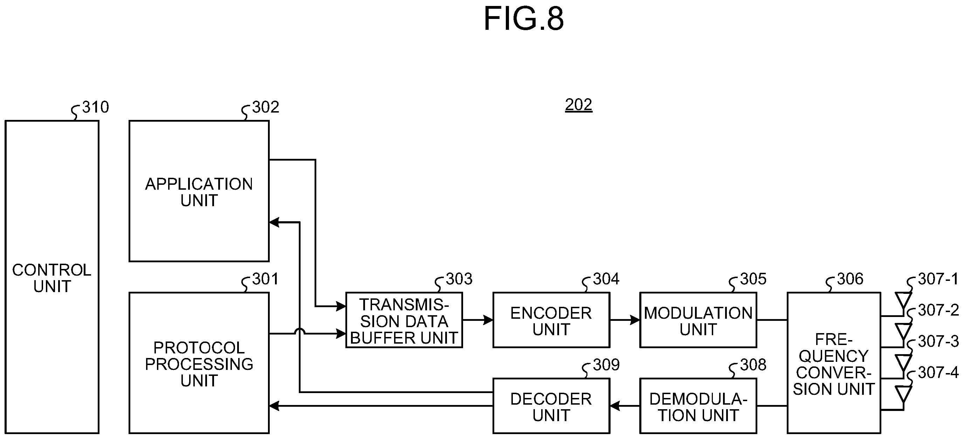

FIG. 8 is a block diagram illustrating a configuration of the mobile terminal 202 illustrated in FIG. 2. A transmission process in the mobile terminal 202 illustrated in FIG. 8 will be described. First, control data from a protocol processing unit 301 and user data from an application unit 302 are saved in a transmission data buffer unit 303. The data saved in the transmission data buffer unit 303 is passed to an encoder unit 304 and subjected to encoding such as error correction. Some data may be directly output from the transmission data buffer unit 303 to a modulation unit 305 without being subjected to encoding. The data encoded by the encoder unit 304 is subjected to modulation in the modulation unit 305. The modulation unit 305 may perform precoding for MIMO. The modulated data is converted into a baseband signal and then output to a frequency conversion unit 306 to be converted into a wireless transmission frequency. Thereafter, the transmission signals are transmitted from antennas 307-1 to 307-4 to the base station 203. FIG. 8 illustrates the case where the number of antennas is four, but the number of antennas is not limited to four.

A reception process in the mobile terminal 202 is executed as follows. Wireless signals from the base station 203 are received by the antennas 307-1 to 307-4. The reception signal is converted from the wireless reception frequency into a baseband signal in the frequency conversion unit 306, and demodulation is performed in a demodulation unit 308. The demodulation unit 308 may perform weight calculation and multiplication. The demodulated data is passed to a decoder unit 309, and decoding such as error correction is performed. Among the decoded data, the control data is passed to the protocol processing unit 301, and the user data is passed to the application unit 302. A series of processes of the mobile terminal 202 is controlled by a control unit 310. Therefore, the control unit 310 is connected to the respective units 301 to 309, which is not illustrated in FIG. 8. The control unit 310 is implemented by, for example, processing circuitry including a processor and a memory. That is, the control unit 310 is implemented by the processor executing a program in which a series of processes of the mobile terminal 202 is described. The program in which a series of processes of the mobile terminal 202 is described is stored in the memory. The memory is exemplified by a nonvolatile or volatile semiconductor memory such as a random access memory (RAM), a read only memory (ROM), or a flash memory. The control unit 310 may be implemented by dedicated processing circuitry such as a field programmable gate array (FPGA), an application specific integrated circuit (ASIC), or a digital signal processor (DSP). In FIG. 8, the number of antennas used for transmission and the number of antennas used for reception by the mobile terminal 202 may be the same or different.

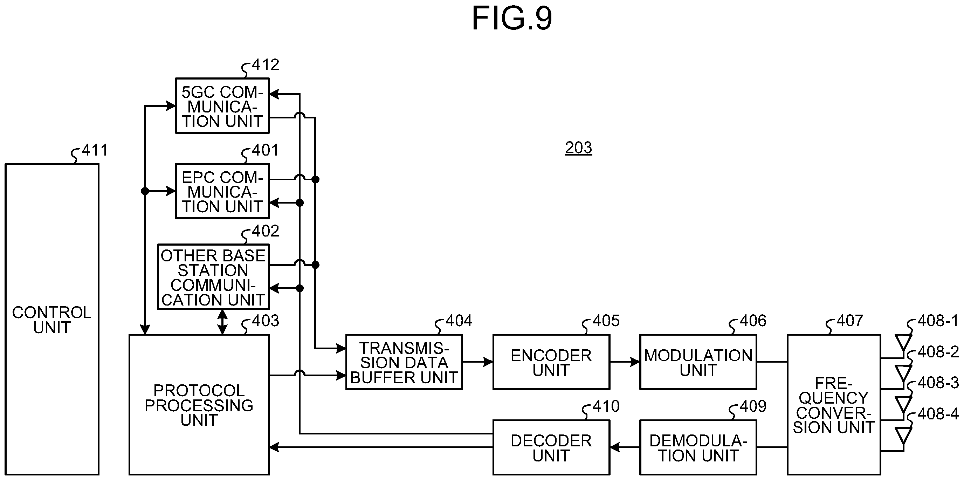

FIG. 9 is a block diagram illustrating a configuration of the base station 203 illustrated in FIG. 2. A transmission process in the base station 203 illustrated in FIG. 9 will be described. An EPC communication unit 401 transmits and receives data between the base station 203 and the EPC (such as the MME unit 204). A 5GC communication unit 412 transmits and receives data between the base station 203 and the 5GC (such as the 5GC unit 214). Another base station communication unit 402 transmits and receives data to and from other base stations. The EPC communication unit 401, the 5GC communication unit 412, and the other base station communication unit 402 each exchange information with a protocol processing unit 403. Control data from the protocol processing unit 403 and user data and control data from the EPC communication unit 401, the 5GC communication unit 412, and the other base station communication unit 402 are saved in a transmission data buffer unit 404.

The data saved in the transmission data buffer unit 404 is passed to an encoder unit 405 and subjected to encoding such as error correction. Some data may be directly output from the transmission data buffer unit 404 to a modulation unit 406 without being subjected to encoding. The encoded data is subjected to modulation in the modulation unit 406. The modulation unit 406 may perform precoding for MIMO. The modulated data is converted into a baseband signal and then output to a frequency conversion unit 407 to be converted into a wireless transmission frequency. Thereafter, the transmission signals are transmitted from antennas 408-1 to 408-4 to one or more mobile terminals 202. FIG. 9 illustrates the case where the number of antennas is four, but the number of antennas is not limited to four.

A reception process in the base station 203 is executed as follows. Wireless signals from one or more mobile terminals 202 are received by the antennas 408. The reception signal is converted from the wireless reception frequency into a baseband signal in the frequency conversion unit 407, and demodulation is performed in a demodulation unit 409. The demodulated data is passed to a decoder unit 410, and decoding such as error correction is performed. Among the decoded data, the control data is passed to the protocol processing unit 403, the 5GC communication unit 412, the EPC communication unit 401, or the other base station communication unit 402, and the user data is passed to the 5GC communication unit 412, the EPC communication unit 401, or the other base station communication unit 402. A series of processes of the base station 203 is controlled by a control unit 411. Therefore, the control unit 411 is connected to the respective units 401 to 410 and 412, which is not illustrated in FIG. 9. Similarly to the control unit 310 of the mobile terminal 202 described above, the control unit 411 is implemented by processing circuitry including a processor and a memory, or by dedicated processing circuitry such as FPGA, ASIC, or DSP. In FIG. 9, the number of antennas used for transmission and the number of antennas used for reception by the base station 203 may be the same or different.

The block diagram of FIG. 9 illustrating the configuration of the base station 203 may also apply to the configuration of the base station 213. In addition, in FIGS. 8 and 9, the number of antennas of the mobile terminal 202 and the number of antennas of the base station 203 may be the same or different.

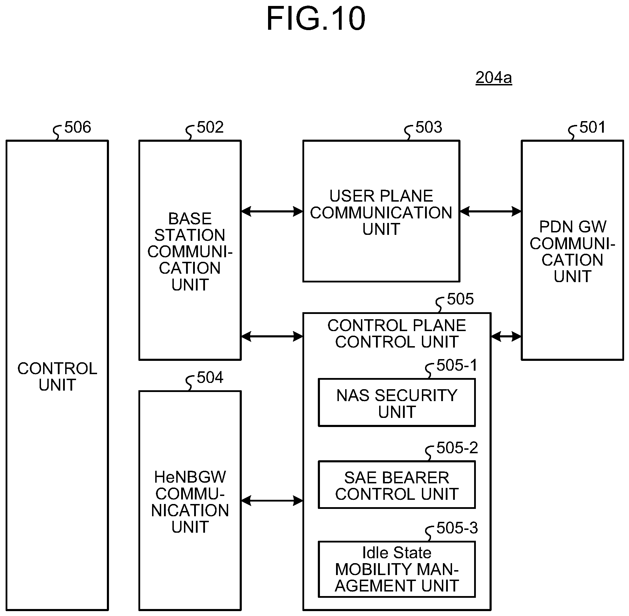

FIG. 10 is a block diagram illustrating a configuration of an MME. FIG. 10 depicts the configuration of the MME 204a included in the MME unit 204 illustrated in FIG. 2 described above. A PDN GW communication unit 501 transmits and receives data between the MME 204a and a Packet Data Network Gateway (PDN GW). A base station communication unit 502 transmits and receives data by means of the S1 interface between the MME 204a and the base station 203. If the data received from the PDN GW is user data, the user data is passed from the PDN GW communication unit 501 to the base station communication unit 502 via a user plane communication unit 503 and transmitted to one or more base stations 203. If the data received from the base station 203 is user data, the user data is passed from the base station communication unit 502 to the PDN GW communication unit 501 via the user plane communication unit 503 and transmitted to the PDN GW.

If the data received from the PDN GW is control data, the control data is passed from the PDN GW communication unit 501 to a control plane control unit 505. If the data received from the base station 203 is control data, the control data is passed from the base station communication unit 502 to the control plane control unit 505.

A HeNBGW communication unit 504 transmits and receives data between the MME 204a and a Home-eNB Gateway (HeNB GW). The control data received by the HeNBGW communication unit 504 from the HeNB GW is passed to the control plane control unit 505. The HeNBGW communication unit 504 transmits the control data input from the control plane control unit 505 to the HeNB GW.

The control plane control unit 505 includes a NAS security unit 505-1, an SAE bearer control unit 505-2, an Idle State mobility management unit 505-3, and the like, and performs general processing on the control plane (hereinafter may be referred to as C-Plane). The NAS security unit 505-1 ensures security of Non-Access Stratum (NAS) messages and the like. The SAE bearer control unit 505-2 manages bearers of System Architecture Evolution (SAE) and the like. The Idle State mobility management unit 505-3 performs, for example: mobility management in the idle state (also referred to as LTE-IDLE state or simply as idle); generation and control of paging signals in the idle state; and addition, deletion, update, and search of tracking areas and management of tracking area lists for one or more mobile terminals 202 under control.

The MME 204a distributes paging signals to one or more base stations 203. The MME 204a also performs mobility control in the idle state. The MME 204a manages a tracking area list when the mobile terminal 202 is in the idle state and the active state. The MME 204a starts the paging protocol by transmitting a paging message to a cell belonging to a tracking area in which the mobile terminal 202 is registered. The CSG management, CSG ID management, and whitelist management for the eNB 207 connected to the MME 204a may be performed by the Idle State mobility management unit 505-3.

A series of processes of the MME 204a is controlled by a control unit 506. Therefore, the control unit 506 is connected to the respective units 501 to 505, which is not illustrated in FIG. 10. Similarly to the control unit 310 of the mobile terminal 202 described above, the control unit 506 is implemented by processing circuitry including a processor and a memory, or by dedicated processing circuitry such as FPGA, ASIC, or DSP.

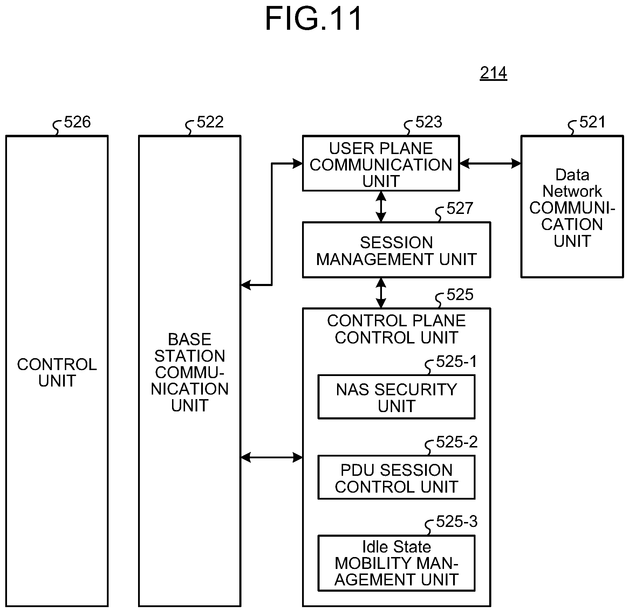

FIG. 11 is a block diagram illustrating a configuration of a 5GC unit. FIG. 11 depicts the configuration of the 5GC unit 214 illustrated in FIG. 3 described above. FIG. 11 depicts a case where an AMF configuration, an SMF configuration, and a UPF configuration are included in the 5GC unit 214 illustrated in FIG. 5. A Data Network communication unit 521 transmits and receives data between the 5GC unit 214 and the Data Network. A base station communication unit 522 transmits and receives data by means of the S1 interface between the 5GC unit 214 and the base station 203 and/or by means of the NG interface between the 5GC unit 214 and the base station 213. If the data received from the Data Network is user data, the user data is passed from Data Network communication unit 521 to the base station communication unit 522 via a user plane communication unit 523 and transmitted to one or more base stations 203 and/or base stations 213. If the data received from the base station 203 and/or the base station 213 is user data, the user data is passed from the base station communication unit 522 to the Data Network communication unit 521 via the user plane communication unit 523 and transmitted to the Data Network.

If the data received from the Data Network is control data, the control data is passed from the Data Network communication unit 521 to a session management unit 527 via the user plane communication unit 523. The session management unit 527 passes the control data to a control plane control unit 525. If the data received from the base station 203 and/or the base station 213 is control data, the control data is passed from the base station communication unit 522 to the control plane control unit 525. The control plane control unit 525 passes the control data to the session management unit 527.

The control plane control unit 525 includes a NAS security unit 525-1, a PDU session control unit 525-2, an Idle State mobility management unit 525-3, and the like, and performs general processing on the control plane (hereinafter may be referred to as C-Plane). The NAS security unit 525-1 ensures security of Non-Access Stratum (NAS) messages and the like. The PDU session control unit 525-2 manages a PDU session between the mobile terminal 202 and the 5GC unit 214. The Idle State mobility management unit 525-3 performs, for example: mobility management in the idle state (also referred to as RRC_IDLE state or simply as idle); generation and control of paging signals in the idle state; and addition, deletion, update, and search of tracking areas and management of tracking area lists for one or more mobile terminals 202 under control.

A series of processes of the 5GC unit 214 is controlled by a control unit 526. Therefore, the control unit 526 is connected to the respective units 521 to 523, 525, and 527, which is not illustrated in FIG. 11. Similarly to the control unit 310 of the mobile terminal 202 described above, the control unit 526 is implemented by processing circuitry including a processor and a memory, or by dedicated processing circuitry such as FPGA, ASIC, or DSP.

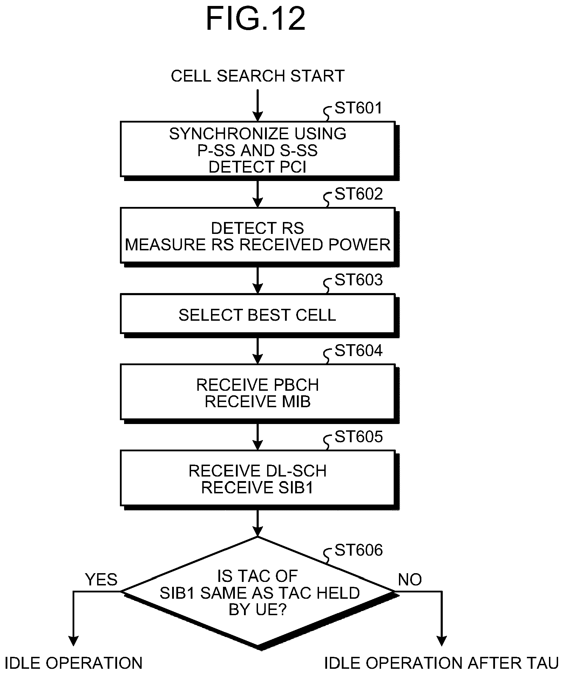

Next, an example of a cell search method in a communication system will be described. FIG. 12 is a flowchart schematically illustrating the procedure from a cell search to an idle operation performed by a communication terminal (UE) in an LTE-based communication system. Starting the cell search, the communication terminal synchronizes the slot timing and the frame timing using the primary synchronization signal (P-SS) and the secondary synchronization signal (S-SS) transmitted from a nearby base station in step ST601.

The P-SS and the S-SS are collectively referred to as synchronization signals (SS). The synchronization signals (SS) are allocated synchronization codes corresponding one-to-one to PCIs allocated to cells. The number of PCIs available is 504. The communication terminal performs synchronization using the 504 PCIs and detects (identifies) the PCI of a synchronized cell.

Next, in step ST602, the communication terminal detects, for the synchronized cell, a cell-specific reference signal (CRS), i.e. a reference signal (RS) transmitted from the base station for each cell, and measures the reference signal received power (RSRP) of the RS. For the reference signal (RS), codes corresponding one-to-one to PCIs are used. The cell can be separated from other cells based on the correlation with the code. By deriving the RS code of the cell from the PCI identified in step ST601, it is possible to detect the RS and measure the RS received power.

Next, in step ST603, the communication terminal selects, from among the one or more cells detected by step ST602, a cell having the best RS reception quality, e.g. a cell having the highest RS received power, or the best cell.

Next, in step ST604, the communication terminal receives the PBCH of the best cell and obtains the broadcast information BCCH. A Master Information Block (MIB) including cell configuration information is mapped to the BCCH on the PBCH. Therefore, the MIB is obtained by receiving the PBCH and obtaining the BCCH. Examples of MIB information include downlink (DL) system bandwidth (also called transmission bandwidth configuration or dl-bandwidth), the number of transmission antennas, and System Frame Number (SFN).

Next, in step ST605, the communication terminal receives the DL-SCH of the cell based on the cell configuration information of the MIB, and obtains System Information Block (SIB) 1 in the broadcast information BCCH. The SIB1 includes information related to access to the cell, information related to cell selection, and scheduling information of other SIBs (SIBk; k is an integer of $\geq 2$). The SIB1 also includes a Tracking Area Code (TAC).

Next, in step ST606, the communication terminal compares the TAC of the SIB1 received in step ST605 with the TAC portion of the Tracking Area Identity (TAI) in the tracking area list already held by the communication terminal. The tracking area list is also referred to as the TAI list. The TAI is identification information for identifying the tracking area, and includes a Mobile Country Code (MCC), a Mobile Network Code (MNC), and a Tracking Area Code (TAC).

The MCC is a country code. The MNC is a network code. The TAC is the code number of the tracking area.

If the result of the comparison in step ST606 shows that the TAC received in step ST605 is the same as the TAC included in the tracking area list, the communication terminal starts the idle operation in the cell. If the comparison shows that the TAC received in step ST605 is not included in the tracking area list, the communication terminal requests, through the cell, the core network (EPC) including the MME and the like to change the tracking area for performing Tracking Area Update (TAU).

The example illustrated in FIG. 12 represents the LTE-based operation from the cell search to the idle operation, but in the case of NR, step ST603 may involve selecting the best beam in addition to the best cell. In addition, in the case of NR, step ST604 may involve acquiring beam information such as the beam identifier. In addition, in the case of NR, step ST604 may involve acquiring the scheduling information of Remaining Minimum SI (RMSI). In the case of NR, step ST605 may involve receiving the RMSI.

A device constituting the core network (hereinafter may be referred to as a "core-network-side device") updates the tracking area list based on the identification number (such as UE-ID) of the communication terminal transmitted from the communication terminal together with the TAU request signal. The core-network-side device transmits the updated tracking area list to the communication terminal. The communication terminal rewrites (updates) the TAC list held by the communication terminal based on the received tracking area list. Thereafter, the communication terminal starts the idle operation in the cell.

With the spread of smartphones and tablet terminal devices, the traffic of cellular wireless communications is explosively increasing, and there is a worldwide concern about the shortage of radio resources. In order to increase the frequency utilization efficiency accordingly, cell size reduction for spatial separation has been in progress.

In conventional cell configurations, a cell configured by an eNB has a relatively wide range of coverage. The conventional cell configurations are designed such that a certain area is covered by a relatively wide range of coverage of a plurality of cells configured by a plurality of eNBs.

In the case of cell size reduction, a cell configured by an eNB has a narrower coverage than a cell configured by a conventional eNB. Therefore, for covering the same area as in the conventional case, a larger number of eNBs with reduced cell size are required than conventional eNBs.

In the following description, a cell having a relatively large coverage such as a cell configured by a conventional eNB is referred to as a "macro cell", and an eNB constituting a macro cell is referred to as a "macro eNB". A cell having a relatively small coverage such as a cell with reduced size is referred to as a "small cell", and an eNB constituting a small cell is referred to as a "small eNB".

A macro eNB may be exemplified by a "wide area base station" described in Non Patent Literature 7.

A small eNB may be exemplified by a low power node, a local area node, a hotspot, or the like. Alternatively, a small eNB may be a pico eNB constituting a picocell, a femto eNB constituting a femtocell, a HeNB, a remote radio head (RRH), a remote radio unit (RRU), remote radio equipment (RRE), or a relay node (RN). Still alternatively, a small eNB may be a "local area base station" or a "home base station" described in Non Patent Literature 7.

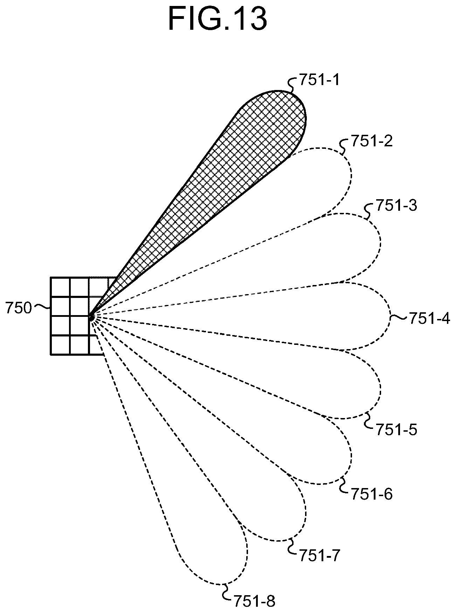

FIG. 13 illustrates an exemplary configuration of a cell in NR. In the NR cell, narrow beams are formed and transmitted in different directions. In the example illustrated in FIG. 13, a base station 750 performs transmission and reception with mobile terminals using a beam 751-1 in a certain time. In another time, the base station 750 performs transmission and reception with mobile terminals using a beam 751-2. Similarly, the base station 750 performs transmission and reception with mobile terminals using one or more of beams 751-3 to 751-8. In this way, the base station 750 configures a wide-range cell.

FIG. 13 illustrates an example in which the number of beams the base station 750 uses is eight, but the number of beams may be different from eight. In addition, the number of beams the base station 750 simultaneously uses is one in the example illustrated in FIG. 13, but may be two or more.

3GPP supports sidelink (SL) for device-to-device (D2D) communication and vehicle-to-vehicle (V2V) communication (see Non Patent Literature 1 and Non Patent Literature 16). SL is defined by the PC5 interface.

Physical channels for use in SL (see Non Patent Literature 1) will be described. Physical Sidelink Broadcast Channel (PSBCH) carries information related to the system and synchronization and is transmitted from UE.

Physical Sidelink Discovery Channel (PSDCH) carries a sidelink discovery message from UE.

Physical Sidelink Control Channel (PSCCH) carries control information from UE for sidelink communication and V2X sidelink communication.

Physical Sidelink Shared Channel (PSSCH) carries data from UE for sidelink communication and V2X sidelink communication.

Physical Sidelink Feedback Channel (PSFCH) carries HARQ feedback on the sidelink from the UE that has received the PSSCH transmission to the UE that has transmitted the PSSCH.

Transport channels for use in SL (see Non Patent Literature 1) will be described. Sidelink Broadcast Channel (SL-BCH) has a predetermined transport format and is mapped to the physical channel PSBCH.

Sidelink Discovery Channel (SL-DCH) has periodic broadcast transmissions in a fixed size and a predetermined format. The SL-DCH supports both UE autonomous resource selection and resource allocation scheduled by the eNB. There is a collision risk in the UE autonomous resource selection, and there is no collision when the UE is allocated individual resources by the eNB. The SL-DCH supports HARQ combining but does not support HARQ feedback. The SL-DCH is mapped to the physical channel PSDCH.

Sidelink Shared Channel (SL-SCH) supports broadcast transmission. The SL-SCH supports both UE autonomous resource selection and resource allocation scheduled by the eNB. There is a collision risk in the UE autonomous resource selection, and there is no collision when the UE is allocated individual resources by the eNB. The SL-SCH supports HARQ combining but does not support HARQ feedback. The SL-SCH also supports dynamic link adaptation by changing transmission power, modulation, and coding. The SL-SCH is mapped to the physical channel PSSCH.

Logical channels for use in SL (see Non Patent Literature 1) will be described. Sidelink Broadcast Control Channel (SBCCH) is a sidelink channel for broadcasting sidelink system information from one UE to other UEs. The SBCCH is mapped to the transport channel SL-BCH.

Sidelink Traffic Channel (STCH) is a one-to-many sidelink traffic channel for transmitting user information from one UE to other UEs. The STCH is used only by UEs having sidelink communication capability and UEs having V2X sidelink communication capability. One-to-one communication between two UEs having sidelink communication capability is also implemented by the STCH. The STCH is mapped to the transport channel SL-SCH.

Sidelink Control Channel (SCCH) is a control channel for sidelink for transmitting control information from one UE to other UEs. The SCCH is mapped to the transport channel SL-SCH.

3GPP has developed a framework for supporting V2X communication also in NR. V2X communication in NR is being developed based on LTE systems and LTE-A systems, but with the following modifications and additions.

In LTE, SL communication is applied only to broadcast. In NR, SL communication is designed to support unicast and groupcast in addition to broadcast (see Non Patent Literature 22 (3GPP TS23.287)).

Unicast communication and groupcast communication are designed to support HARQ feedback (Ack/Nack), CSI reporting, and the like.

SL communication is designed to support PC5-S signaling in order to support unicast and groupcast in addition to broadcast (see Non Patent Literature 22 (3GPP TS23.287)). For example, PC5-S signaling is performed to establish a link for performing SL, i.e. PC5 communication. This link is implemented in the V2X layer and is also referred to as the layer 2 link.

In addition, SL communication is designed to support RRC signaling (see Non Patent Literature 22 (3GPP TS23.287)). RRC signaling in SL communication is also referred to as PC5 RRC signaling. Examples of proposed techniques include notification of UE capabilities between UEs that perform PC5 communication, and notification of AS layer settings for performing V2X communication using PC5 communication.

A proposed SL communication is communication of UE and NW with each other via a relay (see Non Patent Literature 20 (3GPP TR23.703) and Non Patent Literature 23 (3GPP TS23.303)). In the present disclosure, the relay between UE and NW may be referred to as UE-to-NW relay or UE-NW relay. In the present disclosure, UE, which provides relay between UE and NW, may be referred to as relay UE.

In some case, for example, it is necessary for RAN node (e.g., gNB) constituting RAN (Radio Access Network) to communicate not only with UE within its coverage but also with a farther UE. A conceivable way of such communication uses UE-NW relay. For example, a gNB and UE (that may be referred to as remote UE) communicate with each other via a relay UE. The communication between the gNB and the relay UE is performed with Uu (Uu interface) while the communication between the relay UE and the remote UE is prformed with PC5 (PC5 interface).

For example, a relay UE and a remote UE may both exist within the coverage of a gNB. The gNB (hereinafter may be referred to as gNB#1) serving the relay UE in its coverage may be different from the gNB (hereinafter may be referred to as gNB#2) serving the remote UE in its coverage. In such a situation, it is possible that the remote UE communicates via the relay UE with the gNB serving the relay UE in its coverage.

For example, in some cases where the remote UE exists at the edge of the coverage of gNB#2, good communication quality may not be obtained. In such cases, the remote UE can obtain better communication quality by connecting to gNB#1 via the relay UE. In other example cases where the distance between the remote UE and the relay UE is shorter than the distance between the remote UE and gNB#2, the remote UE can reduce its transmission power by communicating with gNB#1 via the relay UE, leading to reduced power consumption.

However, the previously-established standards including Non Patent Literature 20 and Non Patent Literature 23 have disclosed no methods for allowing the remote UE connected to gNB#2 to connect to gNB#1 via the relay UE. This results in the problem that the remote UE connected to gNB#2 cannot connect to gNB#1 via the relay UE even in the above-described situations.

The present embodiment discloses a method for solving this problem.

The communication system according to the present embodiment solves the above problem by switching the remote UE to RRC_IDLE before the remote UE establishes an RRC connection with gNB#1 via the relay UE. The remote UE may be switched to RRC_IDLE before the remote UE starts the RRC connection process with gNB#1.

A problem related to the remote UE in an RRC connection with gNB#2 is how to switch the remote UE to RRC_IDLE. Disclosed below is a method for solving this problem.

In order to solve this problem, gNB#2 releases the RRC connection of the remote UE. The remote UE may release the RRC connection with gNB#2.

For example, the remote UE performs measurements on the SL from the relay UE. Measures of SL are reception qualities including received power, received signal strength indicator (RSSI), SNR, SINR, and channel occupancy (or channel busy ratio (CBR)). That is, the remote UE measures the reception quality (hereinafter may be referred to as SL reception quality) in the SL from the relay UE. The remote UE reports the SL measurement result to gNB#2. The remote UE reports the SL reception quality to gNB#2. gNB#2 may determine whether to release the connection with the remote UE using the SL reception quality reported by the remote UE. In response to gNB#2 determining to release the connection with the remote UE, gNB#2 starts a process of releasing the RRC connection from the remote UE in the RRC connection. gNB#2 may request the remote UE in the RRC connection to release the RRC connection. For example, RRC signaling may be used for the RRC connection release request. An RRC release message may be used as the RRC signaling.

In this way, gNB#2 can release the RRC connection from the remote UE in the RRC connection. The remote UE that has released the RRC connection from gNB#2 preferably connects to gNB#1 via the relay UE.

A method for a gNB to configure SL measurement for a UE will be disclosed. The gNB may notify the UE of the SL measurement configuration. The gNB may notify the UE performing SL communication of the SL measurement configuration. The SL measurement configuration includes measurement target settings, settings of the measurement result report method, and the like. Examples of measurement target settings include the frequency of the SL to be measured, the radio access technology (RAT) of the SL to be measured, and the UE to be subjected to SL measurement. Every beam may be set as an SL measurement target. In cases where SL communication is performed using beams, an SL measurement result for each beam can be obtained.

The frequency of the SL to be measured may be the same as or different from the frequency that is used for communication with the serving cell. The RAT of the SL to be measured may be the same as or different from the RAT that is used for communication with the serving cell. Whether to use the same or a different frequency/RAT may be set. The UE to be subjected to SL measurement may be specified by UE type, e.g. U2N relay UE, U2U relay UE, UE capable of SL communication, or UE performing SL communication. These UEs may be combined. The gNB configures the information disclosed above as measurement target settings, and notifies the UE of the information.

Settings of SL measurement result report may be, for example, periodic report, report in response to satisfying a predetermined condition (may be referred to as an event trigger), report n times (n is an integer of one or more), or the like. The gNB configures the information disclosed above as settings of the measurement result report method, and notifies the UE of the information.

Seven examples of the predetermined condition (may be referred to as an event) are disclosed below.

(1) SL reception quality is higher than a predetermined threshold.
(2) SL reception quality is lower than a predetermined threshold.
(3) SL reception quality is higher than the reception quality of the serving cell.
(4) SL reception quality is lower than the reception quality of the serving cell.
(5) Reception quality from a UE capable of SL communication is higher than the reception quality from the UE performing SL communication.
(6) Reception quality from a UE capable of SL communication is lower than the reception quality from the UE performing SL communication.
(7) Combinations of (1) to (6).

An offset may be provided. A predetermined offset may be added to the reception quality measurement result. For example, an offset may be applied to (3) to produce a condition that SL reception quality plus a predetermined offset is higher than the reception quality of the serving cell. The serving cell in (3) and (4) may be, for example, a serving cell having the UE in its coverage. The UE capable of SL communication in (5) and (6) may be, for example, a U2N relay UE. The UE capable of SL communication may be, for example, a UE capable of U2N relay communication. The above-described predetermined threshold and offset are preferably given as a notification from the gNB to the UE. The notification may be included in the settings of the measurement result report method.

The UE performs SL measurement according to the SL measurement configuration provided by the gNB. The UE notifies the gNB of the SL measurement result according to the SL measurement result method provided by the gNB.

The identifier of the UE may be provided as a notification together with the SL measurement result. The gNB can recognize which UE the measurement result is from. The identifier of the UE may be provided as a notification together with the SL measurement result. The gNB can recognize which UE the measurement result is from. The identifier of the measurement target UE may be provided as a notification together with the SL measurement result. The notification may be given in association with the measurement result. The gNB can recognize which UE the SL measurement result is for. The type of the measurement target UE may be provided as a notification together with the SL measurement result. The gNB can recognize the type of the UE that is the SL measurement result target. Information of the group to which the UE belongs may be provided as a notification together with the SL measurement result. The gNB can recognize which group the UE belongs to. Position information of the UE may be provided as a notification together with the SL measurement result. The notification of the position information may provide information indicating in which area the UE exists. The gNB can recognize at which position the reported SL measurement result has been obtained. The identifier of the measured gNB may be provided as a notification together with the SL measurement result. The gNB can recognize from which gNB the UE has measured reception quality. The reception quality measurement result from the gNB may be provided as a notification together with the SL measurement result. The notification may be given in association with the identifier of the measured gNB. The gNB can recognize from which gNB the UE has measured reception quality.

The SL measurement may include a layer 3 (L3) filtering function, and the result of L3 filtering may be reported. This allows for highly accurate measurement. The SL measurement may include a layer 1 (L1) filtering function, and the result of L1 filtering may be reported. This allows for early notification of the measurement result.

RRC signaling may be used for notification of the SL measurement configuration. RRC signaling may be used for reporting the SL measurement result. This allows for notification of a lot of information. L3 filtering may be used for the SL measurement result that is reported using RRC signaling. MAC signaling may be used for reporting the SL measurement result. For example, in the case of an event trigger, the SL measurement result can be transmitted and received early. PUCCH may be used for reporting the SL measurement result. For example, in the case of an event trigger, the SL measurement result can be transmitted and received earlier. L1 filtering may be used for the SL measurement result that is reported using PUCCH. For example, L1 filtering and PUCCH may be used for beam-by-beam measurements and for reporting the measurement results. This makes it possible to obtain a dynamic measurement result for each beam.

In this way, the SL measurement configuration and the notification of the SL measurement result are enabled on the Uu between the gNB and the UE. The gNB can notify the UE of the SL measurement configuration on the Uu. The UE can notify the gNB of the SL measurement result on the Uu. The gNB can recognize the SL measurement result in the UE.

The SL measurement configuration may be included in the measurement configuration in the conventional Uu. Alternatively, the measurement configuration in the conventional Uu and the SL measurement configuration may be combined. For example, measurement events in the conventional Uu and the events for SL measurement disclosed above may be combined. For example, the measurement result may be reported when the reception quality of the serving cell is lower than a predetermined threshold and the SL reception quality is higher than a predetermined threshold. In this way, Uu measurement and SL measurement can be combined, whereby a more flexible measurement configuration can be set and various measurement results can be obtained. The reception quality can be compared between the gNB and the SL-capable UE such as the relay UE.

Information related to the connection state of the UE may be provided. Information related to the connection state of the UE may be communicated between UEs that perform SL communication on the PC5. For example, the relay UE may notify the remote UE of information related to the connection state of the UE. For example, the remote UE may notify the relay UE of information related to the connection state of the UE. The information related to the connection state of the UE includes a connection state with the NW. For example, the connection state with the NW may be a connection management (CM) state. For example, the connection state with the NW may be an RRC state. Ten examples of information related to the connection state of the UE are disclosed below.

    (1) CM state.
    (2) RRC state.
    (3) Identifier of the UE.
    (4) Identifier of the transmission destination UE.
    (5) Identifier of the RAN connected.
    (6) Identifier of the core network (CN) connected.
    (7) Identifier of the area in which the UE is located.
    (8) Identifier of the service provided.
    (9) Identifier of the slice provided.
    (10) Combinations of (1) to (9).

Item (1) specifies the connection state between the UE and the CN. Examples of CM states include CM_Idle, CM_Connected, and the like. Item (2) specifies the connection state between the UE and the RAN. Examples of RRC states include RRC_IDLE, RRC_CONNECTED, RRC_INACTIVE, and the like.

Item (3) specifies the UE that transmits information related to the connection state of the UE. Examples thereof include Globally Unique Temporary Identifier (GUTI), 5G SAE Temporary Mobile Subscriber Identity (5G-S-TMSI), and the like. Item (4) specifies the UE that receives the information related to the connection state of the UE. Examples thereof include GUTI, 5G-S-TMSI, and the like. Item (5) specifies the RAN to which the UE is connected. For example, the RAN may be a gNB. The RAN may be a cell. Identifiers of Transmission Reception Point (TRP), Integrated Access and Backhaul (IAB) donor, IAB node, and the like may be used. For example, the cell identifier may be NR Cell Identifier (NCI) or NR Cell Global Identifier (NCGI). Item (6) specifies the CN to which the UE is connected. For example, the identifier of the CN may be an AMF identifier. The identifier of the CN may be an SMF identifier. The identifier of the CN may be a network function (NF) identifier. For example, the AMF identifier may be AMF ID or AMF Set ID.

Item (7) specifies the area in which the UE is located. For example, the area in which the UE is located may be a registration area. The area in which the UE is located may be a tracking area. The area in which the UE is located may be a RAN Notification Area (RNA). For example, the tracking area identifier may be TAC. Item (8) specifies the service provided to the UE. For example, the service identifier may be a service area identifier. Item (9) specifies the network slice provided to the UE. For example, the network slice identifier may be Single Network Slice Selection Assistance Information (S-NSSAI).

As the above-described identifiers, for example, identifiers described in Non Patent Literature 31 (3GPP TS23.003) may be used.

In this way, which NW the UE that has transmitted information related to the connection state of the UE is connected to or which connection state the UE is in can be recognized by the UE that has received the information.

Information related to the connection state of the UE may be replaced with information related to the connection state change of the UE. The information related to the connection state change of the UE may include information related to the connection state before the change and/or information related to the connection state after the change. Information related to the connection state change of the UE may be communicated between UEs that perform SL communication on the PC5. For example, the relay UE may change the connection state with the NW, and then notify the remote UE of information related to the connection state change of the UE. For example, the remote UE may change the connection state with the NW, and then notify the relay UE of information related to the connection state change of the UE. In this way, notification of the information only needs to be given following a change in the connection state between the UE and the NW, which contributes to reducing the resources required for notification.

A message may be provided for notification of information related to the connection state of the UE and information related to the connection state change of the UE. These items of information are preferably included in the message. For example, the relay UE may notify the remote UE of the message including information related to the connection state of the UE. For example, the remote UE may notify the relay UE of the message including information related to the connection state of the UE.

A method for notification of information related to the connection state of the UE and information related to the connection state change of the UE will be disclosed. The notification may be given by PC5-S signaling. This enables early notification in the PC5 connection process. Alternatively, the notification may be given by PC5-RRC signaling. For example, the notification may be included in an RRC message on the PC5. For example, in the case of notification of the RRC connection state with the NW, the use of RRC signaling on the PC5 enables the notification process to be performed in the same RRC layer, so that malfunction can be reduced. Notification of the information may be given by a signaling radio bearer (SRB) of PC5. In this way, the information can be communicated between UEs as signaling information and control information.

Notification of the information may be given using PC5 MAC signaling. In this case, the notification can be given earlier than with RRC signaling. Notification of the information may be given by PSCCH. The information may be given as a notification included in 1st sidelink control information (SCI). This allows for earlier notification. In addition, the information can be received by a UE capable of receiving PC5 communication. Notification of the information may be given by PSSCH. The information may be given as a notification included in 2nd SCI. This allows for early notification. The information may be given by PSSCH as a notification included in a MAC control element (CE). This allows for early notification. In addition, because HARQ is applied, reception error can be reduced.

When the remote UE establishes an RRC connection with gNB#1, the relay UE is interposed between the remote UE and the gNB unlike in the conventional RRC connection process between the UE and the gNB, and thus the conventional method cannot be applied. Here, a specific method for the remote UE to establish an RRC connection with gNB#1 will be disclosed.

The remote UE notifies the NW of an RRC connection request. Specifically, the remote UE notifies the NW of the RRC connection request via the relay UE. The RRC connection request is preferably the RRC connection request between the remote UE and the NW. The state of the remote UE that makes the RRC connection request is preferably the RRC_IDLE or RRC_INACTIVE state. The NW notified of the RRC connection request is preferably the gNB (gNB#1) to which the relay UE is connected. For the RRC connection request, an RRC setup request may be used.

Upon receiving from the remote UE the RRC connection request between the remote UE and the NW, the relay UE notifies the NW to which the remote UE is connected of the RRC connection request. Alternatively, the remote UE may transfer the RRC connection request to the NW to which the remote UE is connected.

The information included in the RRC connection request may be encapsulated. Alternatively, the information included in the RRC connection request may be container information. For example, the information included in the RRC connection request may be encapsulated as SL-related information. The information included in the RRC connection request may be encapsulated as relay-related information. The relay UE may notify the NW of the encapsulated or container RRC connection request received from the remote UE as it is. In this way, reception and transmission processing of the RRC connection request in the relay UE can be easily performed with low delay. Therefore, malfunction in the relay UE can be reduced, and the RRC connection process can be performed with low delay.

Six examples of information included in the RRC connection request are disclosed below.

(1) Information indicating that the request is an RRC connection request between the UE and the NW.
(2) Identifier of the UE.
(3) Identifier of the request destination NW.
(4) Identifier of the transmission destination UE.
(5) Information related to the connection state of the UE.
(6) Combinations of (1) to (5).

In Item (1), the RRC connection request may be a request for RRC setup, for example. Item (2) specifies the UE that transmits the RRC connection request. Examples thereof include GUTI, 5G-S-TMSI, and the like. Item (3) specifies the RAN to which the UE makes the RRC connection request. For example, the RAN may be a gNB. The RAN may be a cell. Identifiers of TRP, IAB donor, IAB node, and the like may be used. For example, the cell identifier may be NCI or NCGI. Item (4) specifies the UE through which the RRC connection request is transmitted to the NW. For example, in the case that the remote UE notifies the NW of the RRC connection request via the relay UE, the identifier that identifies the relay UE is preferably used. Examples thereof include GUTI, 5G-S-TMSI, and the like. Item (5) may be the information related to the connection state of the UE disclosed above.

In this way, the NW (for example, gNB) that has received the RRC connection request can recognize the UE that has made the connection request and the UE through which the connection request has passed. In addition, the UE through which the connection request has passed can recognize the transmission destination gNB of the connection request received from the transmission source UE. As a result, the gNB that has received the RRC connection request can execute the RRC connection process between the UEs that have transmitted the RRC connection request.

Because the notification of the RRC connection request from the remote UE to the NW involves the relay UE, the remote UE needs to notify the relay UE of the RRC connection request on the PC5. Preferably, as a method for PC5 notification of the RRC connection request, the methods for PC5 notification of information related to the connection state of the UE disclosed above are appropriately applied. In addition, as RRC signaling on the PC5, a message for an RRC connection request involving the relay UE may be provided.

A method for notification of the RRC connection request from the relay UE to the NW will be disclosed. RRC signaling of Uu may be used for the RRC connection request. An RRC setup request may be used as the RRC signaling. Alternatively, an RRC message for notification of SL-related information may be used. For example, SidelinkUEInformationNR may be used. Alternatively, a message for an RRC connection request involving the relay UE may be provided. In addition, notification of the RRC connection request may be given by SRB. The RRC connection request can thus be communicated between the relay UE and the NW as signaling information and control information

Notification of the RRC connection request may be given using MAC signaling. This allows for earlier notification than with RRC signaling. Notification of the RRC connection request may be given by PUCCH. The connection request may be given as a notification included in UCI. This allows for earlier notification. Notification of the RRC connection request may be given by PUSCH. The connection request may be given by PSSCH as a notification included in MAC CE. Alternatively, notification may be given by PUSCH together with data. This allows for early notification. In addition, because HARQ is applied, reception error can be reduced.

In this way, the remote UE can notify the NW of the RRC connection request via the relay UE. The NW can activate the RRC connection process for the remote UE.

Disclosed below is another method for the remote UE to establish an RRC connection with gNB#1. The remote UE notifies the relay UE of an RRC connection request. The state of the remote UE that makes the RRC connection request is preferably the RRC_IDLE or RRC_INACTIVE state. The RRC connection request may be an RRC connection request between the remote UE and the NW, unlike the RRC connection request of PC5. In this way, the relay UE can recognize that the RRC connection request is different from the RRC connection request of PC5. The NW may be the NW (gNB#1) to which the relay UE is connected. Upon receiving the RRC connection request from the remote UE, the relay UE notifies the NW to which the relay UE is connected of the RRC connection request between the remote UE and the NW.

As examples of information included in the RRC connection request, the examples of information disclosed above may be appropriately applied. The identifier of the transmission destination UE in information (4) is preferably the identifier of the destination UE to which the RRC connection request is transmitted, not of the UE through which the RRC connection request passes.

In this way, the relay UE that has received the RRC connection request from the remote UE can notify gNB#1 of the RRC connection request between the remote UE and the NW. gNB#1 that has received the RRC connection request between the remote UE and the NW from the relay UE can execute the RRC connection process with the remote UE.

Preferably, as a method for the remote UE to notify the relay UE of the RRC connection request, the methods for PC5 notification of the RRC connection request via the relay UE disclosed above are appropriately applied. Preferably, as a method for notification of the RRC connection request from the relay UE to the NW, the methods for notification of the RRC connection request from the relay UE to the NW disclosed above are appropriately applied.

In this way, the remote UE can notify the relay UE of the RRC connection request between the remote UE and the NW, and the relay UE can notify the NW of the RRC connection request between the remote UE and the NW. The NW can activate the RRC connection process for the remote UE.

After the remote UE notifies the relay UE of the RRC connection request to the NW, the RRC connection process may be started between the relay UE and the gNB. The relay UE may start the RRC connection process with gNB#1 having the relay UE in its coverage upon receiving the RRC connection request from the remote UE to the NW. The remote UE may start the RRC connection process for the cell selected or reselected. The remote UE notifies the relay UE of the RRC connection request to the NW. The state of the remote UE may be RRC_Conncted. The state of the remote UE may be RRC_Idle. Upon receiving the RRC connection request to the NW, the relay UE makes the RRC connection request to the gNB (gNB#1) having the cell selected or reselected. After completing the RRC connection process with gNB#1, the relay UE may notify the remote UE of the RRC state change.

An RRC connection request message to the NW may be provided on the PC5. The message may be for relay. The message is preferably that which requests the destination UE of the message to establish the RRC connection to the NW. Seven examples of information included in the message are disclosed below.

(1) Information indicating that RRC connection to the NW is requested.
(2) Identifier of the UE.
(3) RRC connection state of the UE.
(4) Identifier of the gNB cell-selected or cell-reselected by the UE.
(5) Identifier of the gNB to which the UE is connected.
(6) Identifier of the destination UE.
(7) Combinations of (1) to (6).

As a method for notification of the RRC connection request message to the NW from the remote UE to the relay UE, the above-described methods may be appropriately applied. Preferably, the methods for PC5 notification of information related to the connection state of the UE are appropriately applied.

The relay UE that has completed the RRC connection process with gNB#1 notifies gNB#1 of the RRC connection request message from the remote UE. In this way, the NW can be notified of the RRC connection request message from the remote UE via the relay UE. In addition, the relay UE does not need to connect to the gNB in advance. This allows the relay UE to reduce power consumption.

gNB#1 may notify the remote UE of an RRC setup message via the relay UE. gNB#1 that has received the RRC setup message from the remote UE via the relay UE starts the RRC connection process for the remote UE via the relay UE that has received the message. gNB#1 sets the RRC configuration for the remote UE, and notifies the remote UE of the RRC setup message including the RRC configuration via the relay UE.

A method for notification of the RRC setup message from the NW to the relay UE will be disclosed. RRC signaling of Uu may be used for the RRC setup message. RRC setup may be used as the RRC signaling. Alternatively, an RRC message for notification of SL-related information may be used. Alternatively, a message for an RRC connection request involving the relay UE may be provided. Notification of the RRC setup may be given by SRB. The RRC setup can thus be communicated between the NW and the relay UE as signaling information and control information

Preferably, as a method for notification of the RRC setup message from the relay UE to the remote UE, the methods for PC5 notification of information related to the connection state of the UE disclosed above are appropriately applied. In addition, as RRC signaling on the PC5, a message for an RRC connection request involving the relay UE may be provided.

In this way, the remote UE can receive the RRC setup message from gNB#1 via the relay UE. The remote UE can acquire from gNB#1 the RRC configuration for establishing the RRC connection with gNB#1. The remote UE sets the RRC configuration using the RRC configuration acquired from gNB#1.

The remote UE that has set the RRC configuration using the RRC configuration acquired from gNB#1 may notify gNB#1 of the RRC setup completion. As a method for notifying gNB#1 from the remote UE via the relay UE, preferably, the methods for notification of the RRC connection request disclosed above are appropriately applied. RRC setup complete may be used as the RRC signaling of Uu. In this way, gNB#1 can receive the RRC setup completion notification from the remote UE. gNB#1 can recognize from the remote UE that the setting of the RRC configuration is completed.

In this way, the RRC connection process can be performed between the remote UE and gNB#1. The remote UE can establish the RRC connection to gNB#1.

Disclosed below are resources required for the PC5 communication between the remote UE and the relay UE. If the remote UE is connected to the NW, resources required for PC5 communication may be scheduled from the connected NW. The resource scheduling for transmission by the remote UE may be performed by the connected NW. The remote UE performs PC5 communication according to the scheduling information received from the connected NW. If the remote UE is not connected to the NW, resources required for PC5 communication may be selected by the remote UE using a resource pool (RP) broadcast by gNB#2 serving the remote UE.

If the relay UE is connected to the NW, resources required for PC5 communication may be scheduled from the connected NW. The resource scheduling for transmission by the relay UE may be performed by the connected NW. The relay UE performs PC5 communication according to the scheduling information received from the connected NW. If the relay UE is not connected to the NW, resources required for PC5 communication may be selected by the relay UE using a resource pool (RP) broadcast by gNB#1 serving the relay UE.

The PC5 communication may include not only the communication after completion of the PC5-RRC connection, but also the discovery process, the process of establishing a link (may be referred to as a PC5-S link) for use in signaling on the PC5, and the PC5-RRC connection process.

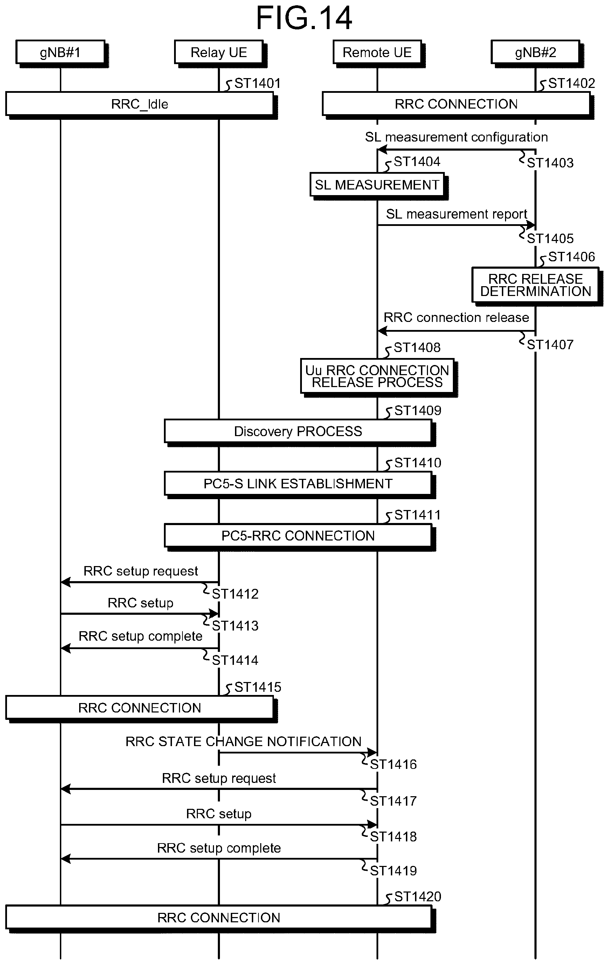

FIG. 14 is a sequence diagram illustrating an example of a method for switching the remote UE to RRC_IDLE before the remote UE establishes an RRC connection with a gNB via the relay UE according to the first embodiment. In step ST1401, the relay UE is in the coverage of gNB#1 and is in the RRC_IDLE state. In step ST1402, the remote UE is in the coverage of gNB#2 and is in the RRC_CONNECTED state. In step ST1403, gNB#2 notifies the remote UE of the measurement configuration of SL (hereinafter referred to as the SL measurement configuration). In step ST1404, the remote UE performs communication quality measurement of SL (hereinafter may be referred to as SL measurement) in accordance with the SL measurement configuration received from gNB#2. In the communication quality measurement of SL, the remote UE measures, for example, the power, RSSI, SNR, SINR, and the like of the received signal from the UE.

In step ST1405, the remote UE notifies gNB#2 of the SL measurement report including the SL measurement result in accordance with the SL measurement report configuration included in the SL measurement configuration received from gNB#2 in step ST1403. For example, the above-described SL measurement event configuration may be used as the SL measurement report configuration. For example, when the reception quality from the UE is higher than a predetermined threshold in the SL and the reception quality from the UE is higher than the reception quality from gNB#2, that is, when the reception quality from the UE is better than the reception quality from gNB#2, the remote UE reports the SL measurement result to gNB#2. In step ST1406, gNB#2 determines whether to release the RRC connection of the remote UE using the SL measurement result provided by the SL measurement report from the remote UE. In response to gNB#2 determining to release the RRC connection of the remote UE, gNB#2 notifies the remote UE of an RRC connection release request in step ST1407. The remote UE that has received the request performs the RRC connection release process with gNB#2 in step ST1408.

In step ST1409, the remote UE performs the discovery process. The remote UE performs the PC5-S link establishment process on the detected relay UE having the relay function in step ST1410, and performs the PC5-RRC connection in step ST1411. Completion of the PC5-RRC connection enables data communication between the remote UE and the relay UE.

The relay UE connected to the remote UE activates the connection process for the NW. The relay UE connected to the remote UE activates the RRC connection process for gNB#1. The remote UE may request the connected relay UE to connect to the NW. For example, notification of the request may be given in the PC5-RRC connection process, or may be given using PC5-RRC signaling after the PC5-RRC connection is completed. The relay UE that has received the request may perform the connection process for the NW. The relay UE that has received the request may perform the connection process for gNB#1.

In step ST1412, the relay UE notifies gNB#1 of an RRC setup request. gNB#1 that has received the RRC setup request sets the RRC configuration for the relay UE, and notifies the relay UE of the RRC setup including the configuration in step ST1413. The relay UE that has received the RRC setup sets the RRC configuration with gNB#1, and notifies gNB#1 of the RRC setup completion in step ST1414. As a result, the RRC connection between the relay UE and gNB#1 is established in step ST1415.

In step ST1416, the relay UE that has established the RRC connection with gNB#1 transmits, to the remote UE, an RRC state change notification including information related to the connection state of the relay UE with the NW. Here, the notification preferably indicates that the RRC connection state has been established.

The remote UE that has received from the relay UE the notification of the RRC connection state with the NW notifies gNB#1 of an RRC setup request in step ST1417. The notification may be given via the relay UE. gNB#1 that has received the RRC setup request sets the RRC configuration for the remote UE, and notifies the remote UE of the RRC setup including the configuration in step ST1418. The notification may be given via the relay UE. The remote UE that has received the RRC setup sets the RRC configuration with gNB#1, and notifies gNB#1 of the RRC setup completion in step ST1419. The notification may be given via the relay UE. As a result, the RRC connection between the remote UE and gNB#1 is established in step ST1420.

In this way, the remote UE in the RRC connection state with gNB#2 can transition to the RRC connection state with gNB#1. As a result, the remote UE can communicate with gNB#1 via the relay UE.

In the example disclosed in FIG. 14, the remote UE makes an RRC connection request to gNB#1 in step ST1417. Alternatively, gNB#1 may make an RRC connection request to the remote UE. gNB#1 may notify the remote UE of an RRC connection request via the relay UE. The remote UE that has received the RRC connection request from gNB#1 may start the RRC connection process for gNB#1. The remote UE may notify gNB#1 of the RRC setup request disclosed in step ST1417 of FIG. 14. In this way, gNB#1 can request the remote UE to activate the RRC connection process.

Paging may be used for notification of the RRC connection request from gNB#1 to the remote UE. gNB#1 that has determined to implement the RRC connection with the remote UE notifies the remote UE of paging via the relay UE. The remote UE that has received the paging activates the RRC connection process for gNB#1. The paging may be paging generated by gNB#1, not paging generated from the CN. As a method for paging from gNB#1 to the remote UE via the relay UE, the methods disclosed in the fourth modification of the second embodiment may be appropriately applied. By using paging, gNB#1 can request the remote UE to activate the RRC connection process.

gNB#1 may notify the remote UE of the RRC configuration without making an RRC connection request. gNB#1 that has determined to establish the RRC connection with the remote UE may notify the remote UE of the RRC configuration via the relay UE without making an RRC connection request. In this way, the transmission and reception of an RRC connection request from gNB#1 to the remote UE and an RRC connection request message from the remote UE to gNB#1 can be skipped. This allows for reduced signaling load.

The relay UE may notify gNB#1 of the connection state with the remote UE. The connection state may be information related to the connection state in PC5 described later. As a method for notification of information related to the connection state from the relay UE to gNB#1, preferably, the methods to be described later are appropriately applied. gNB#1 may determine whether to make an RRC connection request to the remote UE using the connection state with the relay UE and the connection state between the relay UE and the remote UE. If gNB#1 is in the RRC connection state with the relay UE and the RRC connection has been established between the relay UE and the remote UE, gNB#1 may make an RRC connection request to the remote UE. In this way, the remote UE can transition to the RRC connection state with gNB#1 via the relay UE.

The foregoing discloses a method with which gNB#2 releases the RRC connection of the remote UE using the SL reception quality from the remote UE. Another method for releasing the RRC connection of the remote UE will be disclosed.

The remote UE reports to gNB#2 when finding a connectable relay UE. The remote UE may report to gNB#2 when performing the discovery process with the relay UE. The remote UE may report to gNB#2 when establishing a PC5 connection with the relay UE. The remote UE may report to gNB#2 when the establishment of a PC5-S link with the relay UE is completed. The remote UE may report to gNB#2 when a PC5-RRC connection with the relay UE is completed.

gNB#2 may determine whether to release the connection with the remote UE using the information related to the connection state with the relay UE received from the remote UE. The information related to the connection state between the remote UE and the relay UE may be information related to the connection state in the PC5. In response to gNB#2 determining to release the connection with the remote UE, gNB#2 starts a process of releasing the RRC connection from the remote UE in the RRC connection. gNB#2 may request the remote UE in the RRC connection to release the RRC connection. For example, RRC signaling may be used for the RRC connection release request. An RRC release message may be used as the RRC signaling.

The remote UE may notify gNB#2 of information related to the connection state of the relay UE with the NW. gNB#2 may determine whether to release the RRC connection with the remote UE using the information related to the connection state of the relay UE with the NW received from the remote UE. gNB#2 may determine whether to release the RRC connection with the remote UE using the information related to the connection state between the remote UE and the relay UE and the information related to the connection state of the relay UE with the NW. In this way, gNB#2 can determine whether to release the RRC connection with the remote UE considering the connection state of the relay UE. In addition, after the RRC connection of the remote UE with gNB#2 is released, the RRC connection process with the NW via the relay UE can be performed early.

Information related to the connection state in the PC5 may be provided. The connection state is preferably the state of the discovery process, the state of the PC5-S link establishment process, the PC5-RRC connection state, or the like. The state of the discovery process may be the discovery process being implemented or the discovery process completed. The state of the PC5-S link establishment process may be the PC5-S link establishment process being implemented or the PC5-S link establishment completed. The PC5-RRC connection state may be the PC5-RRC connection being implemented or the PC5-RRC connection process completed. Hereinafter, six examples of information regarding the connection state in the PC5 will be disclosed.

(1) Connection state in the PC5.
(2) Identifier of the UE.
(3) Identifier of the PC5 connection process partner UE.
(4) Information related to the connection state of the UE.
(5) Information indicating whether the UE is capable of relay.
(6) Combinations of (1) to (5).

Item (1) is preferably the connection state of the UE in the PC5. Item (2) specifies the UE that gives the notification of the information. Examples thereof include GUTI, 5G-S-TMSI, layer 2 ID on the PC5, and the like. Item (3) specifies the partner UE of the PC5 connection process. Examples thereof include GUTI, 5G-S-TMSI, layer 2 ID on the PC5, and the like. Item (4) is information related to the connection state of the UE and/or the partner UE of the PC5 connection process. Preferably, the information related to the connection state of the UE disclosed above is appropriately applied. Item (5) is information related to whether the UE and/or the partner UE of the PC5 connection process is capable of relay. Examples of the relay include a UE-NW relay that performs relay between a UE and the NW, and a UE-UE relay that performs relay between a UE and a UE. These pieces of information may be separately provided. Capability as to whether the UE is capable of relay in the SL may be provided. The capability may be used as information indicating whether the UE is capable of relay.

In this way, which UE the UE that has transmitted information related to the connection state of the UE in the PC5 is connected to or which connection state the UE is in can be recognized by the gNB that has received the information.

Information related to the connection state in the PC5 may be replaced with information related to the connection state change in the PC5. The information related to the connection state change in the PC5 may include information related to the connection state in the PC5 before the change and/or information related to the connection state in the PC5 after the change. In this way, notification of the information only needs to be given following a change in the connection state of the UE in the PC5, which contributes to reducing the resources required for notification.

A message may be provided on the Uu for notification of information related to the connection state of the UE in the PC5 and information related to the connection state change of the UE in the PC5. These items of information are preferably included in the message. For example, the remote UE may notify gNB#2 of the message including information related to the connection state of the UE in the PC5.

Preferably, as a method for notification of information related to the connection state in the PC5 from the remote UE to the NW, the methods for notification of the RRC connection request from the relay UE to the NW disclosed above are appropriately applied.

In this way, the remote UE can notify gNB#2 of information related to the connection state in the PC5. gNB#2 can determine whether to release the RRC connection with the remote UE using the information received from the remote UE.

In the case of the UE-UE relay, information related to the connection state in one PC5 may be given to a UE different from the UE that performs transmission and reception with the one PC5. For example, when the UE-TX that is the transmission-side UE communicates with the UE-RX that is the reception-side UE via the UE-UE relay UE, the UE-UE relay UE may notify the UE-RX of information related to the connection state in the PC5 between the UE-TX and the UE-UE relay UE. Preferably, as a method for notification of information related to the connection state in the PC5 between UEs, the methods for PC5 notification of the RRC connection request via the relay UE disclosed above are appropriately applied. In this way, even in the case of the UE-UE relay, each UE can recognize the connection state in each PC5.

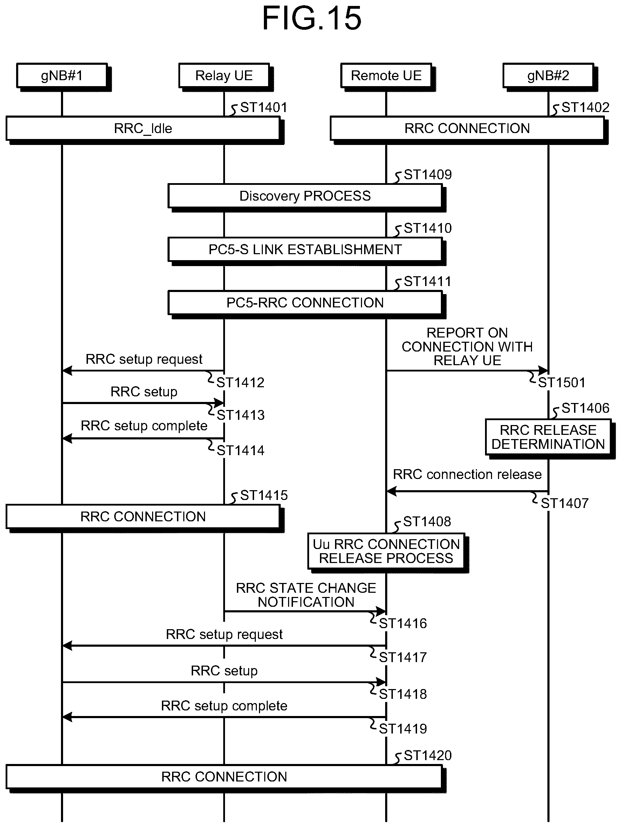

FIG. 15 is a sequence diagram illustrating another example of a method for switching the remote UE to RRC_IDLE before the remote UE establishes an RRC connection with a gNB via the relay UE according to the first embodiment. In FIG. 15, steps identical to those in FIG. 14 are denoted by the same step numbers, and descriptions already provided are omitted.

The remote UE that has established the PC5-RRC connection with the relay UE in steps ST1409 to ST1411 notifies gNB#2 of information related to the connection state in the PC5 with the relay UE in step ST1501. The notification may include information indicating whether the relay UE is capable of relay. In addition, the notification may include the identifier of the relay UE. gNB#2 determines whether to release the RRC connection of the remote UE in step ST1406 using the information related to the PC5 connection state with the relay UE received from the remote UE. In response to gNB#2 determining to release the RRC connection of the remote UE, gNB#2 notifies the remote UE of an RRC connection release request in step ST1407. The remote UE that has received the request performs the RRC connection release process with gNB#2 in step ST1408.

In this way, the remote UE in the RRC connection state with gNB#2 can transition to the RRC connection state with gNB#1. As a result, the remote UE can communicate with gNB#1 via the relay UE. In addition, gNB#2 can recognize the connection state between the remote UE and the relay UE, and thus can release the RRC connection of the remote UE at an appropriate timing.

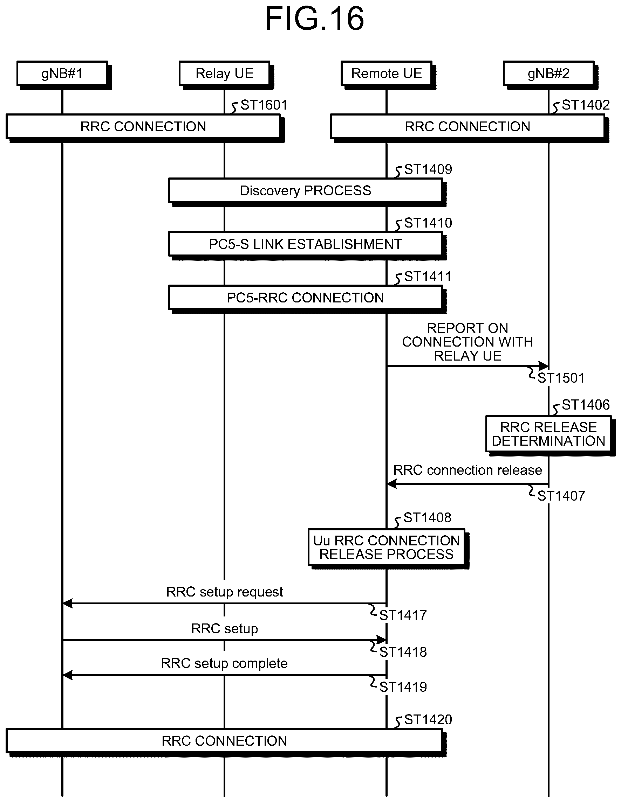

FIG. 16 is a sequence diagram illustrating another example of a method for switching the remote UE to RRC_IDLE before the remote UE establishes an RRC connection with a gNB via the relay UE according to the first embodiment. In FIG. 16, steps identical to those in FIG. 15 are denoted by the same step numbers, and descriptions already provided are omitted.

FIG. 16 illustrates a case where the relay UE establishes an RRC connection with gNB#1 in step ST1601 before being connected to the remote UE by the PC5.

In this case, the relay UE preferably notifies the remote UE of information related to the connection state of the relay UE. For example, the relay UE may notify the remote UE of information related to the connection state of the relay UE in the PC5-RRC connection process in step ST1411. Alternatively, after the PC5-RRC connection process, the relay UE may provide notification of information related to the connection state of the relay UE using PC5-RRC signaling. In this way, the remote UE can recognize the connection state between the relay UE and the NW. If the relay UE is in the RRC connection state to the NW, the remote UE that has performed the RRC connection release process with gNB#2 in step ST1408 can immediately notify gNB#1 of an RRC setup request in step ST1417 to activate the RRC connection process.

In this way, the remote UE in the RRC connection state with gNB#2 can transition to the RRC connection state with gNB#1. As a result, the remote UE can communicate with gNB#1 via the relay UE. In addition, gNB#2 can recognize the connection state between the remote UE and the relay UE, and thus can release the RRC connection of the remote UE at an appropriate timing. In addition, the remote UE can recognize the connection state of the relay UE with gNB#1 and thus can make the RRC setup request to gNB#1 through an appropriate process at an appropriate timing.

Another method for releasing the RRC connection of the remote UE will be disclosed.

The remote UE may notify the connected NW of a connection release request. If the remote UE is in an RRC connection with gNB#2, the remote UE may notify gNB#2 of the connection release request. The connection release request may include information indicating that the reason of the release is to connect to the NW via the relay UE. This information may be included in the connection release request as reason information. The connection release request may be, for example, an RRC connection release request and/or a CM connection release request.

gNB#2 may determine whether to release the RRC connection with the remote UE using the connection release request received from the remote UE. In response to gNB#2 determining to release the RRC connection with the remote UE, gNB#2 starts a process of releasing the RRC connection from the connected remote UE. For example, the remote UE notifies gNB#2 of an RRC connection release request, and gNB#2 determines to release the RRC connection with the remote UE using the received RRC connection release request. gNB#2 performs the RRC connection release process for the remote UE.

Preferably, as a method for notification of the connection release request from the remote UE to the NW, the methods for notification of the RRC connection request from the relay UE to the NW disclosed above are appropriately applied.

RRC signaling may be used to activate the RRC connection release process from gNB#2 to the remote UE. An RRC release message may be used as the RRC signaling.

Another method for releasing the RRC connection of the remote UE will be disclosed.

The remote UE may release the RRC connection with the NW by itself. That is, the remote UE performs the RRC connection release process with the NW. For the determination of the RRC connection release, the above-described determination methods for gNB#2 may be appropriately applied. The NW, for example, gNB#2, cannot recognize whether the remote UE has released the RRC connection with gNB#2. Being unable to recognize whether the RRC connection with the remote UE has been released, the NW needs to continue holding the resources for connection with the remote UE. This results in wasted resources and reduced resource use efficiency. Disclosed below is a method for solving this problem.

If there has been no communication with the remote UE for a predetermined period, the NW performs the connection release process with the remote UE. In other words, if there has been no communication with the remote UE in the RRC connection for a predetermined period, gNB#2 performs the connection release process with the remote UE in gNB#2. For example, gNB#2 releases the resources for the RRC connection with the remote UE. For example, for example, gNB#2 resets the protocol for the RRC connection with the remote UE. The predetermined period may be managed by a timer. In this way, it is possible to avoid wasteful use of resources in gNB#2.

By adopting the methods disclosed in the present embodiment, even when the remote UE is in the RRC connection state with gNB#2, the RRC connection state in the remote UE can be switched to RRC _IDLE, and the remote UE can establish an RRC connection with gNB#1 via the relay UE. As a result, the remote UE can communicate with gNB#1 via the relay UE.

First Modification of First Embodiment.

The present modification discloses another method for solving the problem described in the first embodiment.
In the communication system according to the present modification, the remote UE is caused to perform handover (HO) between the gNB to which the remote UE is connected and the gNB to which the relay UE is connected. That is, the remote UE is caused to perform HO between gNB#2 and gNB#1. This eliminates the need for the transition of the remote UE to RRC _IDLE. The connection destination can be changed from gNB#2 to gNB#1 while the remote UE remains in the RRC_CONNECTED state.
A specific method for causing the remote UE to perform HO between gNB#2 and gNB#1 will be disclosed.

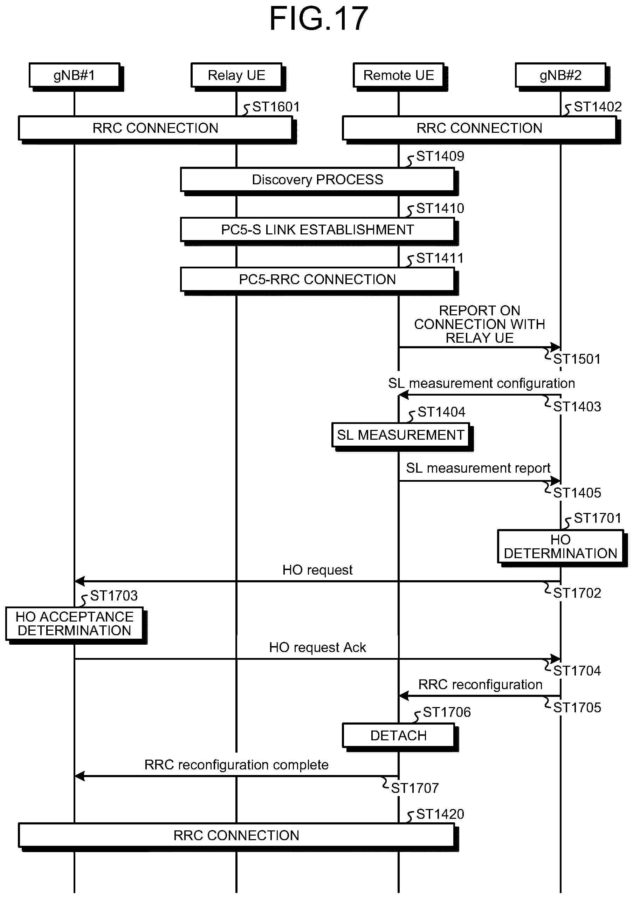

FIG. 17 is a sequence diagram illustrating an example of a method for causing the remote UE to perform HO between the gNB to which the remote UE is connected and the gNB to which the relay UE is connected according to the first modification of the first embodiment. In FIG. 17, steps identical to those in FIG. 14, 15, or 16 are denoted by the same step numbers, and descriptions already provided are omitted.
In steps ST1403 to ST1405, gNB#2 sets the SL measurement configuration for the remote UE. In addition, the remote UE performs SL measurement. The remote UE reports the SL measurement result to gNB#2. Regarding the SL measurement, preferably, the methods disclosed in the first embodiment are appropriately applied. Note that the remote UE may perform DL measurement in addition to SL measurement. In this case, gNB#2 sets the DL measurement configuration for the remote UE. The remote UE performs DLL measurement. The remote UE reports the DL measurement result to gNB#2. Regarding the DL measurement, preferably, methods described in Non Patent Literature 19 (3GPP TS38.331) are appropriately applied.
In step ST1701, gNB#2 that has received the report of the SL measurement result determines whether to cause the remote UE to perform HO from gNB#2 to gNB#1; in the example illustrated in FIG. 17, determines to cause the remote UE to perform HO. For the determination, the SL measurement result received from the remote UE may be used. The DL measurement result may also be used. For example, when the SL reception quality from the relay UE in the remote UE is higher than the DL reception quality from gNB#2, gNB#2 may determine the implementation of HO to gNB#1 via the relay UE.
gNB#2 may determine whether the implementation of HO of the remote UE to gNB#1 is possible or whether to cause the remote UE to perform HO using information indicating whether the remote UE is connected to the relay UE or whether the relay UE is connected to gNB#1.
In this case, the relay UE notifies the remote UE of information related to the connection state of the relay UE. The remote UE notifies gNB#2 of information related to the connection state in the PC5 between the remote UE and the relay UE and/or information related to the connection state of the relay UE. Using the information related to the connection state in the PC5 between the remote UE and the relay UE and/or the information related to the connection state of the relay UE received from the remote UE, gNB#2 may determine whether the implementation of HO of the remote UE to gNB#1 is possible or whether to cause the remote UE to perform HO.
For example, when the PC5-RRC connection between the relay UE and the remote UE is completed and the relay UE is in the RRC connection state with gNB#1, gNB#2 may determine that the implementation of HO of the remote UE to gNB#1 is possible. For example, gNB#2 may additionally determine to cause the remote UE to perform HO to gNB#1 using the SL and DL communication quality measurement results from the remote UE described above.
The remote UE may connect to a plurality of relay UEs. Each relay UE may notify the remote UE of information related to the connection state of the relay UE. The remote UE may notify gNB#2 of information related to the PC5 connection states with the plurality of relay UEs and/or information related to the connection states of the plurality of relay UEs. By receiving the information from the remote UE, gNB#2 can recognize the connection state of each relay UE to which the remote UE is connected.
For example, the remote UE may measure the SL communication quality of the plurality of relay UEs, and notify gNB#2 of the measurement results. The gNB may determine to cause the remote UE to perform HO and to which gNB the remote UE is caused to perform HO using the SL communication quality measurement results, the DL communication quality measurement results, and the information related to the connection states described above.
gNB#2 may determine to which gNB the remote UE is caused to perform HO using information related to the service supported by the gNB to which the relay UE is connected (for example, the identifier of the service). gNB#2 may determine to which gNB the remote UE is caused to perform HO based on the relay UE connected thereto using information related to the service supported by the relay UE. In this way, for example, the remote UE can be caused to perform HO to the relay UE and the gNB that support the service performed by the remote UE.
The relay UE may notify the remote UE of the measurement result of the DL reception quality from the connected gNB. The remote UE notifies gNB#2 of the measurement result, received from the relay UE, of the DL reception quality from the gNB to which the relay UE is connected. gNB#2 may determine to which gNB the remote UE is caused to perform HO based on the relay UE connected thereto using the measurement result, received via the remote UE, of the DL reception quality from the gNB to which the relay UE is connected. In this way, for example, the remote UE can be caused to perform HO to the gNB connected with better communication quality to the relay UE. After HO, good communication quality can be obtained in the communication with the gNB via the relay UE.

Using the foregoing determination method, gNB#2 determines the gNB to which the remote UE is caused to perform HO. In FIG. 17, the determined gNB is gNB#1. In step ST1701, gNB#2 determines to cause the remote UE to perform HO to gNB#1. In step ST1702, gNB#2 notifies gNB#1 of a HO request. gNB#2 may give notification of the request by Xn signaling. The notification may be given using a HO request message.

Six examples of information included in the HO request are disclosed below.

  (1) Identifier of the UE that performs HO.
  (2) Information indicating that HO is based on the connection via the relay UE.
  (3) Identifier of the relay UE.
  (4) Identifier of the gNB as the HO source.
  (5) Identifier of the gNB as the HO destination.
  (6) Combinations of (1) to (5).

Item (1) specifies the UE that performs HO. The UE that performs HO may be a UE to which the gNB as the HO destination is not directly connected. Item (2) is preferably information indicating that the requested HO is a HO to the gNB connected via the relay UE. As a result, gNB#1 can recognize that the requested HO is a HO in which the UE establishes a connection via the relay UE. Item (3) specifies through which UE the connection with the UE to be subjected to HO is established in the requested HO. As a result, gNB#1 can determine through which UE the connection with the HO target UE is established. Item (4) specifies the gNB as the HO source (may be referred to as the source gNB). Item (5) specifies the gNB as the HO destination (may be referred to as the target gNB).

gNB#1 that has received the HO request from gNB#2 determines in step ST1703 whether to accept the HO of the UE subjected to HO. gNB#1 may determine whether to accept the remote UE subjected to HO using information indicating whether the remote UE is connected to the relay UE and whether the relay UE is connected to gNB#1.

In this case, gNB#2 notifies gNB#1 of information related to the connection state in the PC5 between the remote UE and the relay UE. gNB#2 may notify gNB#1 of information related to the connection state of the relay UE. gNB#1 may determine whether to accept the HO of the remote UE subjected to HO using the information related to the connection state in the PC5 between the remote UE and the relay UE and/or the information related to the connection state of the relay UE received from gNB#2. gNB#1 may determine the connection state with the relay UE by itself. Preferably, gNB#1 determines the connection state with the relay UE using the identifier of the relay UE included in the HO request provided by gNB#2.

For example, when the PC5-RRC connection between the relay UE and the remote UE is completed and the relay UE is in the RRC connection state with gNB#1, gNB#1 may determine to accept the HO of the remote UE.

For example, when the relay UE is not in the RRC connection state with gNB#1, gNB#1 may activate the RRC connection process for the remote UE. Upon performing the RRC connection process with the remote UE, gNB#1 may determine to accept the HO of the remote UE.

gNB#1 may determine the acceptance of the HO of the remote UE using the supported service or the reception quality between gNB#1 and the relay UE. A similar effect can thus be obtained.

In response to gNB#1 determining to accept the HO of the remote UE, gNB#1 notifies gNB#2 of a HO request response in step ST1704. For the notification, a HO request Ack message may be used. Xn signaling may be used. Upon determining to accept the HO of the remote UE, gNB#1 may set the RRC configuration for the remote UE. gNB#1 may include the RRC configuration in the HO request response. Upon determining not to accept the HO, gNB#1 notifies gNB#2 of a HO request rejection. The HO request response and the HO request rejection may include information included in the HO request disclosed above. gNB#2 receives the HO request response from gNB#1, whereby gNB#2 can determine the transmission to the remote UE of a HO instruction to gNB#1.

gNB#2 that has received the HO request response from gNB#1 notifies the remote UE of the HO instruction in step ST1705. The HO instruction may be a notification of information on the connection destination change to gNB#1. Notification of the change of the RRC configuration accompanying the change of the connection destination to gNB#1 may be given. The RRC reconfiguration notification may be used for the notification of the HO instruction. RRC signaling may be used. RRCreconfiguration message may be used. The HO instruction may include the RRC configuration information set for the remote UE by gNB#1 disclosed above. The HO instruction may also include information included in the HO request disclosed above. The remote UE can start the process of changing the connection destination gNB by receiving the HO instruction from gNB#2 to gNB#1. The remote UE can set the RRC configuration of gNB#1.

The remote UE that has received the HO instruction from gNB#2 detaches gNB#2, and establishes an RRC connection with gNB#1, which is the HO destination gNB, via the relay UE. Preferably, the remote UE sets the RRC configuration using the RRC configuration of gNB#1 provided by gNB#2 through the HO instruction, and establishes the RRC connection with gNB#1 via the relay UE. The relay UE may be a relay UE included in the HO instruction received from gNB#2. In FIG. 17, the remote UE that has received the HO instruction from gNB#2 detaches gNB#2 in step ST1706, and notifies gNB#1, which is the HO destination gNB, of the completion of the RRC reconfiguration via the relay UE in step ST1707. For the notification, an RRC reconfiguration complete message may be used. As a result, the remote UE establishes the RRC connection with gNB#1.

As a method for notifying gNB#1 of the completion of the RRC reconfiguration from the remote UE via the relay UE, preferably, the methods for notification of the RRC connection request and the methods for notification of the completion of the RRC setup disclosed in the first embodiment above are appropriately applied.

In this way, the remote UE can be caused to perform HO from gNB#2 to gNB#1. The remote UE can change the connection from gNB#2 to gNB#1 via the relay UE while remaining in the RRC connection state.

A method for scheduling SL communication resources for use in the RRC reconfiguration completion notification to gNB#1 will be disclosed. The scheduling of the SL communication resources is performed by gNB#2. gNB#2 may notify the remote UE of the scheduling information together with the HO instruction. The RRC reconfiguration notification may include the scheduling information. In this way, the remote UE can transmit the RRC reconfiguration completion notification to gNB#1 via the relay UE using the received SL communication resources. Because gNB#2 performs scheduling, interference with other UEs within the coverage of gNB#2 can be reduced.

As another method, the scheduling of the SL communication resources may be performed by gNB#1. gNB#1 notifies the remote UE of the scheduling information of the SL communication resources via gNB#2. For the notification, a HO request response from gNB#1 to gNB#2 and a HO instruction from gNB#2 to the remote UE may be used. In this way, the remote UE can transmit the RRC reconfiguration completion notification to gNB#1 via the relay UE using the received SL communication resources. Because gNB#1 performs scheduling, interference with UEs connected to gNB#1 can be reduced.

As another method, the remote UE may perform selection using the SL-related information of gNB#1. The SL-related information may be included in the system information. A resource pool is preferably used as the SL-related information. The remote UE acquires the SL-related information from gNB#1. The SL-related information may be acquired via gNB#2 or via the relay UE. As a method for acquisition via gNB#2, for example, the information may be given as a notification included in the HO request response from gNB#1 to gNB#2 and the HO instruction from gNB#2 to the remote UE, and the remote UE may acquire the SL-related information from the notification. As a method for acquisition via the relay UE, for example, gNB#1 may notify the relay UE in the RRC connection process with the relay UE, and the relay UE may notify the relay UE in the PC5-RRC connection process with the remote UE. In this way, the remote UE can acquire the SL-related information of gNB#1. The SL resource pool of gNB#1 can be used.

As another method, an exception resource pool for SL may be used. The exception resource pool may be given as a notification from gNB#1 to the remote UE. The information may be given to the remote UE as a notification included in the SL-related information of gNB#1. Alternatively, the exception resource pool may be given as a notification from gNB#2 to the remote UE. The exception resource pool may be given to the remote UE as a notification included in the SL-related information of gNB#2. The exception resource pool for SL is preferably used at such a state transition timing. The exception resource pool is valid as a resource pool that can be used before scheduling is performed from gNB#1.

In this way, the remote UE can notify gNB#1 of the completion of the RRC reconfiguration via the relay UE. gNB#1 can recognize that the remote UE has established the RRC connected with gNB#1.

Data forwarding may be performed at the time of HO between gNB#2 and gNB#1 connected via the relay UE. A method for data forwarding in the HO between gNB#2 and gNB#1 connected via the relay UE will be disclosed.

Data forwarding of DL data will be disclosed. gNB#2 transmits DL data to the remote UE until notifying the remote UE of the HO instruction. When notifying the remote UE of the HO instruction, gNB#2 buffers the DL data that has not reached the remote UE. After notifying the remote UE of the HO instruction, gNB#2 buffers the DL data newly generated. gNB#2 notifies gNB#1 of SN STATUS TRANSFER. gNB#2 notifies gNB#1 of the DL data transmission state included in SN STATUS TRANSFER. As the DL data transmission state, a sequence number (SN) that gNB#2 assigns to new data that does not yet have a SN may be indicated. gNB#2 transfers the buffered DL data and the newly generated DL data to gNB#1. End Marker is allocated to the last DL data to gNB#1. Upon receiving the last DL data, gNB#2 transfers all the data to gNB#1. gNB#1 buffers the DL data received from gNB#2.

gNB#1 transmits the buffered DL data to the remote UE after completing the RRC connection to the remote UE (or after receiving the RRC reconfiguration completion from the remote UE). gNB#1 transmits DL data to the remote UE until transmitting the DL data allocated the End Marker. If there is DL data to the remote UE newly received from the UPF, gNB#1 transmits the newly received DL data to the remote UE. DL data transmission from gNB#1 to the remote UE is performed via the relay UE connected to the remote UE.

In this way, the data forwarding of DL data is enabled at the time of HO between gNB#2 and gNB#1 connected via the relay UE. The loss of DL data during the HO can be reduced, and the degradation of the communication quality due to the movement of the remote UE can be avoided.

Another method for data forwarding of DL data at the time of HO between gNB#2 and gNB#1 connected via the relay UE will be disclosed. Differences from the method disclosed above are mainly disclosed.

gNB#1 transmits the buffered DL data to the relay UE after completing the RRC connection to the remote UE (or after receiving the RRC reconfiguration completion from the remote UE). gNB#1 transmits DL data to the relay UE until transmitting the DL data allocated the End Marker. The relay UE buffers the DL data received from gNB#1. The relay UE transmits the buffered DL data to the remote UE after completing the PC5-RRC connection with the remote UE. The relay UE transmits DL data to the remote UE until transmitting the DL data allocated the End Marker. After completing the RRC connection to the remote UE (or after receiving the RRC reconfiguration completion from the remote UE), if there is DL data to the remote UE newly received from the UPF, gNB#1 transmits the newly received DL data to the relay UE. After completing the PC5-RRC connection with the remote UE, the relay UE transmits the DL data received from gNB#1 to the remote UE.

The disclosed data forwarding method specifies that gNB#1 transmits the buffered DL data to the relay UE after completion of the RRC connection to the remote UE (or after receiving the RRC reconfiguration completion from the remote UE). However, in a case where the RA process and/or the RRC connection have already been completed between the relay UE and gNB#1, gNB#1 may immediately transmit the DL data transferred from gNB#2 and the DL data newly received from the UPF to the relay UE. That is, gNB#1 buffers the DL data to the remote UE transferred from gNB#2 and the DL data to the remote UE newly received from the UPF until the RA process and/or the RRC connection are completed between the relay UE and gNB#1. After completion of the RA process and/or the RRC connection between the relay UE and gNB#1, gNB#1 transmits the buffered DL data to the relay UE.

The disclosed data forwarding method specifies that the relay UE transmits the DL data received from gNB#1 and buffered to the remote UE after the PC5-RRC connection with the remote UE is completed. However, in a case where the PC5-RRC connection has already been completed between the remote UE and the relay UE, the relay UE may immediately transmit the DL data received from gNB#1 to the remote UE. That is, the relay UE buffers the DL data to the remote UE received from gNB#1 until the PC5-RRC connection with the remote UE is completed. The relay UE transmits the buffered DL data to the remote UE after the PC5-RRC connection with the remote UE.

In this way, the DL data can be transmitted from gNB#1 to the relay UE early. Therefore, the DL data can also be transmitted from the relay UE to the remote UE early. As a result, it is possible to reduce the delay of DL data transmission and reception due to HO.

Processing of UL data will be disclosed. The remote UE transmits UL data to gNB#2 until detaching from gNB#2. The remote UE may notify gNB#1 of the reception state of the UL data including the SN of the UL data that has not reached gNB#2 by detaching from gNB#2. In this way, gNB#1 can determine which UL data the remote UE needs to retransmit. When detaching from gNB#2, the remote UE buffers the UL data that has not reached gNB#2. The remote UE buffers the newly generated UL data after detaching from gNB#2 until the completion of the RRC connection (or the completion of the RRC reconfiguration) to gNB#1. After completing the RRC connection (or after completing the RRC reconfiguration) to gNB#1, the remote UE transmits the buffered UL data and the newly generated UL data to gNB#1. At this time, the remote UE transmits the UL data to gNB#1 via the relay UE. gNB#1 may cause the remote UE to transmit the data to be retransmitted.

In this way, at the time of HO between gNB#2 and gNB#1 connected via the relay UE, the loss of UL data during the HO can be reduced, and the degradation of the communication quality due to the movement of the remote UE can be avoided.

Another method for processing UL data at the time of HO between gNB#2 and gNB#1 connected via the relay UE will be disclosed. Differences from the method disclosed above are mainly disclosed.

The remote UE buffers the newly generated UL data after detaching from gNB#2 until the completion of the PC5-RRC connection with the relay UE. After completing the PC5-RRC connection with the relay UE, the remote UE transmits the buffered UL data and the newly generated UL data to the relay UE. The relay UE buffers the UL data received from the remote UE until the RA process and/or the RRC connection with gNB#1 are completed. After completing the RA process and/or the RRC connection with gNB#1, the relay UE transmits the buffered UL data and the UL data newly received from the remote UE to gNB#1.

The disclosed method of processing UL data specifies that the remote UE buffers the newly generated UL data until the PC5-RRC connection with the relay UE is completed. However, in a case where the PC5-RRC connection between the remote UE and the relay UE has already been completed, the remote UE may immediately transmit the newly generated UL data to the relay UE. That is, although the disclosed method specifies that the relay UE buffers the UL data received from the remote UE until the RA process and/or the RRC connection with gNB#1 are completed, in a case where the RA process or the RRC connection has already been completed between the relay UE and gNB#1, the relay UE may immediately transmit the UL data received from the remote UE to gNB#1.

In this way, the UL data can be transmitted from the remote UE to the relay UE early. Therefore, the UL data can also be transmitted from the relay UE to gNB#1 early. As a result, it is possible to reduce the delay of UL data transmission and reception due to HO.

By adopting the methods disclosed in the present modification, the remote UE connected to gNB#2 can connect to gNB#1 via the relay UE while remaining in the RRC connection state. The remote UE can communicate with gNB#1 via the relay UE. Since the HO process is available between the gNB directly connected and the gNB connected via the relay UE, communication continuity can be maintained in the HO. In addition, in the HO, since the UE does not need to transition to RRC_IDLE, it is possible to reduce the delay due to the HO process.

The remote UE connected to gNB#1 via the relay UE may be caused to perform HO to gNB#2. As a result, the connection destination can be changed from gNB#1 to gNB#2 while the remote UE remains in the RRC_Connected state.

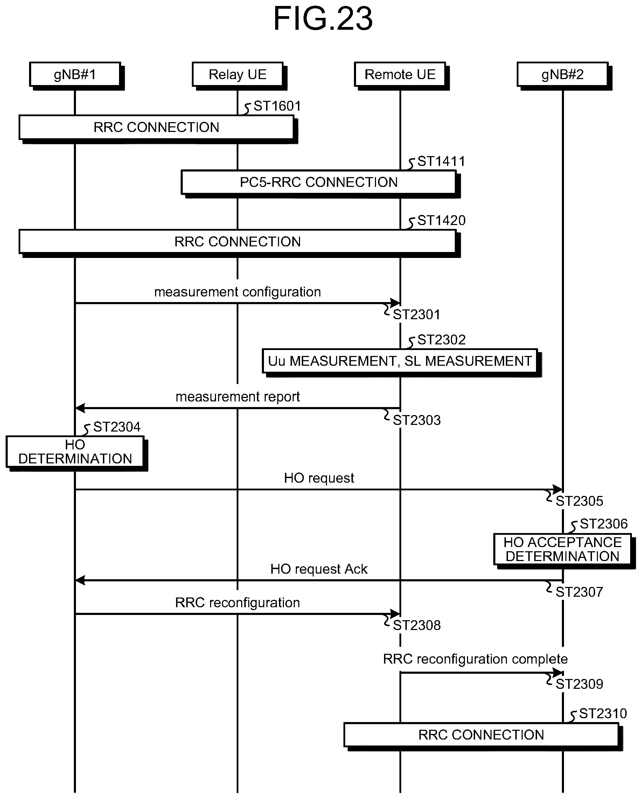

FIG. 23 is a sequence diagram illustrating an example of a method for causing the remote UE to perform HO from gNB#1 to gNB#2 according to the first modification of the first embodiment. In FIG. 23, steps identical to those in FIG. 17 are denoted by the same step numbers, and descriptions already provided are omitted. In step ST1601, the relay UE is in an RRC connection state with gNB#1. In step ST1411, the remote UE establishes a PC5-RRC connection with the relay UE. In step ST1420, the remote UE is in an RRC connection state with gNB#1 via the relay UE.

In step ST2301, gNB#1 sets the Uu measurement configuration for the remote UE. The Uu measurement may be DL measurement. Preferably, notification of the Uu measurement configuration is given via the relay UE. In this way, the remote UE that performs SL communication with the relay UE can notify gNB#1 of the Uu measurement result. The Uu measurement configuration and the SL measurement configuration may be set in combination. Alternatively, the SL measurement configuration may be included in the Uu measurement configuration. For example, an event of comparing the SL measurement result and the Uu measurement result may be provided as an event for Uu measurement result report. For example, an event that the SL reception quality is higher than the reception quality of the serving cell may be provided as a predetermined condition. As the events, the events for settings of SL measurement result report disclosed in the first embodiment may be appropriately applied. In this way, SL measurement can be included as the Uu measurement configuration. Measurement results can be flexibly reported. gNB#1 can acquire the Uu measurement result and the SL measurement result in the remote UE.

In step ST2302, the remote UE performs Uu measurement and SL measurement using the Uu measurement configuration and the SL measurement configuration provided from gNB#1. In step ST2303, the remote UE notifies gNB#1 of the Uu measurement result and the SL measurement result according to the settings of measurement result report provided from gNB#1 in step ST2301. The notification is preferably given via the relay UE. In this way, gNB#1 can acquire the Uu measurement result and the SL measurement result from the remote UE.

In step ST2304, gNB#1 determines whether to cause the remote UE to perform HO from gNB#1 and to which gNB the remote UE is caused to perform HO. For the determination, the Uu measurement result received from the remote UE may be used. In addition, the SL measurement result may be used. For example, when the DL reception quality from gNB#2 in the remote UE is higher than the SL reception quality from the relay UE, gNB#1 may determine the implementation of HO to gNB#2.

gNB#1 may determine whether the implementation of HO of the remote UE to gNB#2 is possible or whether to cause the remote UE to perform HO using the communication quality with the relay UE. For example, gNB#1 sets the Uu measurement configuration for the relay UE. gNB#1 receives the Uu measurement result report from the relay UE. The Uu measurement may be the measurement of DL reception quality in the relay UE. Using the Uu measurement result received from the relay UE, gNB#1 determines whether to cause the remote UE to perform HO to gNB#2. For example, when the DL reception quality from the serving cell in the relay UE is lower than a predetermined threshold, gNB#1 may determine to cause the remote UE to perform HO to gNB#2. gNB#1 may consider the DL reception quality measurement result of a neighboring cell. For example, when the DL reception quality from the serving cell and the neighboring cell in the relay UE is lower than a predetermined threshold, gNB#1 may determine to cause the remote UE to perform HO to gNB#2. In this manner, by using the communication quality of Uu with the relay UE, gNB#1 can cause the remote UE to perform HO from gNB#1 to gNB#2 when the communication quality with the relay UE deteriorates. gNB#1 can cause a change from the communication with gNB#1 via the relay UE to the direct communication with gNB#2. It is possible to improve communication quality between the remote UE and the NW.

In step ST2304, gNB#1 determines to cause the remote UE to perform HO to gNB#2. In step ST2305, gNB#1 notifies gNB#2 of a HO request. The notification may be given by Xn signaling. A HO request message may be used. The HO request may include information included in the HO request disclosed above.

gNB#2 that has received the HO request from gNB#1 determines in step ST2306 whether to accept the HO of the UE subjected to HO. gNB#2 may determine whether to accept the remote UE subjected to HO using information indicating whether the remote UE is connected to the relay UE and whether the relay UE is connected to gNB#1.

gNB#1 may notify gNB#2 of information indicating that the remote UE is connected via the relay UE. gNB#2 may determine whether to accept the HO of the remote UE subjected to HO using the information indicating that the remote UE is connected via the relay UE received from gNB#1.

gNB#2 may determine the acceptance of the HO of the remote UE using the supported service. A similar effect can thus be obtained.

In response to gNB#2 determining to accept the HO of the remote UE, gNB#2 notifies gNB#1 of a HO request response in step ST2307. For the notification, a HO request Ack message may be used. Xn signaling may be used. Upon determining to accept the HO of the remote UE, gNB#2 may set the RRC configuration for the remote UE. gNB#2 may include the RRC configuration in the HO request response. In response to gNB#2 determining not to accept the HO of the remote UE, gNB#2 notifies gNB#1 of a HO request rejection. The HO request response and the HO request rejection may include information included in the HO request disclosed above. gNB#1 receives the HO request response from gNB#2, whereby gNB#1 can determine the transmission to the remote UE of a HO instruction to gNB#2.

gNB#1 that has received the HO request response from gNB#2 notifies the remote UE of the HO instruction in step ST2308. Preferably, gNB#1 notifies the remote UE of the HO instruction via the relay UE. The HO instruction may be a notification of information on the connection destination change to gNB#2. The HO instruction may be the change of the RRC configuration accompanying the change of the connection destination to gNB#2. The RRC reconfiguration notification may be used for the notification of the HO instruction. RRC signaling may be used. RRCreconfiguration message may be used. The HO instruction may include the RRC configuration information set for the remote UE by gNB#2 disclosed above. The HO instruction may also include information included in the HO request disclosed above. The remote UE receives the HO instruction from gNB#1 to gNB#2. The remote UE receives the HO instruction from gNB#1 to gNB#2 via the relay UE. The relay UE receives from gNB#1 the HO instruction for the remote UE to gNB#2. The relay UE transmits to the remote UE the HO instruction to gNB#2 received from gNB#1. The remote UE receives from the relay UE the HO instruction to gNB#2. In this manner, the remote UE can start the process of changing the connection destination gNB by receiving the HO instruction from gNB#1 to gNB#2 via the relay UE. The remote UE can set the RRC configuration of gNB#2.

The remote UE that has received the HO instruction from gNB#1 notifies gNB#2 that is the HO destination gNB of the RRC reconfiguration completion in step ST2309. For the notification, an RRC reconfiguration complete message may be used. As a result, the remote UE establishes the RRC connection with gNB#2. Preferably, the remote UE sets the RRC configuration using the RRC configuration of gNB#2 provided by gNB#1 through the HO instruction, and establishes the RRC connection with gNB#1 via the relay UE. As a result, the RRC connection between the remote UE and gNB#2 is established in step ST2310.

The remote UE that has received the HO instruction from gNB#1 may perform a process of releasing the resources required for the RRC connection with gNB#1. The remote UE that has received the HO instruction from gNB#1 may perform conventional processing on the HO source gNB.

The remote UE that has received the HO instruction from gNB#1 may release the RRC connection with the relay UE. The remote UE that has received the HO instruction from gNB#1 may release the radio bearer (RB) with the relay UE. In this case, PC5 processing in the remote UE is unnecessary, which allows for reduced power consumption. Alternatively, the remote UE that has received the HO instruction from gNB#1 may not release the RRC connection with the relay UE. The remote UE that has received the HO instruction from gNB#1 may not release the radio bearer (RB) with the relay UE. In this case, the remote UE can perform communication with the relay UE early when communication with the relay UE is necessary.

In this way, the remote UE can be caused to perform HO from gNB#1 to gNB#2. The remote UE can change the connection from gNB#1 via the relay UE to gNB#2 while remaining in the RRC connection state.

The remote UE may be caused to perform HO from the gNB via the relay UE to another gNB via the relay UE. The remote UE may be caused to perform HO from the gNB via the relay UE to another gNB via another relay UE. Preferably, the methods disclosed in the present specification are appropriately applied. According to the connection state of the remote UE, the radio wave propagation environment of the Uu between the remote UE and the relay UE and between the remote UE and the gNB, and the radio wave propagation environment of the SL between the remote UE and the relay UE, it is possible to cause the remote UE to perform HO to a gNB suitable for communication.

Data forwarding of DL data will be disclosed. gNB#1 transmits DL data to the remote UE until notifying the remote UE of the HO instruction via the relay UE. When notifying the remote UE of the HO instruction, gNB#1 buffers the DL data that has not reached the remote UE. After notifying the remote UE of the HO instruction, gNB#1 buffers the DL data newly generated. gNB#1 notifies gNB#2 of SN STATUS TRANSFER. gNB#1 notifies gNB#2 of the DL data transmission state included in SN STATUS TRANSFER. As the DL data transmission state, a SN that gNB#1 assigns to new data that does not yet have a SN may be indicated. gNB#1 transfers the buffered DL data and the newly generated DL data to gNB#2. End Marker is allocated to the last DL data to gNB#1. Upon receiving the last DL data, gNB#1 transfers all the data to gNB#2. gNB#2 buffers the DL data received from gNB#1.

gNB#2 transmits the buffered DL data to the remote UE after completing the RRC connection to the remote UE (or after receiving the RRC reconfiguration completion from the remote UE). gNB#2 transmits DL data to the remote UE until transmitting the DL data allocated the End Marker. If there is DL data to the remote UE newly received from the UPF, gNB#2 transmits the newly received DL data to the remote UE.

In this way, the data forwarding of DL data is enabled at the time of HO between gNB#1 and gNB#2 connected via the relay UE. The loss of DL data during the HO can be reduced, and the degradation of the communication quality due to the movement of the remote UE can be avoided.

Processing of UL data will be disclosed. The remote UE transmits UL data to gNB#1 until receiving the HO instruction from gNB#1. The remote UE may notify gNB#2 of the reception state of the UL data including the SN of the UL data that has not reached gNB#1. gNB#2 can determine which UL data the remote UE needs to retransmit. When receiving the HO instruction from gNB#1, the remote UE buffers the UL data that has not reached gNB#1. The remote UE buffers the newly generated UL data after receiving the HO instruction from gNB#1 until the completion of the RRC connection (or the completion of the RRC reconfiguration) to gNB#2. After completing the RRC connection (or after completing the RRC reconfiguration) to gNB#2, the remote UE transmits the buffered UL data and the newly generated UL data to gNB#2. gNB#2 may cause the remote UE to transmit the data to be retransmitted.

In this way, at the time of HO between gNB#1 connected via the relay UE and gNB#2, the loss of UL data during the HO can be reduced, and the degradation of the communication quality due to the movement of the remote UE can be avoided.

The foregoing example discloses the use of the SL measurement result in the remote UE for determination of HO. The determination of HO need not necessarily be based on the SL measurement result. For example, HO may be determined using the load status of gNB#2. For example, HO may be determined based on a change in QoS required for communication. For example, HO may be determined based on an instruction from the CN. For example, HO may be determined based on a request from gNB#1. For example, HO may be determined based on a request from the remote UE. For example, HO may be determined based on a request from the relay UE. In this way, it is possible to perform the HO suitable for the radio wave propagation environment between gNBs including a gNB connectable via the relay UE. It is possible to improve communication quality between the remote UE and the NW.

In a situation where the remote UE is in an RRC connection with gNB#1 via the relay UE, if a radio link failure (RLF) occurs between the relay UE and gNB#1, the RRC connection between the remote UE and gNB#1 may be released. The relay UE that has detected the RLF with gNB#1 may notify the remote UE of an RRC connection release request with gNB#1. The request may include cause information. The cause information preferably includes information indicating that the RLF is between gNB#1 and the relay UE. The remote UE that has received the RRC connection release request from the relay UE releases the configuration required for the RRC connection with gNB#1. In this way, when the RLF occurs between the relay UE and gNB#1, it is not necessary to maintain the resources required for the RRC connection with gNB#1 in the remote UE, and the utilization efficiency of resources can be improved.

The foregoing case in which the radio link failure (RLF) occurs between the relay UE and gNB#1 may be replaced with a case in which the RRC connection is released between the relay UE and gNB#1. An example thereof is a case in which the RRC connection is released due to the RLF. In this manner, a similar effect can be obtained.

After the occurrence of RLF between the relay UE and gNB#1, if an RRC connection can be established to the same gNB again or to another gNB before the RRC connection is released, the remote UE may not be requested to release the RRC connection. In this manner, as the RRC connection becomes available between the relay UE and the gNB, communication between the remote UE and the gNB can be executed early.

PDCP retransmission may be performed in the communication between gNB#1 and the remote UE via the relay UE. In the PDCP, unreceived data is retransmitted. If the data transmitted to the remote UE via the relay UE remains unreceived by the remote UE, gNB#1 transmits the data to the remote UE again via the relay UE. If the data transmitted to gNB#1 via the relay UE remains unreceived by gNB#1, the remote UE transmits the data to gNB#1 again via the relay UE. In this way, communication quality can be improved in the communication between gNB#1 and the remote UE via the relay UE.

Data reception state may be reported in the communication between gNB#1 and the remote UE via the relay UE. As the report of the data reception state, PDCP Status may be reported. For example, the remote UE that has received data from gNB#1 via the relay UE reports the data reception state to gNB#1 via the relay UE. For example, gNB#1 that has received data from the remote UE via the relay UE reports the data reception state to the remote UE via the relay UE. PDCP SN may be used as the data reception state. In the case of transmission by gNB#1, the PDCP SN allocated by gNB#1 is preferably used. In the case of transmission by the remote UE, the PDCP SN allocated by the remote UE is preferably used. The PDCP SN may be used for determining whether the data has arrived. For example, the PDCP SN of the first to last data that have not arrived may be reported as the data reception state.

In this way, gNB#1 or the remote UE that has received the report of the data reception state can recognize the data transmission state. gNB#1 or the remote UE can recognize the unreached data. gNB#1 or the remote UE that has received the report of the data reception state may retransmit the unreached data. Thus, by reporting the data reception state through PDCP Status report, for example, gNB#1 or the remote UE can retransmit the unreached data. Communication quality can be improved in the communication between gNB#1 and the remote UE via the relay UE.

Another method for solving the problem will be disclosed. Data reception state may be reported between the relay UE and the remote UE. As the report of the data reception state, PDCP Status may be reported. In the case of transmission by the relay UE, the PDCP SN allocated by the relay UE may be used. In the case of transmission by the remote UE, the PDCP SN allocated by the remote UE may be used. The relay UE or the remote UE that has received the report of the data reception state can recognize the data transmission state. The relay UE or the remote UE can recognize the unreached data. The relay UE or the remote UE that has received the report of the data reception state may retransmit the unreached data. Thus, by reporting the data reception state between the relay UE and the remote UE through PDCP Status report, for example, the relay UE or the remote UE can retransmit the unreached data. Communication quality can be improved in the communication between the relay UE and the remote UE.

The relay UE may notify gNB#1 of the data reception state with the remote UE. By receiving the reception state, gNB#1 can recognize whether the data communication between the relay UE and the remote UE has been reliably performed. gNB#1 can recognize the data transmission state using the data reception state between the relay UE and the remote UE received from the relay UE. gNB#1 may determine data retransmission to the remote UE. For example, gNB#1 may retransmit to the relay UE data that has not been transmitted from the relay UE to the remote UE. The relay UE can retransmit to the remote UE the retransmission data received from gNB#1. In this way, communication quality can be improved in the communication between gNB#1 and the remote UE via the relay UE.

Data reception state may be reported between gNB#1 and the relay UE. As the report of the data reception state, PDCP Status may be reported. In the case of transmission by gNB#1, the PDCP SN allocated by gNB#1 may be used. In the case of transmission by the relay UE, the PDCP SN allocated by the relay UE may be used. gNB#1 or the relay UE that has received the report of the data reception state can recognize the data transmission state. gNB#1 or the relay UE can recognize the unreached data. gNB#1 or the relay UE that has received the report of the data reception state may retransmit the unreached data. Thus, by reporting the data reception state between gNB#1 and the relay UE through PDCP Status report, for example, gNB#1 or the relay UE can retransmit the unreached data. Communication quality can be improved in the communication between gNB#1 and the relay UE.

The relay UE may notify the remote UE of the data reception state with gNB#1. By receiving the reception state, the remote UE can recognize whether the data communication between gNB#1 and the relay UE has been reliably performed. The remote UE can recognize the data transmission state using the data reception state between gNB#1 and the relay UE received from the relay UE. The remote UE may determine data retransmission to gNB#1. For example, the remote UE may retransmit to the relay UE data that has not been transmitted from the relay UE to gNB#1. The relay UE can retransmit to gNB#1 the retransmission data received from the remote UE. In this way, communication quality can be improved in the communication between gNB#1 and the remote UE via the relay UE.

The method of reporting the data reception state between the relay UE and the remote UE and the method of reporting the data reception state between gNB#1 and the relay UE may be combined. gNB#1 or the remote UE may determine data retransmission using the data reception state in each individual link of Uu and PC5. In addition, the relay UE may determine and perform data retransmission. For example, if the data of any one of the links has not arrived, the relay UE retransmits the data. If the data of both links has not arrived, retransmission is performed from gNB#1 or the remote UE. This method allows for a reduction in the delay of communication between gNB#1 and the remote UE via the relay UE. Communication quality can be further improved in the communication between gNB#1 and the remote UE via the relay UE.

The above methods may be appropriately applied to the data forwarding process in the HO of the remote UE between gNB#1 connected via the relay UE and gNB#2. The loss of data in the HO can be reduced.

Second Embodiment.

As described in the first embodiment, the relay UE and the remote UE may exist within the coverages of different gNBs. For example, in some cases where the remote UE exists at the edge of the coverage of gNB#2, the remote UE may have better reception quality with the relay UE than from gNB#2. In such cases, even when the remote UE is not in an RRC connection but in the RRC_IDLE state, its operation is unclear, resulting in the problem that processing in the RRC_IDLE state cannot be performed.

For example, it is unclear which gNB, gNB#2 or gNB#1 via the relay UE, the remote UE should camp on, from which gNB system information should be transmitted for use by the remote UE, from which gNB an SL communication resource pool (RP) should be transmitted for use by the remote UE, and the like, resulting in the problem that processing in the RRC_IDLE state cannot be performed.

The present embodiment discloses a method for solving this problem.

In order to solve this problem, the remote UE according to the present embodiment receives system information transmitted by gNB#2 serving the remote UE in its coverage. The system information may be MIB, SIB, or the like. The system information may include system information for SL communication. The remote UE may receive all the system information transmitted by gNB#2. The remote UE uses the system information received from gNB#2. The remote UE camps on gNB#2. Even though the remote UE may have better reception quality from the relay UE connectable or connected to the NW than from gNB#2, the remote UE receives the system information transmitted by gNB#2. The remote UE camps on gNB#2. In a case where the remote UE is in the coverage of a plurality of gNBs, preferably, a conventional method of cell selection or cell reselection is used to determine which gNB's system information the remote UE receives (see Non Patent Literature 32 (3GPP TS38.304)).

In this way, the remote UE in RRC_IDLE can determine from which gNB system information should be transmitted for use by the remote UE. Therefore, the remote UE can perform processing in RRC_IDLE.

Another method for solving the problem will be disclosed.

Until the discovery process of the relay UE is completed, the remote UE receives the system information transmitted by gNB#2 serving the remote UE in its coverage. The remote UE uses the system information received from gNB#2. The remote UE camps on gNB#2. After completion of the discovery process of the relay UE, the remote UE receives the system information transmitted by gNB#1 via the relay UE. The remote UE uses the system information transmitted by gNB#1. The remote UE may camp on gNB#1.

Preferably, the relay UE receives system information from gNB#1. The relay UE preferably notifies the remote UE of the system information received from gNB#1. In the discovery process, the relay UE may notify the remote UE of the system information of gNB#1. In this way, the remote UE can receive the system information of gNB#1 via the relay UE and use the system information.

By receiving the system information transmitted by gNB#1 after completion of the discovery process of the relay UE, the remote UE can use the system information of gNB#1 early.

Until a PC5-S link with the relay UE is established, the remote UE may receive the system information transmitted by gNB#2. The remote UE uses the system information received from gNB#2. The remote UE camps on gNB#2. After establishing the PC5-S link with the relay UE, the remote UE receives the system information transmitted by gNB#1 via the relay UE. The remote UE uses the system information transmitted by gNB#1. The remote UE may camp on gNB#1.

Preferably, the relay UE receives system information from gNB#1. The relay UE preferably notifies the remote UE of the system information received from gNB#1. In the discovery process, the relay UE may notify the remote UE of the system information of gNB#1. In the PC5-S link establishment process, the relay UE may notify the remote UE of the system information of gNB#1. In this way, the remote UE can receive the system information of gNB#1 via the relay UE and use the system information.

By receiving the system information transmitted by gNB#1 after the PC5-S link is established with the relay UE, the system information of gNB#2 can be used while the remote UE has not yet established the PC5-S link with the relay UE.

Until the PC5-RRC connection with the relay UE is completed, the remote UE may receive the system information transmitted by gNB#2. The remote UE uses the system information received from gNB#2. The remote UE camps on gNB#2. After completion of the PC5-RRC connection with the relay UE, the remote UE receives the system information transmitted by gNB#1 via the relay UE. The remote UE uses the system information transmitted by gNB#1. The remote UE may camp on gNB#1.

Preferably, the relay UE receives system information from gNB#1. The relay UE preferably notifies the remote UE of the system information received from gNB#1. In the discovery process, the relay UE may notify the remote UE of the system information of gNB#1. In the PC5-S link establishment process, the relay UE may notify the remote UE of the system information of gNB#1. In the PC5-RRC connection process, the relay UE may notify the remote UE of the system information of gNB#1. In this way, the remote UE can receive the system information of gNB#1 via the relay UE and use the system information.

By receiving the system information transmitted by gNB#1 after completion of the RRC connection process with the relay UE, the system information of gNB#2 can be used once the remote UE is enabled to transmit and receive data to and from the relay UE through PC5-RRC messages or on the PC5. While the remote UE is yet unable to transmit and receive data to and from the relay UE via PC5-RRC messages or on the PC5, the system information of gNB#2 can be used.

In this way, the remote UE in RRC_IDLE can determine from which gNB system information should be transmitted for use by the remote UE. In addition, the remote UE can use the system information from gNB#1. The remote UE can camp on gNB#1.

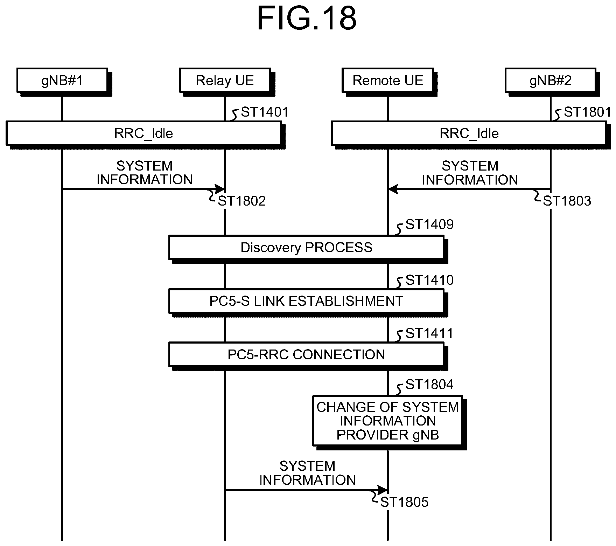

FIG. 18 is a sequence diagram illustrating an example of a method for the remote UE to use system information received from gNB#1 according to the second embodiment. In FIG. 18, steps identical to those in FIG. 14 are denoted by the same step numbers, and descriptions already provided are omitted. FIG. 18 illustrates a method in which the remote UE receives and uses system information from gNB#2 or gNB#1 according to the PC5 connection state between the remote UE and the relay UE. In the method illustrated in FIG. 18, the remote UE receives system information transmitted by gNB#2 and uses the system information until the PC5-RRC connection with the relay UE is completed, and receives system information transmitted by gNB#1 via the relay UE and uses the system information after the PC5-RRC connection with the relay UE is completed.

In step ST1801, the remote UE is in the coverage of gNB#2 and is in the RRC_IDLE state. In step ST1802, the relay UE receives system information from gNB#1. In step ST1803, the remote UE receives system information from gNB#2. In steps ST1409 to ST1411, a PC5 connection is established between the remote UE and the relay UE. In response to the relay UE completing the PC5-RRC connection with the remote UE in step ST1411, the relay UE notifies the remote UE of the system information of gNB#1 in step ST1805. The relay UE may broadcast the system information of gNB#1. In response to the remote UE completing the PC5-RRC connection with the relay UE in step ST1411, the remote UE changes the system information provider gNB from gNB#2 to gNB#1 in step ST1804. In step ST1805, the remote UE receives the system information of gNB#1 transmitted by the relay UE. As a result, the remote UE can use the system information transmitted from gNB#1.

In the discovery process, the remote UE may use the RP received from gNB#2 serving the remote UE in its coverage. This can be used for the first discovery process with the relay UE. In the discovery process, the remote UE may use the RP received from the gNB from which system information is received. In the discovery process, the remote UE may use the RP received from the gNB from which SL-related system information is received. For example, the RP is preferably used in a case where the remote UE is connected to a plurality of relay UEs. In a case where the remote UE is already connected to the relay UE, the system information received from gNB#1 can be used for performing the discovery process on a new relay UE.

The relay UE may store the system information received from gNB#1. For example, the relay UE stores the system information received in step ST1802. The relay UE can transmit the system information to the remote UE on the PC5 at an arbitrary timing. After the system information of gNB#1 is modified, the relay UE preferably stores the modified system information received from gNB#1 as the updated system information. The relay UE may notify the remote UE that the system information of gNB#1 has been modified. After the system information of gNB#1 is modified, the relay UE may notify the remote UE of the modified system information of gNB#1.

A method for PC5 notification of system information between UEs will be disclosed. The relay UE notifies the remote UE of the system information received from gNB#1. Unicast communication in SL may be used for the notification. Alternatively, groupcast communication in SL may be used for the notification. gNB#1 is preferably a gNB from which the relay UE receives system information. gNB#1 may be a gNB on which the relay UE camps or a gNB to which the relay UE is connected.

As a method for the relay UE to notify the remote UE of system information, preferably, the methods for PC5 notification of the RRC connection request via the relay UE disclosed in the first embodiment are appropriately applied. As another solution, a new channel may be provided for use in the notification of system information. Because the channel including system information is separated from other channels, the remote UE can reduce the malfunction of the process of receiving system information.

System information may be given as a notification included in an RRC message of PC5 from the relay UE to the remote UE. A container for an RRC message of Uu may be provided in the RRC message of PC5. A container for system information may be provided. A container for an individual RRC message may be provided. In this way, the RRC message received from gNB#1 by the relay UE can be easily transferred to the remote UE as an RRC message of PC5. The relay UE may be transparent for the container information. This can further facilitate the processing of the relay UE.

The timing at which the relay UE notifies the remote UE of system information will be disclosed. The relay UE periodically notifies the remote UE of system information. The notification may be given using physically periodic resources. Alternatively, the notification may be given in logically periodic resources. The logically periodic resources mean periodically setting resources among the resources available for SL communication. For example, if the resources available for SL communication are not continuous, only the resources available for SL communication are continuously counted excluding the resources unavailable for SL communication, and resources are periodically set in the count. In this way, even though the resources available for SL communication may be discontinuous, periodicity is achieved in the resources available for SL communication.

Another method related to notification timing will be disclosed. In response to the relay UE receiving system information from gNB#1, the relay UE notifies the remote UE of the system information. Upon receiving new or modified system information from gNB#1, the relay UE may notify the remote UE of the system information. In this manner, the relay UE notifies the remote UE of system information by being triggered by the reception of the system information, so that it is possible to reduce the waste of SL resources that are used for the notification of system information.

Another method related to notification timing will be disclosed. The remote UE notifies the relay UE of a system information request. The system information request may be a request for the system information of the gNB to which the relay UE is connected, or may be a request for the system information stored in the relay UE. For the notification of the system information request, preferably, the methods for notification of information related to the connection state of the relay UE disclosed in the first embodiment are appropriately applied. In response to receiving the system information request from the remote UE, the relay UE notifies the remote UE of the system information.

In this way, the relay UE can notify the remote UE of the system information received from gNB#1. The remote UE can receive the system information of gNB#1 via the relay UE.

A method for PC5 notification of system information between UEs will be disclosed. The relay UE broadcasts the system information received from gNB#1. Broadcast communication in SL may be used. The notification may be given by PC5-S signaling. This enables early notification in the PC5 connection process. Alternatively, the notification may be given by PC5-RRC signaling. For example, the notification may be included in an RRC message on the PC5.

For example, in the case of notification of the RRC connection state with the NW, the use of RRC signaling on the PC5 enables the notification process to be performed in the same RRC layer, so that malfunction can be reduced. Notification of the information may be given by the SRB of PC5. In this way, notification of the system information can be given as signaling information and control information.

Notification of the information may be given using PC5 MAC signaling. In this case, the notification can be given earlier than with RRC signaling. These signalings may include information indicating that it is broadcast. Alternatively, information indicating that it is system information may be included. Alternatively, information indicating that it is the system information received from gNB#1 by the relay UE may be included. In this way, one or more UEs that receive PC5 communication can receive the signaling.

Notification of the information may be given by PSCCH. The information may be given as a notification included in 1st SCI. This allows for earlier notification. The 1st SCI may include information indicating that it is broadcast. Alternatively, information indicating that it is system information may be included. Information indicating that it is the system information received from gNB#1 by the relay UE may be included. In this way, one or more UEs capable of receiving PC5 communication can receive the information.

Notification of the information may be given by PSSCH. The information may be given as a notification included in 2nd SCI. The information may be given by PSSCH as a notification included in MAC CE. The 2nd SCI of the PSCCH or the MAC CE may include information indicating that it is broadcast. Alternatively, information indicating that it is system information may be included. Information indicating that it is the system information received from gNB#1 by the relay UE may be included. In addition, in the case of use in broadcast, it is preferable not to apply HARQ. In this way, one or more UEs capable of receiving PC5 communication can receive the information.

Notification of the information may be given by PSBCH. The PSBCH is a channel to be broadcast in SL. By including the information in this channel, the relay UE can broadcast the information, and one or more UEs capable of receiving PC5 communication can receive the information.

A channel may be provided for use in broadcasting the information. Because this enables separation from other signaling and channels, it is possible to reduce the malfunction of the process of receiving the information in the UE.

Another method for solving the problem will be disclosed.

A gNB indicates to the remote UE a gNB from which system information is received. gNB#2 may indicate to the remote UE a gNB from which system information is received (hereinafter may be referred to as a system information provider gNB). gNB#2 may include the indication information of the system information provider gNB in the system information to be broadcast. Alternatively, gNB#2 may notify the remote UE of the indication information of the system information provider gNB using individual signaling. For example, RRC signaling, MAC signaling, or PDCCH may be used. gNB#2 may notify the remote UE to which the relay UE is connected. The indication information of the system information provider gNB may be information indicating whether to receive the system information of the gNB that provides the indication information or the system information of the gNB to which the relay UE is connected.

gNB#1 may indicate to the remote UE a gNB from which system information is received. The indication may be given as a notification via the relay UE. gNB#1 may include the indication information in the system information to be broadcast to the relay UE. Alternatively, gNB#1 may notify the relay UE using individual signaling. For example, RRC signaling, MAC signaling, or PDCCH may be used. The relay UE notifies the remote UE of the indication information. For the notification, the above-described methods for transmitting broadcast information may be appropriately applied. The indication information of the system information provider gNB may be information indicating whether to receive the system information of the gNB that provides the indication information or the system information of the gNB to which the remote UE is connected.

Which gNB's system information is used for the remote UE may be statically determined in advance by a standard or the like. Alternatively, which gNB's system information is used for the remote UE may be adjusted between gNBs. Alternatively, which gNB's system information is used for the remote UE may be determined by the CN. In this way, unified processing can be performed within the NW.

Instead of the indication from a gNB, the relay UE may indicate to the remote UE a gNB from which system information is received. For example, the relay UE may indicate to the remote UE the system information provider gNB according to the connection state between the relay UE and gNB#1. In this way, it is possible to indicate the system information provider gNB suitable for the remote UE according to the situation of the relay UE.

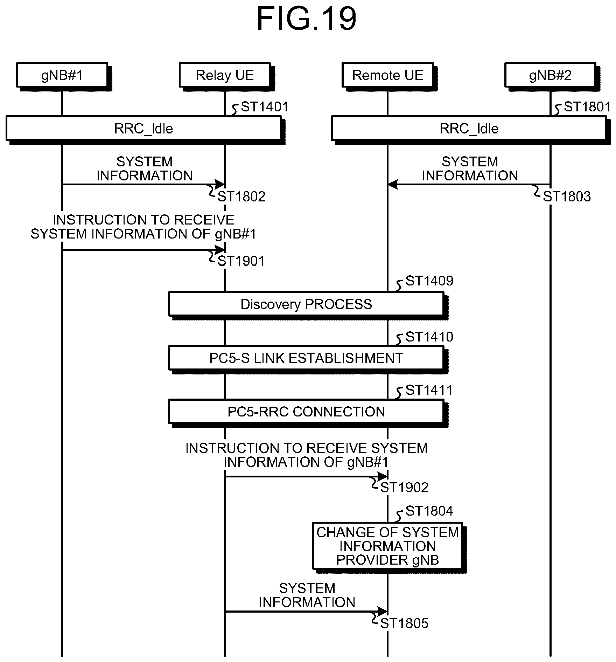

FIG. 19 is a sequence diagram illustrating an example of a method for a gNB to indicate to the remote UE a gNB from which system information is received according to the second embodiment. In FIG. 19, steps identical to those in FIG. 18 are denoted by the same step numbers, and descriptions already provided are omitted. In step ST1901, gNB#1 broadcasts an instruction to receive the system information of gNB#1. The instruction to receive the system information of gNB#1 may be applied only to the remote UE connected via the relay UE. The instruction to receive the system information of gNB#1 may include information indicating that the instruction is applied only to the remote UE connected via the relay UE. The instruction to receive the system information of gNB#1 may be included in the system information.

The relay UE receives the instruction to receive the system information of gNB#1 broadcast from gNB#1, and completes the PC5-RRC connection with the remote UE by executing steps ST1409 to ST1411. Thereafter, the relay UE notifies the remote UE in the PC5-RRC connection of the instruction to receive the system information of gNB#1 in step ST1902. In step ST1805, the relay UE notifies the remote UE of the system information of gNB#1. The remote UE that has received the instruction to receive the system information of gNB#1 changes the gNB from which system information is received from gNB#2 to gNB#1 in step ST1804, and receives the system information of gNB#1 in step ST1805.

The instruction to receive the system information of gNB#1 disclosed above may be replaced with information indicating whether the system information of gNB#1 is used. The remote UE that has received the information determines whether to receive the system information of gNB#1 according to the information.

The instruction to receive the system information of gNB#1 disclosed above may be replaced with an instruction to use the system information of gNB#1. The remote UE that has received the instruction receives and uses the system information of gNB#1.

The instruction to receive the system information of gNB#1 may be included in the system information of gNB#1 transmitted on the SL from the relay UE. The instruction to use the system information of gNB#1 may be included. The remote UE receives the system information of gNB#1 transmitted on the SL from the relay UE, and uses the system information of gNB#1 if the instruction to use the system information of gNB#1 is included.

It may be adjusted between gNBs which system information is used, the system information transmitted from gNB#1 via the relay UE or the system information of gNB#2 serving the remote UE in its coverage. Alternatively, the AMF may perform adjustment and notify each gNB. Alternatively, a node having a management function may perform adjustment and notify each gNB. Notification may be given via the AMF. The gNB may determine whether to instruct to receive the system information of the gNB according to the adjustment result, and transmit the instruction to receive the system information of the gNB.

In this way, the NW side can determine which gNB's system information is to be received or used by the remote UE.

The remote UE receives a part of the system information from gNB#2 and receives other system information from gNB#1. The remote UE uses the part of the system information received from gNB#2 and uses the other system information received from gNB#1. For example, the remote UE receives SL-related system information from gNB#2 and receives other system information from gNB#1. The remote UE uses the SL-related system information received from gNB#2 and uses the other system information received from gNB#1. An appropriate system information provider gNB can be set according to the type of system information.

For example, the remote UE may receive system information related to the connection with the NW from gNB#2 and receive SL-related system information from gNB#1. The remote UE uses the system information related to the connection with the NW received from gNB#2 and uses the SL-related system information received from gNB#1. In this way, the system information related to the connection on Uu can be obtained from gNB#2 serving the remote UE in its coverage, and the system information related to the connection on PC5 with the relay UE can be obtained from gNB#1 connected via the relay UE.

Another method for solving the problem will be disclosed.

The remote UE receives system information from a cell selected or reselected using a method disclosed in the first modification of the second embodiment to be described later. The remote UE uses the system information received from the cell selected or reselected. After the discovery process until the completion of the PC5-RRC connection, system information may be received from gNB#2. After the discovery process until the completion of the PC5-RRC connection, the remote UE may use the system information received from gNB#2. After the discovery process until the completion of the PC5-RRC connection, SL-related system information may be used from the system information received from gNB#2.

Another method for solving the problem will be disclosed.

The remote UE receives system information from the last gNB with which the remote UE had an RRC connection. For example, if the last gNB with which the remote UE had an RRC connection is gNB#2, the remote UE receives the system information of gNB#2 after releasing the RRC connection. For example, in a case where the RRC connection is released due to the end of communication, it is possible to early select and reselect a cell from which system information is received.

By adopting the methods disclosed in the present embodiment, the remote UE can receive system information. When the remote UE in the coverage of gNB#2 is connected to the relay UE connected to gNB#1, it is possible to determine which gNB's system information is received and used. Therefore, the processing in the remote UE in the RRC_IDLE state is clarified, and malfunction in the processing can be reduced.

First Modification of Second Embodiment.

In the problem described in the second embodiment, for example, the remote UE in RRC_IDLE performs cell selection or cell reselection processing. However, in a case where the remote UE considers gNB#1 via the relay UE in addition to gNB#2 serving the remote UE in its coverage, it is unclear which kind of cell selection or cell reselection processing should be performed. This causes the problem that the remote UE cannot perform processing in the RRC_IDLE state.

The present modification discloses a method for solving this problem.

In the present modification, the remote UE performs cell selection preferentially on the gNB serving the remote UE in its coverage. The remote UE may perform cell reselection preferentially on the gNB serving the remote UE in its coverage. When the reception quality from gNB#2 satisfies the cell selection or cell reselection criteria, the remote UE cell-selects or cell-reselects gNB#2. The remote UE receives the system information transmitted from the gNB cell-selected or cell-reselected. The remote UE uses the system information transmitted from the gNB cell-selected or cell-reselected. The remote UE may receive the paging transmitted from the gNB cell-selected or cell-reselected.

Another method for solving the problem will be disclosed.

The remote UE performs cell selection preferentially on the gNB to which the relay UE is connected. The remote UE may perform cell reselection preferentially on the gNB to which the relay UE is connected. When the SL reception quality from the relay UE exceeds a predetermined threshold, the remote UE may perform cell selection or cell reselection preferentially on the gNB to which the relay UE is connected. The remote UE receives the system information transmitted from the cell-selected or cell-reselected gNB to which the relay UE is connected. The remote UE uses the system information transmitted from the cell-selected or cell-reselected gNB to which the relay UE is connected. The remote UE may receive the paging transmitted from the cell-selected or cell-reselected gNB to which the relay UE is connected.

By performing preferential control in this manner, it is possible to facilitate cell selection or cell reselection processing in the remote UE. Malfunction in the remote UE can be reduced.

Another method for solving the problem will be disclosed.

The remote UE performs cell selection or cell reselection collectively on the gNB serving the remote UE in its coverage and the gNB to which the relay UE is connected. The remote UE measures the reception quality from the gNB serving the remote UE in its coverage and the SL reception quality from the relay UE. Based on the reception quality from the gNB serving the remote UE in its coverage and the SL reception quality from the relay UE, the remote UE selects the best cell or the relay UE among the cells serving the remote UE in their coverage and the relay UE that satisfy the cell selection or cell reselection criteria. If the relay UE is selected, the cell of the gNB to which the relay UE is connected is set as the selected cell. The remote UE receives the system information transmitted from the selected best cell. The remote UE uses the system information transmitted from the best cell. The remote UE may receive the paging transmitted from the best cell.

The remote UE selects the best cell from among the cells of the gNB serving the remote UE in its coverage from which reception quality satisfies the cell selection or cell reselection criteria, selects the best relay UE from among the relay UEs from which SL reception quality satisfies the cell selection or cell reselection criteria, and sets the cell of the gNB to which the relay UE is connected as the best cell. The remote UE may compare the reception qualities of the two best cells and select the better one.

The cell selection or cell reselection criteria may include an offset. For example, an offset may be provided for comparing the reception quality from the gNB serving the remote UE in its coverage with the SL reception quality from the relay UE. For example, given an offset of Qroffset, the SL reception quality from the relay UE and the (reception quality+Qroffset) from the gNB serving the remote UE in its coverage may be compared for selecting the best cell. The offset setting is not limited thereto. For example, an offset may be added to the SL reception quality from the relay UE. By enabling the offset setting in this manner, either the gNB to which the relay UE is connected or the gNB serving the remote UE in its coverage can be preferentially selected.

The remote UE uses the system information transmitted from the selected best cell. The remote UE may receive the paging transmitted from the best cell.

Examples of information related to the cell selection or cell reselection criteria include a threshold and an offset on the reception quality for cell selection or cell reselection. The information related to the criteria may be statically determined in advance by a standard or the like, or may be broadcast by a gNB. The UE preferably uses the information related to the criteria broadcast by the gNB. Alternatively, the information related to the criteria may be stored in the UE. For example, the information related to the criteria may be stored in the SIM provided in the UE. The UE preferably uses the information related to the criteria stored in the UE. Alternatively, the information related to the criteria may be provided from the CN to the UE in the registration process. The UE may store the information related to the criteria provided by the CN in the UE. Alternatively, the information related to the criteria may be provided from the NW to the UE when the UE is in a connection state with the NW. Thereafter, when the UE switches to the RRC_IDLE state, the information related to the criterion may be used.

By adopting such a method, the gNB serving the remote UE in its coverage and the relay UE can be taken into consideration in unified cell selection or reselection processing. The gNB serving the remote UE in its coverage and the gNB to which the relay UE is connected can be selected through the unified cell selection or reselection processing. Therefore, cell selection or reselection processing can be simplified, allowing for reduced power consumption. In addition, malfunction in the remote UE can be reduced.

By adopting the methods disclosed in the present modification, it is possible to perform cell selection or reselection processing even when the remote UE is connected to the relay UE. The remote UE can perform processing in the RRC_IDLE state. Malfunction can be reduced in the processing of the remote UE in the RRC_IDLE state.

Second Modification of Second Embodiment.

In a case where the remote UE in RRC_IDLE uses the system information from the gNB to which the relay UE is connected or can select or reselect the cell of the gNB, there arises a problem that the CN cannot manage the remote UE in a situation where the remote UE moves or the surrounding radio wave propagation environment fluctuates.

The present modification discloses a method for solving this problem.

In the communication system according to the present modification, gNB#1 notifies the remote UE of TAC via the relay UE. As the notification method, preferably, the methods for notification of system information disclosed in the second embodiment are appropriately applied. The TAC may be included in the system information. The remote UE receives the TAC of gNB#1 via the relay UE. When the remote UE moves, the remote UE may receive the TAC of the selected cell from among the gNB serving the remote UE in its coverage and the relay UE. The remote UE compares the received TAC with one or more TACs most recently received from the NW. The NW may be R_AN or CN. The RAN may be a gNB. The CN may be an AMF.

The remote UE performs the registration process if the TAC received from gNB#1 is a new TAC different from the one or more TACs most recently received from the NW. The remote UE notifies the CN of a registration request via the relay UE and gNB#1. The registration request may include information indicating the update of TAG or registration. An existing Resistration Request message may be used for the registration request. The Registration Type of the Resistration Request message may be set to Mobility Registration Update.

Six examples of information included in the registration request are disclosed below.

(1) Identifier of the UE requesting registration.
(2) Identifier of the relay UE.
(3) Identifier of the gNB to which the relay UE is connected.
(4) TAC received from the gNB.
(5) Information indicating that the registration request is based on the connection via the relay UE.
(6) Combinations of (1) to (5).

The CN that has received the registration request from the remote UE performs the registration process with the relay UE and gNB#1. The remote UE obtains new registration area information from the CN in the registration process. The registration area information may be one or more TACs.

The remote UE does not perform the registration process if the TAC received from gNB#1 is included in the one or more TACs most recently received from the NW.

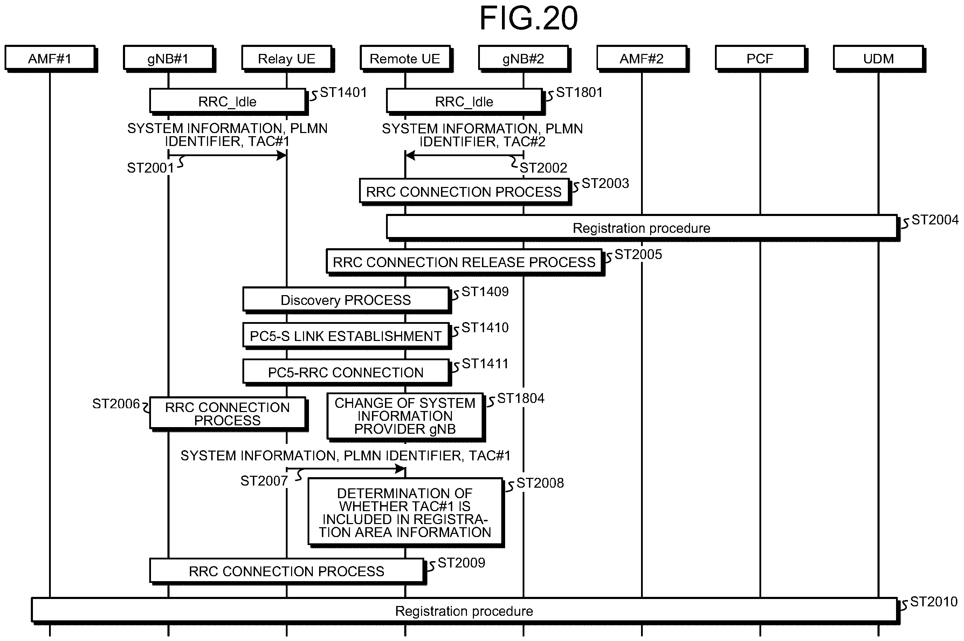

FIG. 20 is a sequence diagram illustrating an example of a method for the remote UE to perform registration in response to a TA change according to the second modification of the second embodiment. In FIG. 20, steps identical to those in FIG. 14 or 18 are denoted by the same step numbers, and descriptions already provided are omitted. In step ST2001, the relay UE receives system information from gNB#1. The relay UE also receives a PLMN identifier and a TAC (denoted by TAC#1). In step ST2002, the remote UE receives system information from gNB#2. The remote UE also receives a PLMN identifier and a TAC (denoted by TAC#2). If TAC#2 is a new TAC, the remote UE performs the RRC connection process in step ST2003, and performs the registration process among gNB#2, AMF#2, PCF, and UDM in step ST2004. If communication is not performed after the registration process is completed, the RRC connection is released in step ST2005.

In steps ST1409 to ST1411, the remote UE performs the RRC connection of PC5 with the relay UE. In step ST2006, the relay UE performs the RRC connection process with gNB#1. As the RRC connection process in step ST2006, preferably, processes in steps ST1412 to ST1414 described in FIG. 14 and the like are applied. In step ST1804, the remote UE changes the gNB from which system information is received from gNB#2 to gNB#1. In step ST2007, the relay UE transmits the system information of gNB#1, the PLMN identifier, and TAC#1 through the SL. These items of information may be given as a notification to the remote UE. The remote UE receives the system information of gNB#1, PLMN identifier, and TAC#1 transmitted by the relay UE, and determines in step ST2008 whether TAC#1 is included in the registration area information provided from the NW in the registration process in step ST2004. In response to determining that TAC#1 is included, no registration is performed on the CN. In response to determining that TAC#1 is not included, registration is performed on the CN. FIG. 20 illustrates a case where TAC#1 is included.

In step ST2009, the remote UE performs the RRC connection process with gNB#1 via the relay UE. As the RRC connection process performed with gNB#1 via the relay UE, preferably, processes in steps ST1417 to ST1419 described in FIG. 14 and the like are applied. In step ST2010, the remote UE performs the registration process among gNB#1, AMF#1, PCF, and UDM. If communication is not performed after the registration process is completed, the RRC connection may be released. FIG. 20 illustrates a case where the AMF is changed, which is a non-limiting example. The AMF may not be changed.

In this way, it is possible to perform the registration process for changing the TA in which the remote UE exists to the TA to which gNB#1 belongs.

By adopting the methods disclosed in the present modification, the CN can recognize in which TA the remote UE exists even in a situation where the remote UE moves or the surrounding radio wave propagation environment fluctuates. Therefore, the CN can manage the remote UE.

Third Modification of Second Embodiment.

In a case where the remote UE is in the coverage of a gNB and is also connected to the relay UE, it is unclear whether the remote UE should receive paging from the gNB serving the remote UE in its coverage or from the relay UE. In addition, in the CN, it is unclear from which side paging should be transmitted to the remote UE. This causes the problem that the CN cannot call the remote UE and cannot start communication with the remote UE.

The present modification discloses a method for solving this problem.

In the communication system according to the present modification, the remote UE in the coverage of gNB#2 receives paging from gNB#2. In this case, the registration process involving the relay UE and the gNB connected to the relay UE may be unnecessary. Even though the gNB to which the relay UE is connected may have transmitted a new TAC, the registration process by the remote UE involving the relay UE and the gNB to which the relay UE is connected may be unnecessary. In this way, the CN can recognize that paging is to be transmitted via the gNB serving the remote UE in its coverage. The CN transmits paging to the remote UE via gNB#2.

Because the registration process involving the relay UE and the gNB to which the relay UE is connected is unnecessary, system processing can be facilitated. In addition, signaling for the registration is unnecessary, allowing for reduced signaling load.

In a case where the gNB serving the remote UE in its coverage is changed and cell selection or reselection processing is performed due to the movement of the remote UE or the fluctuation in the surrounding radio wave propagation environment, the remote UE preferably receives paging via the gNB.

The remote UE may receive paging from the gNB from which system information is received. The remote UE may receive paging from the gNB from which system information related to paging is received. In this way, the remote UE can also receive paging from the gNB to which the relay UE is connected.

The remote UE may receive paging from the gNB belonging to the TA or registration area according to the TA change process. The TA change process disclosed in the second modification of the second embodiment may be appropriately applied. For example, in a case where the remote UE moves to cause a change in the connected relay UE and the gNB to which the relay UE is connected, and selects the gNB, the remote UE receives TAC from the gNB, and determines whether the received TAC is included in one or more TACs most recently received from the CN. If the TAC is different, the registration process is performed on the CN via the relay UE and the gNB. After the remote UE performs the registration process with the CN via the relay UE and the gNB, the remote UE receives paging from the gNB. The CN transmits paging to the remote UE via the gNB within the new TAC and the relay UE.

If the TAC received from the gNB is included in the one or more TACs most recently received from the CN, the remote UE need not perform the registration process on the CN. The remote UE receives paging via the relay UE and the gNB. The CN transmits paging to the remote UE via the gNB within the original TAC and the relay UE.

In this way, even in the NW including the relay UE, the remote UE can receive paging from the gNB belonging to the TA or registration area. Therefore, processing similar to the conventional paging processing can be performed, and malfunction in the paging processing can be reduced.

The gNB to which the relay UE is connected in the above example may be replaced with a gNB serving the remote UE in its coverage. A similar effect is obtained.

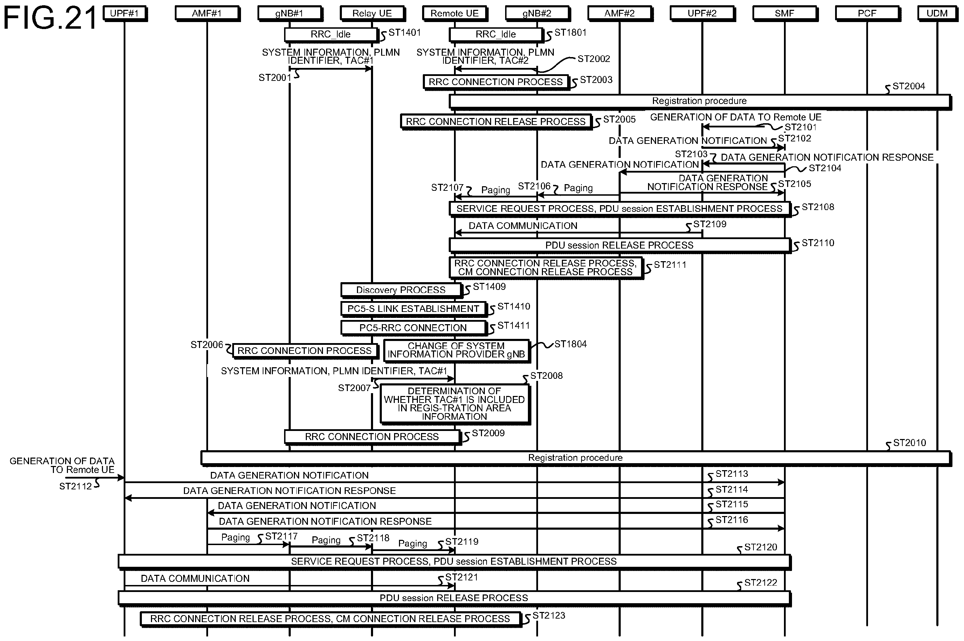

FIG. 21 is a sequence diagram illustrating an example of a method for receiving paging from a gNB belonging to the TA in which the remote UE exists according to the third modification of the second embodiment. In FIG. 21, steps identical to those in FIG. 20 are denoted by the same step numbers, and descriptions already provided are omitted.

Described below is a process for the case that data to the remote UE reaches the CN while the remote UE exists in the TA (TAC#2) broadcast from gNB#2 or in the registration area provided in the registration process. In step ST2101, data to the remote UE is generated in UPF#2. In step ST2102, UPF#2 notifies the SMF of a data generation notification. In step ST2103, the SMF may notify UPF#2 of a data generation notification response. In step ST2104, the SMF notifies AMF#2 with which the remote UE has registered of a data generation notification. In step ST2105, AMF#2 may notify the SMF of a data generation notification response.

In step ST2106, AMF#2 notifies gNB#2 of paging. In step ST2107, gNB#2 notifies the remote UE of paging. In step ST2108, the remote UE that has received paging from gNB#2 performs the service request process and the protocol data unit (PDU) session establishment process with gNB#2, AMF#2, SMF, and UPF#2. In step ST2109, UPF#2 transmits the generated data to gNB#2, and gNB#2 transmits the data to the remote UE. In this way, data communication to the remote UE is enabled.

For example, in a case where the communication is terminated, the PDU session release process is performed in step ST2110 among the remote UE, gNB#2, AMF#2, SMF, and UPF#2. In step ST2111, the CM connection release process and the RRC connection release process are performed among the remote UE, gNB#2, and AMF#2.

Described below is a process for the case that while the remote UE exists in the TA (TAC#1) broadcast from gNB#1, data to the remote UE reaches the CN following the registration process in step ST2010 for change to TAC#1 to which gNB#1 belongs. In step ST2112, data to the remote UE is generated in UPF#1. In step ST2113, UPF#1 notifies the SMF of a data generation notification. In step ST2114, the SMF may notify UPF#1 of a data generation notification response. In step ST2115, the SMF notifies AMF#1 with which the remote UE has registered of a data generation notification. In step ST2116, AMF#1 may notify the SMF of a data generation notification response.

In step ST2117, AMF#1 notifies gNB#1 of paging. In step ST2118, gNB#1 notifies the relay UE of paging. In step ST2119, the relay UE notifies the remote UE of paging. In step ST2120, the remote UE that has received paging from the relay UE performs the service request process and the PDU session establishment process with the relay UE, gNB#1, AMF#1, SMF, and UPF#1. In the communication between the remote UE and the NW via the relay UE, a PDU session may be established between the relay UE and the UPF. A PC5 connection is established between the relay UE and the remote UE, and in the relay UE, data between the UPF and the relay UE is transferred between the relay UE and the remote UE, and data between the remote UE and the relay UE is transferred between the relay UE and the UPF. As another method for PDU session establishment, a PDU session may be established between the remote UE and the UPF. A PDU session may be established for a service communicated between the remote UE and the UPF. In the PDU session between the remote UE and the UPF, the data destination address may be the remote UE and the UPF. By adopting such a method, communication control can be facilitated.

The relay UE may perform mapping between a sidelink radio bearer (SLRB) and an RB of Uu. The relay UE transfers the data from gNB#1 from the Uu RB to the SL RB and transmits the data to the remote UE. The relay UE transfers the data from the remote UE from the SL RB to the Uu RB and transmits the data to gNB#1. The relay UE may perform channel mapping. The relay UE transfers the data from gNB#1 from the PUSCH to the PSSCH and transmits the data to the remote UE. The relay UE transfers the data from the remote UE from the PSSCH to the PUSCH and transmits the data to gNB#1. In this way, data transmission and reception can be performed between the remote UE and gNB#1 via the relay UE. In step ST2121, UPF#1 transmits the generated data to gNB#1, and gNB#1 transmits the data to the remote UE via the relay UE. In this way, data communication to the remote UE is enabled.

For example, in a case where the communication is terminated, the PDU session release process is performed in step ST2122 among the remote UE, the relay UE, gNB#1, AMF#1, SMF, and UPF#1. In step ST2123, the CM connection release process and the RRC connection release process are performed among the remote UE, the relay UE, gNB#1, and AMF#1.

FIG. 21 illustrates a case where the AMF is changed, which is a non-limiting example. The AMF may not be changed. FIG. 21 illustrates a case where the UPF is changed, which is a non-limiting example. The UPF may not be changed. FIG. 21 illustrates a case where the SMF remains the same, which is a non-limiting example. The SMF may be changed.

By adopting such a method, the remote UE can recognize whether to receive paging from the gNB serving the remote UE in its coverage or from the relay UE, or from which gNB or relay UE paging should be received. In addition, the CN can recognize to which gNB paging for the remote UE should be transmitted. As a result, the CN can start communication with the remote UE.

Another method for paging will be disclosed. The gNB serving the remote UE in its coverage and the gNB to which the relay UE is connected may transmit paging to the remote UE. Even though these gNBs can belong to the TAs of different TACs, these gNBs may transmit paging to the remote UE. The remote UE can receive paging from the gNB serving the remote UE in its coverage and the gNB to which the relay UE is connected. The remote UE may receive paging from the gNB serving the remote UE in its coverage and the gNB to which the relay UE is connected.

A specific example will be disclosed. The remote UE receives a TAC from gNB#1 via the relay UE, and determines whether the received TAC is included in one or more TACs most recently received from the CN. If the TAC is different, the registration process is performed on the CN via the relay UE and the gNB. In the registration process, the CN gives the remote UE a notification including the TAC of gNB#2. The TAC of gNB#2 may be included in the registration response message for notification in the registration process. The TAC may be included in the registration area information for notification.

When paging to the remote UE occurs, the CN gives a notification of paging to the gNB belonging to the TA of the TAC included in the registration area of the remote UE. As a result, the CN notifies gNB#1 and gNB#2 of the paging. gNB#1 and gNB#2 that have received the paging from the CN transmit the paging to the remote UE. In this way, gNB#2 serving the remote UE in its coverage and gNB#1 to which the relay UE is connected can transmit paging to the remote UE.

The remote UE waits for paging from gNB#2 serving the remote UE in its coverage and gNB#1 to which the relay UE is connected. The remote UE may receive paging from both gNB#2 serving the remote UE in its coverage and gNB#1 to which the relay UE is connected. In this way, even in a case where either paging cannot be transmitted, the other paging can be transmitted. Therefore, the remote UE can receive the transmitted paging. The reliability of paging processing can be improved. In addition, the remote UE only needs to receive the paging transmitted first, and can receive the paging early. Therefore, the remote UE can quickly respond to the paging, and can start communication with the NW early.

Fourth Modification of Second Embodiment.

When transmitting paging from the CN to the remote UE via the gNB and the relay UE, paging must be transmitted from the relay UE to the remote UE in the SL. For this reason, the conventional paging processing of Uu has the problem that the transmission of paging to the remote UE or the reception of paging at the remote UE can fail.

The present modification discloses a method for solving this problem.

A problem related to the transmission of paging from the CN to the remote UE via the gNB and the relay UE is how the relay UE receives paging to the remote UE from the gNB. Disclosed below is a method for solving this problem.

In the communication system according to the present modification, the remote UE notifies the relay UE of information related to the identifier of the remote UE. The information related to the identifier of the UE may be, for example, 5G-S-TMSI. Alternatively, the information related to the identifier of the UE may be UE-ID. The UE-ID is derived from Formula (1) below. By using the UE-ID, the amount of information required for notification can be reduced.

$$UE\text{-}ID = 5G\text{-}S\text{-}TMSI \bmod 1024 \ldots (1)$$

As another method, an identifier that the gNB to which the relay UE is connected allocates to the remote UE may be used. For example, the identifier may be Inactive Radio Network Temporary Identifier (I-RNTI). The I-RNTI is preferably used when the UE is in the RRC_INACTIVE state.

As another method, a specific value may be set as the identifier of the UE. For example, UE-ID=0 may be used.

For paging, it is preferable to notify in advance the NW, the relay UE, and the remote UE of the use of the identifier that the gNB to which the relay UE is connected allocates to the remote UE or the specific UE-ID. For example, in the registration process from the remote UE to the CN via the relay UE and gNB#1, notification is preferably given indicating the use of the identifier allocated to the remote UE by gNB#1 and the identifier, or indicating the use of the specific UE-ID and the specific UE-ID. In this way, the identifier of the UE for use in paging can be shared among the NW, the relay UE, and the remote UE.

The gNB to which the relay UE is connected derives the paging transmission timing using the identifier of the remote UE, and transmits the paging to the remote UE. The AMF may derive the paging transmission timing using the identifier of the remote UE. Other information related to the paging timing, e.g. paging period, the number of paging occasions, information for obtaining paging frame offset and the number of paging frames, etc., may be determined by gNB#1 and given as a notification to the AMF and the relay UE, or may be determined by the AMF and given as a notification to gNB#1 and the relay UE. The relay UE may be notified via gNB#1.

The relay UE derives the reception timing of the paging to the remote UE using the identifier of the remote UE. The relay UE derives the reception timing of the paging to the remote UE using the identifier of the remote UE and other parameters for determining the paging timing. The relay UE monitors whether the paging is transmitted from gNB#1 at the derived paging timing to the remote UE. The paging from gNB#1 to the remote UE is preferably included in the PCCH. The PCCH is transmitted by being mapped to the PDSCH. The scheduling information of the PDSCH to which the PCH is mapped is included in the DCI, and a Paging Radio Network Temporary Identifier (P-RNTI) is masked in the CRC of the DCI and mapped to the PDCCH.

The relay UE can detect the presence or absence of paging by monitoring the P-RNTI. Upon receiving the PDCCH with the P-RNTI masked, the relay UE receives the PDSCH and receives the paging according to the scheduling information of the PDCCH.

Instead of the P-RNTI disclosed above, a relay-dedicated RNTI may be provided. The relay-dedicated RNTI is preferably used for paging from the gNB to the remote UE via the relay UE. The PDCCH to which the paging that is transmitted from gNB#1 to the relay UE is mapped is masked with the relay-dedicated RNTI. The relay-dedicated RNTI may be statically determined in advance according to a standard or the like. The gNB and the relay UE can be recognized.

The identifier of the remote UE is preferably included in the paging. That is, the identifier of the remote UE is preferably included in the paging to the remote UE that is transmitted to the relay UE. The relay UE that has recognized that the identifier of the remote UE is included in the paging transmits the paging to the remote UE.

Information indicating that the paging is directed to the remote UE via the relay UE may be included in the paging. That is, the information is preferably included in the paging to the remote UE that is transmitted to the relay UE. The relay UE that has recognized that the information is included in the paging transmits the paging to the remote UE.

The identifier of the relay UE may be included in the paging. That is, the information is preferably included in the paging to the remote UE that is transmitted to the relay UE. The relay UE that has recognized that the identifier of the relay UE is included in the paging transmits the paging to the remote UE. In this way, paging can be transmitted from a specific relay UE to the remote UE.

Resources for transmitting paging using SL on the PC5 will be disclosed. gNB#1 schedules PC5 paging resources for the relay UE. Resource may be periodically allocated as the PC5 paging resources. As a method for scheduling periodic PC5 paging resources, gNB#1 may perform scheduling for the relay UE using a configured grant (CG) of SL.

gNB#1 preferably schedules the PC5 paging resources using the paging timing to the remote UE. In this way, it is possible to allocate periodic resources for PC5 paging. The PC5 paging resources suitable for the paging timing to the remote UE can be scheduled for the relay UE from gNB#1.

The paging processing time in the relay UE may be considered. For example, the paging processing time may be the processing time from when the relay UE receives paging to the remote UE from gNB#1 to when the relay UE transmits paging for the remote UE. The relay UE may notify the remote UE of the paging processing time. gNB#1 may schedule the PC5 paging resources for a timing obtained by adding a time including the processing time to the paging timing to the remote UE. In this way, it is possible to allocate the PC5 paging resources by considering the paging processing time in the relay UE. The PC5 paging resources more suitable for the paging timing to the remote UE can be scheduled for the relay UE from gNB#1.

When the relay UE is not in a connection state with the gNB, the relay UE may schedule the PC5 paging resources. For example, the relay UE selects SL resources and schedules the PC5 paging resources to the remote UE. As the scheduling method, preferably, the scheduling methods in gNB#1 described above are appropriately applied.

When receiving the paging from gNB#1 to the remote UE, the relay UE notifies the remote UE using the PC5 paging resources.

The remote UE derives the paging timing using the identifier of the remote UE and the information related to the paging timing provided from gNB#1 or the AMF. When the remote UE is notified by the relay UE of the foregoing paging processing time, the remote UE derives the paging timing by considering the provided paging processing time. The remote UE monitors paging from the relay UE at the derived paging timing and detects the presence or absence of paging. Upon detecting paging, the remote UE determines whether the paging is addressed to the remote UE using the identifier of the remote UE in the paging. In this way, the remote UE can receive the paging addressed to the remote UE from gNB#1 via the relay UE.

In a case where resources are periodically allocated as the PC5 paging resources, it is necessary to secure periodic resources even when paging does not occur, resulting in waste of resources. Disclosed below is a method for solving this problem.

In order to avoid waste of resources, gNB#1 dynamically performs resource scheduling as the PC5 paging resources. The scheduling may be performed by considering the processing time in the relay UE. gNB#1 may dynamically schedule the PC5 paging resources for each paging timing to the remote UE. Alternatively, gNB#1 may schedule the PC5 paging resources when paging to the remote UE occurs. Since the scheduling of PC5 paging resources is performed only when paging occurs, waste of resources can be further reduced.

A method for scheduling PC5 paging resources when paging to the remote UE occurs will be disclosed. In the method, scheduling information of the PC5 paging resources is included in the PCCH. The scheduling information of the PC5 paging resources may be included together with the paging to the remote UE disclosed above. The scheduling information may include the paging processing time in the relay UE. The PCCH is transmitted by being mapped to the PDSCH using P-RNTI as a mask. The PCCH may be transmitted by being mapped to the PDSCH using RNTI for relay as a mask. When paging to the remote UE occurs, gNB#1 gives notification by including, in the PCCH, the scheduling information of the PC5 paging resources together with the paging to the remote UE. In this way, when paging to the remote UE occurs, the relay UE can receive the paging to the remote UE and the scheduling information for PC5 paging.

Another method for solving the problem will be disclosed.

In the method, the scheduling information of the PC5 paging resources is given as a notification included in the DCI and mapped to the PDCCH. The identifier of the relay UE may be included in the DCI. The identifier of the remote UE may be included in the DCI. In this way, the relay UE can recognize to which relay UE and to which remote UE the scheduling information is addressed. The PDCCH may be a PDCCH using P-RNTI as a mask. Alternatively, the PDCCH may be a PDCCH using relay-dedicated RNTI as a mask. Alternatively, the PDCCH may be a PDCCH using RNTI for SL (SL-RNTI) as a mask. When paging to the remote UE occurs, gNB#1 gives notification by including the scheduling information of the PC5 paging resources in the PDCCH using the RNTI as a mask. In this way, the relay UE can monitor the scheduling information for PC5 paging using the RNTI, and can receive the scheduling information of the PC5 paging resources when paging to the remote UE occurs.

By adopting the methods disclosed in the present modification, the relay UE can transmit paging to the remote UE. In addition, the remote UE can receive paging from the relay UE. Paging can be transmitted from the CN to the remote UE via the gNB and the relay UE. The remote UE can start communication with the NW.

Third Embodiment.

In order to transmit data from the remote UE to the NW via the relay UE, SL communication resources from the remote UE to the relay UE are required. In conventional cases where the remote UE is directly connected to the gNB, the remote UE can directly transmit a scheduling request (SR) to gNB#2. However, in a case where the remote UE is not connected to gNB#2 but is connected to gNB#1 via the relay UE, the remote UE cannot directly transmit SR to gNB#1. In this case, the remote UE does not receive from gNB#1 the scheduling of SL communication resources for communication to the relay UE, and cannot transmit data to gNB#1 via the relay UE.

The present embodiment discloses a method for solving this problem.

In the communication system according to the present embodiment, the remote UE notifies the gNB in an RRC connection of a scheduling request (SR) for relay resources. The remote UE may notify the gNB connected via the relay UE of the SR for relay resources. Preferably, the relay resources may be both SL communication resources and UL communication resources. The SR may be a scheduling request for all logical channels. The logical channel of PC5 and the logical channel of Uu may be included. A logical channel for relay may be provided, and the SR may be a scheduling request for the logical channel for relay.

The remote UE may be in an RRC connection state with the gNB that transmits the SR. gNB#1 that has received the SR from the remote UE performs the scheduling of SL communication resources with the relay UE for the remote UE. gNB#1 that has performed the scheduling of SL communication resources with the relay UE for the remote UE notifies the remote UE of the scheduling information. The remote UE may notify gNB#1 of the SR via the relay UE. gNB#1 may notify the remote UE of the scheduling information via the relay UE.

gNB#1 that has received the SR from the remote UE performs the scheduling of UL communication resources with the relay UE. gNB#1 that has performed the scheduling of UL communication resources for the relay UE notifies the relay UE of the scheduling information. The UL communication may be limited to communication from the remote UE to gNB#1 via the relay UE.

The relay UE notifies gNB#1 in an RRC connection of a scheduling request (SR) for relay resources. Preferably, the relay resources may be UL communication resources and/or SL communication resources. The SR may be a scheduling request for all logical channels. The logical channel of PC5 and the logical channel of Uu may be included. A logical channel for relay may be provided, and the SR may be a scheduling request for the logical channel for relay.

The remote UE may be in an RRC connection state with the gNB to which the relay UE transmits the SR. The remote UE may not be in an RRC connection state with the gNB to which the relay UE transmits the SR.

gNB#1 that has received the SR from the relay UE performs the scheduling of SL communication resources with the relay UE for the remote UE. gNB#1 that has performed the scheduling of SL communication resources with the relay UE for the remote UE notifies the remote UE of scheduling information indicating the result of the scheduling. gNB#1 may notify the remote UE of the scheduling information via the relay UE.

gNB#1 that has received the SR from the relay UE also performs the scheduling of UL communication resources with the relay UE. gNB#1 that has performed the scheduling of UL communication resources with the relay UE notifies the relay UE of scheduling information indicating the result of the scheduling. The UL communication may be limited to communication from the remote UE to gNB#1 via the relay UE.

The remote UE notifies the gNB in an RRC connection of a scheduling request (SR) for SL communication resources with the relay UE. The remote UE may notify the gNB connected via the relay UE of the SR for SL communication resources with the relay UE. The SR may be a scheduling request for all logical channels of PC5. A logical channel for relay may be provided, and the SR may be a scheduling request for the logical channel for relay.

The remote UE may be in an RRC connection state with gNB#1 via the relay UE. The remote UE notifies gNB#1 of a scheduling request (SR) for SL communication resources with the relay UE. The SR for SL communication resources with the relay UE for performing communication with gNB#1 via the relay UE may be used.

gNB#1 that has received the SR from the remote UE performs the scheduling of SL communication resources with the relay UE for the remote UE. gNB#1 that has performed the scheduling of SL communication resources with the relay UE for the remote UE notifies the remote UE of scheduling information indicating the result of the scheduling. The remote UE may notify gNB#1 of the SR via the relay UE. gNB#1 may notify the remote UE of the scheduling information via the relay UE.

The relay UE notifies gNB#1 of a scheduling request (SR) for UL communication resources. The UL communication may be UL communication for the remote UE to communicate with gNB#1 via the relay UE. The SR may be a scheduling request for all logical channels of Uu. A logical channel for relay may be provided, and the SR may be a scheduling request for the logical channel for relay.

gNB#1 that has received the SR from the relay UE performs the scheduling of UL communication resources. gNB#1 that has performed the scheduling of UL communication resources to the relay UE notifies the relay UE of scheduling information indicating the result of the scheduling. The relay UE that has received the scheduling information from gNB#1 notifies the remote UE of the scheduling information.

Upon receiving an SL scheduling request from the remote UE, the relay UE transmits a UL scheduling request to gNB#1. As another method, the relay UE may transmit a UL scheduling request to gNB#1 once the PC5 connection is completed between the relay UE and the remote UE. The PC5 connection may be a PC5-S link establishment. Alternatively, the PC5 connection may be a PC5-RRC connection. As another method, the relay UE transmits a UL scheduling request to gNB#1 once the RRC connection is completed between the remote UE and gNB#1. The relay UE may transmit a UL scheduling request to gNB#1 in the RRC connection process between the remote UE and gNB#1. The relay UE may transmit a UL scheduling request when receiving an RRC setup request from the remote UE. The relay UE may transmit a UL scheduling request when receiving an RRC setup completion from the remote UE.

The foregoing discloses a method for requesting SL communication resources from the remote UE to the relay UE. Another method for obtaining SL communication resources from the remote UE to the relay UE will be disclosed.

The remote UE selects the SL communication resources with the relay UE by itself. The SL communication resources may be SL communication resources with the relay UE for performing communication with gNB#1 via the relay UE. In this way, it is possible to obtain SL communication resources from the remote UE to the relay UE. Regarding the UL communication from the relay UE to gNB#1, the methods disclosed above may be appropriately applied. In this way, it is possible to obtain resources for communication from the remote UE to gNB#1 via the relay UE.

The relay UE may select the SL communication resources from the remote UE to the relay UE by itself. The SL communication resources may be SL communication resources with the relay UE for the remote UE to perform communication with gNB#1 via the relay UE.

When receiving an SL scheduling request from the remote UE, the relay UE may select the SL communication resources from the remote UE to the relay UE. As another method, the relay UE may select the SL communication resources from the remote UE to the relay UE once the PC5 connection between the relay UE and the remote UE is completed. The PC5 connection may be a PC5-S link establishment. Alternatively, the PC5 connection may be a PC5-RRC connection. As another method, once the RRC connection is completed between the remote UE and gNB#1, the relay UE may select the SL communication resources from the remote UE to the relay UE by itself. The relay UE may select the SL communication resources from the remote UE to the relay UE by itself in the RRC connection process between the remote UE and gNB#1. When receiving an RRC setup request from the remote UE, the relay UE may select the SL communication resources from the remote UE to the relay UE by itself. When receiving an RRC setup completion from the remote UE, the relay UE may select the SL communication resources from the remote UE to the relay UE by itself.

The relay UE notifies the remote UE of the selected SL communication resources. In this way, it is possible to obtain SL communication resources from the remote UE to the relay UE.

Regarding the UL communication from the relay UE to gNB#1, the methods disclosed above may be appropriately applied. In this way, it is possible to obtain resources for communication from the remote UE to gNB#1 via the relay UE.

A method for SR configuration will be disclosed. A method for configuration of SR for SL will be disclosed. gNB#1 configures SL SR for the remote UE. The SL SR configuration may be the setting of the transmission timing of SL SR. The transmission timing of SL SR may be periodic. The setting information of the transmission timing of SL SR may be period or offset.

gNB#1 schedules the SL resources for SL SR to the remote UE. The SL resources for SL SR may be periodic. As the scheduling, semi-persistent scheduling (SPS) may be used. As the scheduling, SL CG may be used. These SL resources may be dedicated to SL SR.

Five examples of scheduling information of SL resources for SL SR are disclosed below.

    (1) Period.
    (2) Offset.
    (3) Frequency resources.
    (4) Activastion and deactivation information.
    (5) Combinations of (1) to (4).

The SL SR may be included in the PSCCH. The SL SR may be included in the 1st SCI. The SL SR may be included in the PSSCH. The SL SR may be included in the 2nd SCI. The SL SR may be included in the SL MAC CE. SL RRC may be used. PC5-RRC signaling may be used. The SL SR may be multiplexed with other data. For example, the SL SR may be multiplexed with data and included in the PSSCH. The SL SR may be included in the PSFCH. The SL SR may be multiplexed with SL Ack/Nack and/or SL CSI and included in the PSFCH. A channel for SL SR may be provided.

A signal for SL SR may be provided. The signal may be a signal having a predetermined sequence as SL SR. The predetermined sequence may be a sequence different from that for other UEs. Alternatively, the predetermined sequence may be a sequence different from SL Ack/Nack or SL CSI. For example, a Zadoff-Chu sequence may be used for SL SR to produce a different cyclic shift.

The SL resources to be scheduled may be SL resources for the channel or signal for SL SR transmission. gNB#1 may schedule, for the remote UE, SL resources for the channel or signal for SL SR transmission.

A method for configuration of SR for UL will be disclosed. gNB#1 configures UL SR for the relay UE. The UL SR may be a UL SR for the remote UE to communicate with gNB#1 via the relay UE. The UL SR configuration may be the setting of the transmission timing of UL SR. The transmission timing of UL SR may be periodic. The setting information of the transmission timing of UL SR may be period or offset. The SR configuration conventionally defined on Uu may be used.

gNB#1 schedules the SL resources for UL SR to the relay UE. The SL resources for UL SR may be periodic. The PUCCH configuration may be used as the SL resources for UL SR. Alternatively, PUSCH configuration may be used. These SL resources may be dedicated to SL SR. Alternatively, the resource configuration for SR conventionally defined on Uu may be used.

gNB#1 sets the configuration related to the SR for SL and the configuration related to the SR for UL together. The configuration related to the SR for SL can be an SL SR configuration and/or an SL SR resource configuration. The configuration related to the SR for UL can be a UL SR configuration and/or a UL SR resource configuration. gNB#1 notifies the relay UE of the configuration related to the SR for SL and the configuration related to the SR for UL. The configuration related to the SR for SL and the configuration related to the SR for UL may be included in SL configuration information. gNB#1 notifies the relay UE of the SL configuration information. SL configuration information for relay may be provided. In this way, the notification can be given separately from other SL configurations for SL communication that are not for relay. The configuration related to the SR for SL may be included in the SL configuration information, and the configuration related to the SR for UL may be included in the UL setting information.

A method for notification of the configuration related to the SR for SL and the configuration related to the SR for UL from gNB#1 to the relay UE will be disclosed. Preferably, RRC signaling is used for the notification. The notification may be given in the RRC connection process performed between gNB#1 and the remote UE. The notification may be included in an RRC setup message. The notification may be included in an RRC reconfiguration message.

The relay UE notifies the remote UE of the configuration related to the SR for SL. The configuration related to the SR for SL may be included as a notification for relay in the SL configuration information separated from other configurations related to the SR for SL. The notification may be given using PC5-RRC signaling. The notification may be included in an SL RRC configuration message. The notification may be given using an SL RRC reconfiguration message. Alternatively, the notification may be included in the SL AS configuration. The notification may be included in the SL AS reconfiguration. The notification may be given in the RRC connection process performed between gNB#1 and the remote UE. The notification may be included in an RRC setup message. The notification may be included in an RRC reconfiguration message.

gNB#1 may notify the remote UE of both the configuration related to the SR for SL and the configuration related to the SR for UL. The notification may be given via the relay UE. As a notification methods, preferably, the methods disclosed above are appropriately applied.

gNB#1 may separately notify the relay UE of the configuration related to the SR for SL and the configuration related to the SR for UL. The relay UE notifies the remote UE of the configuration related to the SR for SL. As another method, gNB#1 may notify the remote UE of the configuration related to the SR for SL. The notification is preferably given via the relay UE. gNB#1 may notify the relay UE of the configuration related to the SR for UL. The configuration related to the SR for SL and the configuration related to the SR for UL may be given as notifications through individual signalings. The configuration related to the SR for SL and the configuration related to the SR for UL may be given as notifications through individual messages. As the notification method, preferably, the above-described methods are appropriately applied.

gNB#1 may separately set the configuration related to the SR for SL and the configuration related to the SR for UL. For the notification from gNB#1 to the relay UE or to the remote UE, preferably, the above-described methods for individual notification are appropriately applied.

For the notification from gNB#1 to the relay UE or to the remote UE, preferably, the above-described methods for combined notification are appropriately applied.

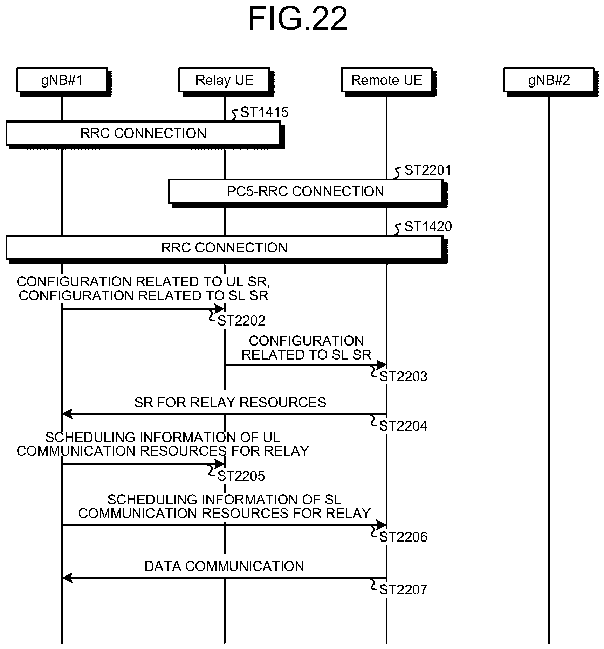

FIG. 22 is a sequence diagram illustrating an example of a method for the remote UE to transmit SR to gNB#1 according to the third embodiment. In FIG. 22, steps identical to those in FIG. 14 are denoted by the same step numbers, and descriptions already provided are omitted. In step ST1415, the relay UE is in an RRC connection with gNB#1. In step ST2201, the remote UE is in a PC5-RRC connection with the relay UE. In step ST1420, the remote UE establishes an RRC connection with gNB#1.

gNB#1 sets, for the relay UE, the configuration related to the SR for UL and the configuration related to the SR for SL, and notifies the relay UE of these configurations in step ST2202. In step ST2203, the relay UE notifies the remote UE of the configuration related to the SR for SL. In step ST2204, the remote UE that has generated transmission data for the NW transmits an SR for relay resources to gNB#1 via the relay UE. Preferably, for the SR transmission from the remote UE to the relay UE, the configuration related to the SR for SL received in step ST2203 is used. Preferably, for the SR transmission from the relay UE to gNB#1, the configuration related to the SR for UL received in step ST2202 may be used. In this way, even when the remote UE is in the RRC connection with gNB#1, gNB#1 can receive the SR from the remote UE.

gNB#1 performs the scheduling of relay resources for the relay UE and the remote UE. In step ST2205, gNB#1 notifies the relay UE of the scheduling information of the UL communication resources for relay. In step ST2206, gNB#1 notifies the remote UE of the scheduling information of the SL communication resources for relay via the relay UE. The remote UE that has received the scheduling information of the SL communication resources for relay transmits data to gNB#1 via the relay UE in step ST2207 using the communication resources indicated by the scheduling information. The relay UE that has received the data transmits the data received from the remote UE to gNB#1 using the communication resources indicated by the scheduling information of the UL communication resources for relay.

In this way, even when the remote UE is in the RRC connection with gNB#1, SR can be transmitted from the remote UE to gNB#1, and the remote UE and the relay UE can receive the scheduling information of the resources for relay from gNB#1. Therefore, the remote UE can transmit data to gNB#1 via the relay UE. In addition, in the example of FIG. 22, gNB#1 schedules the SL communication resources and the UL communication resources together for relay and notifies the remote UE and the relay UE of the resources. The appropriate scheduling of each resource by gNB#1 makes it possible to reduce the delay associated with the transmission of data received from the remote UE to gNB#1 by the relay UE.

The SL SR resources may be shared with another channel. For example, if the transmission timing of the SL SR partially or entirely collides with the transmission timing of another channel, the SL SR may be preferentially transmitted. In this way, the SL SR can be transmitted early, and thus the scheduling information of the SL resources can be obtained early. Therefore, SL communication can be performed with low delay.

As another method, for example, if the transmission timing of the SL SR partially or entirely collides with the transmission timing of another channel, a channel with higher priority may be transmitted. In this way, the SL SR or another channel can be transmitted using the SL SR resources according to the priority.

The channel or SL SR that has not been transmitted due to the collision may not be transmitted. The channel or SL SR that has not been transmitted due to the collision may be discarded. Alternatively, the channel or SL SR that has not been transmitted due to the collision is preferably transmitted using the next SL SR resource.

As another method for dealing with the case that the transmission timing of the SL SR partially or entirely collides with the transmission timing of another channel, the SL SR and another channel may be multiplexed and transmitted using the SL SR resources. In this way, resource use efficiency can be improved, and low-delay communication can be performed.

If the transmission timing of the SL SR partially or entirely collides with the transmission timing of another channel, the resources of another channel may be used unlike in the disclosed examples in which the SL SR resources are used.

By adopting the methods disclosed in the present embodiment, the gNB can set a scheduling request for relay communication for the remote UE and the relay UE. The remote UE and the relay UE can notify the gNB of a scheduling request for relay communication. The gNB can perform scheduling for relay communication for the remote UE and the relay UE. The gNB can notify the remote UE and the relay UE of the scheduling information for relay communication. As a result, the remote UE can communicate with the NW via the relay UE.

The remote UE may notify gNB#2 of a CSI report in SL. The remote UE may notify gNB#1 of a CSI report in SL via the relay UE. The remote UE may notify the gNB in the RRC connection of a CSI report in SL. In this way, the gNB that has received the SCI report in SL can appropriately perform the scheduling of the SL communication resources.

SR for CSI reporting in SL may be provided. As a method for configuring and transmitting the SR for CSI reporting of SL and a method for scheduling the resources for CSI reporting, preferably, the methods for configuring the SR, transmitting the SR, and scheduling the SL resources disclosed above are appropriately applied. In this way, the SR for CSI reporting of SL can be transmitted from the remote UE to gNB#1 via the relay UE. The remote UE can receive the scheduling information of the resources for CSI reporting of SL from gNB#1 via the relay UE. In addition, the relay UE can receive the scheduling information of the resources for CSI reporting of the SL on the Uu from gNB#1.

In this way, communication quality can be improved between the remote UE and the gNB.

In the present disclosure, a UE-TX is defined as a UE in which service data is generated. For example, given that a UE-TX is UE1 and a UE-RX is UE2, in cases where service data is generated in UE2 and data is transmitted to UE1, the method of the present disclosure can be applied by treating UE2 as a UE-TX and UE1 as a UE-RX. As a result, a similar effect can be obtained.

The above-described embodiments and modifications thereof are merely examples, and the embodiments and modifications thereof can be freely combined. Any component of the embodiments and modifications thereof can be appropriately changed or omitted.

For example, in the above-described embodiments and modifications thereof, a subframe is an example of a unit of time for communication in the fifth-generation communication systems. A subframe may be a unit of scheduling. In each of the above-described embodiments and modifications thereof, subframe-unit processes may be performed as TTI-unit, slot-unit, subslot-unit, or minislot-unit processes.

For example, the methods disclosed in above-described embodiments and modifications thereof may be applied not only to vehicle-to-everything (V2X) services but also to services using SL communication. For example, the methods may be applied to SL communication that is used in various types of services such as proximity-based services, public safety, communication between wearable terminals, and communication between factory devices.

Although the present disclosure has been described in detail, the above description is illustrative and not restrictive in all aspects. Numerous modifications not illustrated are considered as assumable.

Reference Signs List

200, 210 communication system; 202 communication terminal device (communication terminal); 203, 207, 213, 217, 223-1, 224-1, 224-2, 226-1, 226-2, 750 base station device (base station); 204 MME/S-GW unit (MME unit); 204a MME; 214 AMF/SMF/UPF unit (5GC unit); 218 central unit; 219 distributed unit; 301, 403 protocol processing unit; 302 application unit; 303, 404 transmission data buffer unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 506, 526 control unit; 401 EPC communication unit; 402 other base station communication unit; 412 5GC communication unit; 501 PDN GW communication unit; 502, 522 base station communication unit; 503, 523 user plane communication unit; 504 HeNBGW communication unit; 505, 525 control plane control unit; 505-1, 525-1 NAS security unit; 505-2 SAE bearer control unit; 505-3, 525-3 Idle State mobility management unit; 521 Data Network communication unit; 525-2 PDU session control unit; 527 session management unit; 751-1 to 751-8 beam.

**Claims**

1. A communication system comprising:

   base stations; and
   a communication terminal to support terminal-to-terminal communication in which communication terminals directly communicate with each other, wherein
   once the communication terminal connected to a base station enters a state in which terminal-to-terminal communication with another communication terminal is available, the other communication terminal being served by another base station different from the base station connected, the communication terminal notifies the base station connected, of connection state information indicating that the communication terminal has entered the state,
   the base station having received notification of the connection state information determines, on the basis of the connection state information, whether to change a connection destination of the communication terminal having notified the base station of the connection state information, to the other base station via a relay communication terminal, the relay communication terminal being served by the other base station, the relay communication station being the other communication terminal, and requests the communication terminal to release connection with the base station in response to determining to change the connection destination of the communication terminal having notified the base station of the connection state information, and
   in response to being requested by the base station connected to release the connection with the base station after notifying the base station of the connection state information, the communication terminal releases the connection with the base station, and connects to the other base station via the other communication terminal.

2. The communication system according to claim 1, wherein

   the communication terminal notifies the base station of the connection state information when communication quality of the terminal-to-terminal communication with the relay communication terminal is better than quality of communication with the base station connected, and

upon receiving the notification of the connection state information, the base station requests the release of connection from the communication terminal having notified the base station of the connection state information.

3. The communication system according to claim 1, wherein

the communication terminal notifies the base station of the connection state information when connection for performing the terminal-to-terminal communication with the relay communication terminal is completed, and upon receiving the notification of the connection state information, the base station requests the release of connection from the communication terminal having notified the base station of the connection state information.

4. The communication system according to any one of claims 1 to 3, wherein

upon starting the terminal-to-terminal communication with the other communication terminal connected to the other base station different from the base station connected, the communication terminal notifies the base station connected, of the connection state information indicating that the terminal-to-terminal communication has started and communication quality of the terminal-to-terminal communication, and

the base station having received the notification of the connection state information and the communication quality determines, on the basis of the communication quality, whether to change the connection destination of the communication terminal having notified the base station of the connection state information and the communication quality, to the other base station to which the relay communication terminal that is the other communication terminal is connected, and in response to determining to change the connection destination of the communication terminal having notified the base station of the connection state information and the communication quality, causes a handover to be executed for changing the connection destination of the communication terminal to the other base station via the relay communication terminal.

5. The communication system according to any one of claims 1 to 4, wherein
once the communication terminal served by the base station enters a state in which the terminal-to-terminal communication with the other communication terminal is available, the other communication terminal being served by the other base station different from the base station serving the communication terminal, the communication terminal receives, via the other communication terminal, system information transmitted from the other base station serving the other communication terminal, and operates according to the system information received.

6. The communication system according to any one of claims 1 to 5, wherein
in transmitting data to a core network when being connected to the other base station via the relay communication terminal, the communication terminal requests the other base station to schedule resources for the terminal-to-terminal communication in which the data is transmitted.

7. A communication terminal supporting terminal-to-terminal communication in which communication terminals directly communicate with each other, wherein

once the communication terminal connected to a base station enters a state in which terminal-to-terminal communication with another communication terminal is available, the other communication terminal being served by another base station different from the base station connected, the communication terminal notifies the base station connected of connection state information indicating that the communication terminal has entered the state, and

in response to being requested by the base station connected to release connection with the base station after notifying the base station of the connection state information, the communication terminal releases the connection with the base station, and connects to the other base station via the other communication terminal.

# FIG.1

FIG.2

# FIG.3

EP 4 255 025 A1

# FIG.4

204 — [ MME/ S-GW ]

223-1 — ( eNB ) ——— ( gNB ) — 224-2

202 — [ UE ]

# FIG.5

214 — [ AMF/SMF/ UPF ]

224-1 — ( gNB ) ——— ( gNB ) — 224-2

202 — [ UE ]

# FIG.6

214～ AMF/SMF/ UPF

226-1～ eNB gNB ～224-2

202～ UE

# FIG.7

214～ AMF/SMF/ UPF

224-1～ gNB eNB ～226-2

202～ UE

# FIG.8

# FIG.9

# FIG.10

<u>204a</u>

# FIG.11

<u>214</u>

# FIG.12

CELL SEARCH START

ST601
SYNCHRONIZE USING
P-SS AND S-SS
DETECT PCI

ST602
DETECT RS
MEASURE RS RECEIVED POWER

ST603
SELECT BEST CELL

ST604
RECEIVE PBCH
RECEIVE MIB

ST605
RECEIVE DL-SCH
RECEIVE SIB1

ST606
IS TAC OF
SIB1 SAME AS TAC HELD
BY UE?

YES

NO

IDLE OPERATION

IDLE OPERATION AFTER TAU

FIG.13

EP 4 255 025 A1

# FIG.14

| gNB#1 | Relay UE | | Remote UE | gNB#2 |

ST1401 RRC_Idle

ST1402 RRC CONNECTION

SL measurement configuration
ST1404 ST1403

SL MEASUREMENT

SL measurement report
ST1405

ST1406
RRC RELEASE DETERMINATION

RRC connection release
ST1408 ST1407

Uu RRC CONNECTION RELEASE PROCESS

ST1409
Discovery PROCESS

ST1410
PC5-S LINK ESTABLISHMENT

ST1411
PC5-RRC CONNECTION

RRC setup request
ST1412

RRC setup
ST1413

RRC setup complete
ST1414

ST1415
RRC CONNECTION

RRC STATE CHANGE NOTIFICATION
ST1416

RRC setup request
ST1417

RRC setup
ST1418

RRC setup complete
ST1419

ST1420
RRC CONNECTION

59

# FIG.15

| gNB#1 | Relay UE | Remote UE | gNB#2 |

Relay UE — ST1401
RRC_Idle

Remote UE / gNB#2 — ST1402
RRC CONNECTION

ST1409
Discovery PROCESS

ST1410
PC5-S LINK ESTABLISHMENT

ST1411
PC5-RRC CONNECTION

REPORT ON CONNECTION WITH RELAY UE

RRC setup request — ST1412

RRC setup — ST1413

RRC setup complete — ST1414

ST1415
RRC CONNECTION

REPORT ON CONNECTION WITH RELAY UE — ST1501

ST1406
RRC RELEASE DETERMINATION

RRC connection release — ST1407

ST1408
Uu RRC CONNECTION RELEASE PROCESS

RRC STATE CHANGE NOTIFICATION — ST1416

RRC setup request — ST1417

RRC setup — ST1418

RRC setup complete — ST1419

ST1420
RRC CONNECTION

# FIG.16

# FIG.17

gNB#1 | Relay UE | Remote UE | gNB#2

ST1601
RRC CONNECTION

ST1402
RRC CONNECTION

ST1409
Discovery PROCESS

ST1410
PC5-S LINK ESTABLISHMENT

ST1411
PC5-RRC CONNECTION

REPORT ON CONNECTION WITH RELAY UE
ST1501

SL measurement configuration
ST1403

ST1404
SL MEASUREMENT

SL measurement report
ST1405

ST1701
HO DETERMINATION

HO request
ST1702

ST1703
HO ACCEPTANCE DETERMINATION

HO request Ack
ST1704

RRC reconfiguration
ST1705

ST1706
DETACH

RRC reconfiguration complete
ST1707

ST1420
RRC CONNECTION

# FIG.18

# FIG.19

| gNB#1 | Relay UE | | Remote UE | gNB#2 |
|---|---|---|---|---|

ST1401

RRC_Idle

SYSTEM
INFORMATION

ST1802

INSTRUCTION TO RECEIVE
SYSTEM INFORMATION OF gNB#1

ST1901

ST1801

RRC_Idle

SYSTEM
INFORMATION

ST1803

Discovery PROCESS — ST1409

PC5-S LINK ESTABLISHMENT — ST1410

PC5-RRC CONNECTION — ST1411

INSTRUCTION TO RECEIVE SYSTEM
INFORMATION OF gNB#1

ST1902

ST1804

CHANGE OF SYSTEM
INFORMATION
PROVIDER gNB

SYSTEM
INFORMATION

ST1805

# FIG.20

| AMF#1 | gNB#1 | Relay UE | Remote UE | gNB#2 | AMF#2 | PCF | UDM |
|---|---|---|---|---|---|---|---|

RRC_Idle ⌇ST1401

RRC_Idle ⌇ST1801

SYSTEM INFORMATION, PLMN IDENTIFIER, TAC#1

SYSTEM INFORMATION, PLMN IDENTIFIER, TAC#2

ST2001 ⌇

⌇ST2002

RRC CONNECTION PROCESS ⌇ST2003

Registration procedure ⌇ST2004

RRC CONNECTION RELEASE PROCESS ⌇ST2005

Discovery PROCESS ⌇ST1409

PC5-S LINK ESTABLISHMENT ⌇ST1410

PC5-RRC CONNECTION ⌇ST1411

ST2006 ⌇ RRC CONNECTION PROCESS

CHANGE OF SYSTEM INFORMATION PROVIDER gNB ⌇ST1804

SYSTEM INFORMATION, PLMN IDENTIFIER, TAC#1

ST2007 ⌇

DETERMINATION OF WHETHER TAC#1 IS INCLUDED IN REGISTRATION AREA INFORMATION ⌇ST2008

RRC CONNECTION PROCESS ⌇ST2009

Registration procedure ⌇ST2010

EP 4 255 025 A1

# FIG.21

| UPF#1 | AMF#1 | gNB#1 | Relay UE | Remote UE | gNB#2 | AMF#2 | UPF#2 | SMF | PCF | UDM |

RRC_Idle  ST1401

RRC_Idle  ST1801

SYSTEM INFORMATION, PLMN IDENTIFIER, TAC#1

SYSTEM INFORMATION, PLMN IDENTIFIER, TAC#2  ST2002

ST2001

RRC CONNECTION PROCESS  ST2003

ST2004

Registration procedure

RRC CONNECTION RELEASE PROCESS  ST2005

GENERATION OF DATA TO Remote UE  ST2101

DATA GENERATION NOTIFICATION  ST2102

ST2103  DATA GENERATION NOTIFICATION RESPONSE

DATA GENERATION NOTIFICATION  ST2104

DATA GENERATION NOTIFICATION RESPONSE  ST2105

ST2107  Paging  ST2106  Paging

SERVICE REQUEST PROCESS, PDU session ESTABLISHMENT PROCESS  ST2108

DATA COMMUNICATION  ST2109

PDU session RELEASE PROCESS  ST2110

RRC CONNECTION RELEASE PROCESS, CM CONNECTION RELEASE PROCESS  ST2111

Discovery PROCESS  ST1409

PC5-S LINK ESTABLISHMENT  ST1410

PC5-RRC CONNECTION  ST1411

ST2006  RRC CONNECTION PROCESS

CHANGE OF SYSTEM INFORMATION PROVIDER gNB  ST1804

SYSTEM INFORMATION, PLMN IDENTIFIER, TAC#1

ST2008

ST2007  DETERMINATION OF WHETHER TAC#1 IS INCLUDED IN REGIS-TRATION AREA INFORMATION

RRC CONNECTION PROCESS  ST2009

ST2010

GENERATION OF DATA TO Remote UE

Registration procedure

DATA GENERATION NOTIFICATION  ST2113

ST2112

DATA GENERATION NOTIFICATION RESPONSE  ST2114

DATA GENERATION NOTIFICATION  ST2115

DATA GENERATION NOTIFICATION RESPONSE  ST2116

Paging  ST2117  Paging  ST2118  Paging  ST2119

ST2120

SERVICE REQUEST PROCESS, PDU session ESTABLISHMENT PROCESS

DATA COMMUNICATION  ST2121

ST2122

PDU session RELEASE PROCESS

RRC CONNECTION RELEASE PROCESS, CM CONNECTION RELEASE PROCESS  ST2123

EP 4 255 025 A1

# FIG.22

| gNB#1 | Relay UE | Remote UE | gNB#2 |

ST1415

RRC CONNECTION

ST2201

PC5-RRC CONNECTION

ST1420

RRC CONNECTION

CONFIGURATION RELATED TO UL SR,
CONFIGURATION RELATED TO SL SR

ST2202

CONFIGURATION
RELATED TO SL SR

ST2203

SR FOR RELAY RESOURCES

ST2204

SCHEDULING INFORMATION OF UL
COMMUNICATION RESOURCES FOR RELAY

ST2205

SCHEDULING INFORMATION OF SL
COMMUNICATION RESOURCES FOR RELAY

ST2206

DATA COMMUNICATION

ST2207

# FIG.23

| gNB#1 | Relay UE | Remote UE | gNB#2 |

ST1601
RRC CONNECTION

ST1411
PC5-RRC CONNECTION

ST1420
RRC CONNECTION

measurement configuration
ST2301

ST2302
Uu MEASUREMENT, SL MEASUREMENT

measurement report
ST2303

ST2304
HO DETERMINATION

HO request
ST2305

ST2306
HO ACCEPTANCE DETERMINATION

HO request Ack
ST2307

RRC reconfiguration
ST2308

RRC reconfiguration complete
ST2309

ST2310
RRC CONNECTION

## INTERNATIONAL SEARCH REPORT

| International application No. |
| --- |
| **PCT/JP2021/042431** |

**A. CLASSIFICATION OF SUBJECT MATTER**

*H04W 36/30*(2009.01)i; *H04W 36/38*(2009.01)i; *H04W 92/18*(2009.01)i; *H04W 88/04*(2009.01)i
FI: H04W36/30; H04W88/04; H04W92/18; H04W36/38

According to International Patent Classification (IPC) or to both national classification and IPC

**B. FIELDS SEARCHED**

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | US 2019/0223066 A1 (HUAWEI TECHNOLOGIES DUESSELDORF GMBH) 18 July 2019 (2019-07-18)<br>paragraph [0172], fig. 2B, 2C, 2D, 9 | 1, 3, 7 |
| Y | paragraph [0172], fig. 2B, 2C, 2D, 9 | 2, 4-6 |
| Y | JP 2016-500932 A (NEC CORP.) 14 January 2016 (2016-01-14)<br>paragraphs [0050]-[0054], [0074]-[0085], fig. 1, 4 | 2, 4-6 |
| Y | JP 2015-505193 A (INTERDIGITAL PATENT HOLDINGS, INC.) 16 February 2015 (2015-02-16)<br>paragraphs [0065], [0066], [0110] | 5-6 |
| Y | WO 2018/061759 A1 (KYOCERA CORP.) 05 April 2018 (2018-04-05)<br>paragraphs [0145], [0148], [0149] | 6 |
| A | WO 2016/159841 A1 (TELEFONAKTIEBOLAGET LM ERICSSON (PUBL)) 06 October 2016 (2016-10-06)<br>entire text | 1-7 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 February 2022** | **15 February 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2021/042431** |

| Patent document cited in search report | | | Publication date (day/month/year) | Patent family member(s) | | | Publication date (day/month/year) |
| --- | --- | --- | --- | --- | --- | --- | --- |
| US | 2019/0223066 | A1 | 18 July 2019 | WO | 2018/059701 | A1 | |
| JP | 2016-500932 | A | 14 January 2016 | WO | 2014/069064 | A1 | |
| | | | | paragraphs [0050]-[0054], [0074]-[0085], fig. 1, 4 | | | |
| JP | 2015-505193 | A | 16 February 2015 | WO | 2013/086324 | A1 | |
| | | | | paragraphs [0088], [0089], [0133] | | | |
| WO | 2018/061759 | A1 | 05 April 2018 | US | 2020/0037398 | A1 | |
| | | | | paragraphs [0176], [0179], [0180] | | | |
| WO | 2016/159841 | A1 | 06 October 2016 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Scenarios, requirements and KPIs for 5G mobile and wireless system. *ICT-317669-METIS/D1.1*